(19) Europäisches Patentamt
European Patent Office
Office européen des brevets

(11) EP 3 159 393 A1

(12) EUROPEAN PATENT APPLICATION
published in accordance with Art. 153(4) EPC

(43) Date of publication:
26.04.2017 Bulletin 2017/17

(21) Application number: 15808914.4

(22) Date of filing: 18.06.2015

(51) Int Cl.:
*C09K 19/12* (2006.01) *C09K 19/30* (2006.01)
*C09K 19/42* (2006.01) *C09K 19/54* (2006.01)
*G02F 1/13* (2006.01)

(86) International application number:
PCT/JP2015/067603

(87) International publication number:
WO 2015/194632 (23.12.2015 Gazette 2015/51)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 19.06.2014 JP 2014126274

(71) Applicant: DIC Corporation
Tokyo 174-8520 (JP)

(72) Inventors:
- IWASHITA Yoshinori
Kitaadachi-gun
Saitama 362-8577 (JP)
- HIRATA Shinichi
Kitaadachi-gun
Saitama 362-8577 (JP)

(74) Representative: Adam, Holger et al
Kraus & Weisert
Patentanwälte PartGmbB
Thomas-Wimmer-Ring 15
80539 München (DE)

# (54) POLYMERIZABLE-MONOMER-CONTAINING LIQUID CRYSTAL COMPOSITION AND LIQUID CRYSTAL DISPLAY ELEMENT USING SAME

(57) The problem to be solved by the present invention is to provide: a liquid crystal composition suitable for a liquid crystal display element which hardly generates drop marks in production without worsening various characteristics thereof as liquid crystal display elements such as dielectric anisotropy, viscosity, nematic phase upper limit temperature, low-temperature nematic phase stability, $\gamma_1$ and others, and also burn-in characteristics of display elements, and which realizes a stable discharge amount of a liquid crystal material in an ODF process, and to provide a liquid crystal display element using the composition. The purpose of the present invention is to provide a liquid crystal composition provided with photosensitizing properties as the entire composition where a polymerizable monomer is combined with specific liquid crystal compounds.

EP 3 159 393 A1

## Description

Technical Field

The present invention relates to a liquid crystal composition containing a polymerizable monomer, and to a liquid crystal display element using the liquid crystal composition.

Background Art

A liquid crystal display element has become used in watches, clocks, and electronic calculators, and also in various measurement instruments, automobile panels, word processors, electronic organizers, printers, computers, televisions, watches, clocks, advertisement billboards, etc. Typical liquid crystal display systems include a TN (twisted nematic) mode, an STN (super-twisted nematic) mode, a TFT (thin-film transistor)-using VA (hereinafter also referred to as vertical alignment) mode, a PSA (polymer sustained alignment) mode, an IPS (in-plane switching) mode, an FFS (fringe field switching) mode, etc. The liquid crystal composition to be used in these liquid crystal display elements is required to be stable to external factors such as moisture, air, heat, light and the like, to express a liquid crystal phase in a broadest possible temperature range around room temperature as the center, to have a low viscosity and to have a low driving voltage. Further, a liquid crystal composition contains a few to tens kinds of compounds for optimizing the physical properties such as the dielectric anisotropy ($\Delta\varepsilon$), the refractive index anisotropy ($\Delta n$) and others thereof for individual display elements.
For example, in a VA-mode widely used in liquid crystal TVs and others, a liquid crystal composition having a negative $\Delta\varepsilon$ is generally used, and in a TN-mode used in PC monitors and others and in an IPS-mode widely used in touch panels and others, a liquid crystal composition mainly having a positive $\Delta\varepsilon$ is generally used. Naturally, not limited to these IPS-mode and VA-mode, a liquid crystal composition realizing low-voltage driving, rapid response and having a broad operation temperature range is required in all driving systems. For satisfying these requirements, a liquid crystal composition having a large absolute value $\Delta\varepsilon$, a small viscosity ($\eta$) and a high nematic phase-isotropic liquid phase transition temperature (Tni) is required.
Further, it is necessary to suitably regulate $\Delta n$ of a liquid crystal composition to fall within a suitable range in accordance with a cell gap, from settlement of $\Delta n \times d$ that is a product of $\Delta n$ and a cell gap (d). In addition, in the case where a liquid crystal display element is applied to televisions, etc., rapid responsibility is considered to be important, and a liquid crystal composition having a small $\gamma 1$ is required. At present, by adding a compound that has a relatively small molecular weight and is dielectrically neutral, to a liquid crystal composition, the viscosity of the entire liquid crystal composition is lowered to thereby secure rapid responsibility.
A PSA (polymer sustained alignment) -mode liquid crystal display element that is one type of a TFT liquid crystal display element has a polymer structure for controlling a pretilt angle in the cell, and enables high-contrast display and rapid response. This element may be produced by injecting a liquid crystal composition with a polymerizable compound added thereto, into a cell, and subjecting it to UV irradiation in a voltage-applied state to thereby polymerize the polymerizable compound.
As one problem with such a liquid crystal display element, burn-in to occur in long-term display of the same scene is known. As one reason for this, there is mentioned a change in a pretilt angle with time owing to an unstable polymer structure. For forming a stable polymer structure, it is important to completely polymerize the added polymerizable compound and to use a polymerizable compound hardly changing the polymer structure in polymerization. For completely polymerizing the added polymerizable compound, high-intensity UV irradiation or UV irradiation for a longer time would be effective, which, however, would promote degradation of liquid crystal materials. Consequently, for preventing burn-in without degrading liquid crystal materials, development of a polymerizable compound capable of polymerizing by UV irradiation preferably at a lower intensity and for a shorter period of time, and capable of forming a polymer structure that is stable and has a hardly changing pretilt angle is desired.
PTL 1 describes a liquid crystal display device produced in a process of injecting a polymerizable monomer-containing liquid crystal composition between a pair of substrates and polymerizing the monomer with applying a voltage between transparent electrodes on the substrate. PTL 2 reports a compound whose photosensitivity has been increased by introducing thereinto a mesogen skeleton (phenanthrene ring) having absorption at a long wavelength. Further, PTL 3 reports a compound whose reactivity has been increased by increasing the number of polymerizable functional groups therein.

Citation List

Patent Literature

PTL 1: JP-A 2003-307720
PTL 2: JP-T 2011-515543
PTL 3: JP-T 2010-536894

Summary of Invention

Technical Problem

However, in the above PTL 1, it has been confirmed that the miscibility between the monomer and other liquid crystal materials is insufficient and uncured monomers may often remain. In addition, it has been confirmed that the monomer having a phenanthrene compound as a mesogen structure like in the above PTL 2 also has a poor miscibility with other liquid crystal compositions and therefore has a burn-in problem. Further, it has been confirmed that mere increasing of the number of polymerizable functional groups like in the above PTL 3 causes burn-in during long-term display. In all the inventions described in these PTLs 1 to 3, the chemical structure of the polymerizable monomer is changed thereby providing a polymerizable compound capable of polymerizing through UV irradiation at a low intensity and/or for a short period of time to give a polymer whose pretilt angle hardly changes, and there occurs a problem that the miscibility of the polymerizable compound with other liquid crystal compositions is lowered.

Accordingly, an object of the present invention is to provide a liquid crystal composition having increased photosensitivity as a whole of the composition having a combination of a polymerizable monomer and a specific liquid crystal compound.

Advantageous Effects of Invention

The present invention provides a polymerizable monomer-containing liquid crystal composition that can polymerize through UV irradiation at a low intensity and/or for a short period of time.

Brief Description of Drawings

[Fig. 1] Fig. 1 is a view schematically showing a configuration of a liquid crystal display element.
[Fig. 2] Fig. 2 is a plan view where the region surrounded by the line II of the electrode layer 3 including a thin-film transistor formed on a substrate in Fig. 1 is enlarged.
[Fig. 3] Fig. 3 is a cross-sectional view of the liquid crystal display element shown in Fig. 1, as cut in the direction of the line III-III in Fig. 2.
[Fig. 4] Fig. 4 is an enlarged view of the thin-film transistor in the region IV in Fig. 3.

Description of Embodiments

The first aspect of the present invention is a polymerizable monomer-containing liquid crystal composition having a negative dielectric anisotropy, containing:

at least one compound selected from the group of compounds represented by the following general formula (1):

[Chem. 1]

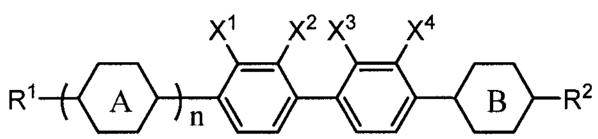

(1)

(in the above general formula (1), $X_1$ to $X_4$ each independently represent a hydrogen atom, a halogen atom or a cyano group,

$R^1$ and $R^2$ each independently represent an alkyl group having 1 to 15 carbon atoms, an alkenyl group having 2 to 15 carbon atoms, or an alkoxy group having 1 to 15 carbon atoms,

the ring A and the ring B each independently represent any of the following formulae (A) to (E):

[Chem. 2]

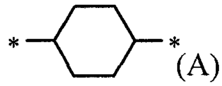
(A)

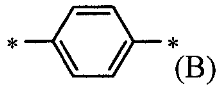
(B)

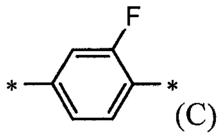
(C)

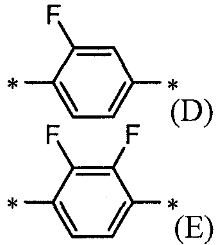
(D)
(E)

and n indicates 0, 1 or 2);

at least one compound selected from the group of compounds represented by the following general formula (2):

[Chem. 3]

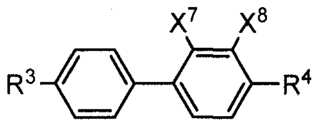
(2)

(in the above general formula (2), $X^7$ and $X^8$ each independently represent a hydrogen atom, a halogen atom or a cyano group, and

$R^3$ and $R^4$ each independently represent an alkyl group having 1 to 15 carbon atoms, an alkenyl group having 2 to 15 carbon atoms, or an alkoxy group having 1 to 15 carbon atoms); and

a polymerizable monomer.

Accordingly, in the present invention, not a polymerizable monomer but a specific liquid crystal compound is incorporated along with a polymerizable monomer in a liquid crystal composition, and therefore the light irradiated for polymerizing the polymerizable monomer can be sensitized by the compound and the sensitized light is propagated to the polymerizable monomer and, as a result, there can be provided a polymerizable monomer-containing liquid crystal composition capable of polymerizing through UV irradiation at a low intensity and for a short period of time.

In addition, the polymerizable monomer-containing liquid crystal composition of the present invention is excellent in low-temperature storability. "Low-temperature storability" as referred to herein indicates the time while a liquid crystal composition or a liquid-crystalline compound can keep a nematic phase under a low-temperature condition at around a transition temperature from a solid phase to a liquid crystal phase, and means an index how long the composition or the compound can maintain a nematic phase. For example, as one example of a measuring method for the low-temperature storability, there is a method of confirming no detection of solid or crystal precipitation with a microscope or through absorptiometry.

In the case where the reliability such as miscibility of the compound represented by the general formula (1) in the present invention is considered to be important along with the sensitizing effect thereof, the ring (B) in the compound is preferably the formula (A).

On the other hand, in the case where the compound represented by the general formula (1) in the present invention is intended to exhibit a high sensitizing effect, the ring B is preferably at least one selected from the group consisting of the formulae (B) to (E), more preferably at least one selected from the group consisting of the formulae (B) to (E). Specifically, the compound represented by the general formula (1) in the present invention is preferably at least one compound selected from the group of compounds represented by the following general formula (1-1):

[Chem. 4]

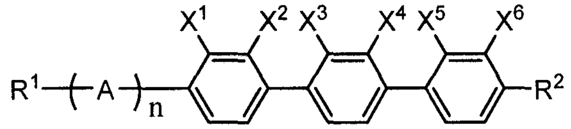

(1-1)

(in the above general formula (1), $X_1$ to $X_6$ each independently represent a hydrogen atom, a halogen atom or a cyano group, $R^1$ and $R^2$ each independently represent an alkyl group having 1 to 15 carbon atoms, an alkenyl group having 2 to 15 carbon atoms, or an alkoxy group having 1 to 15 carbon atoms, and the ring A is any of the following formulae (A) to (E) :

[Chem. 5]

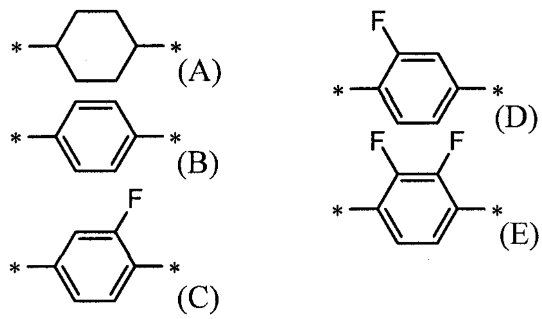

(A) (B) (C) (D) (E)

and n indicates 0, 1 or 2.)

Further, it has been confirmed that the liquid crystal composition (composition not containing a polymerizable monomer) and/or the liquid crystal composition containing a polymerizable monomer of the present invention are effective for preventing drop marks. Here, "drop marks" is defined as a phenomenon that, in a black display, the liquid crystal composition comes to the surface as white drop marks. The drop marks will be described simply hereinunder.

Owing to enlargement of the use of liquid crystal display elements these days, there are seen great changes in the use method and the production method thereof. For meeting these, it has become desired to optimize other characteristics than the heretofore known basic physical properties. Specifically, VA-mode or IPS-mode liquid crystal display elements using a liquid crystal composition have become used widely, and ultra-large size display elements of 50-inch type one or more have become used. With the trend toward large-sized substrates, the mainstream of the method for injection of a liquid crystal composition into a substrate has become changed to a one drop fill (ODF) method from a conventional vacuum injection method (see JP-A 6-235925), and a problem of drop marks that may be made in dropping a liquid crystal composition onto a substrate has come out into the open as a cause of degrading display quality. Further, for the purpose of realizing rapid responsibility in formation of the pretilt angle of a liquid crystal material in the liquid crystal display element, a PS (polymer stabilized) liquid crystal display element and a PSA (polymer sustained alignment) liquid crystal display element have been developed (see JP-A 2002-357830), and the problem of drop marks has become more serious.

Specifically, the PS or PSA display element is characterized in that a monomer is added to a liquid crystal composition and the monomer in the composition is cured. An active matrix liquid crystal composition is required to maintain a high voltage holding ratio, in which, therefore, the usable compound is specifically defined, and use of a compound having an ester bond therein is limited. The monomer usable in the PSA liquid crystal display element is mainly an acrylate monomer, and the monomer generally has an ester bond therein. In general, therefore, such a compound is not used as an active matrix liquid crystal compound (see JP-A 2002-357830). Such foreign substances induce generation of drop marks, therefore providing a problem of worsening the yield of liquid crystal display elements owing to display failure. In addition, in adding additives such as an antioxidant, a light absorbent and the like to a liquid crystal composition, there occurs a problem of worsening the yield of the elements.

For preventing such drop marks, there has been disclosed a method of preventing drop marks to occur relative to the alignment control film in forming a polymer layer in a liquid crystal phase layer through polymerization of the polymerizable monomer mixed in a liquid crystal composition (see JP-A 2006-58755). However, this method has a problem of display burn-in to be caused by the polymerizable monomer added to the liquid crystal, and the effect of preventing drop marks is insufficient. A development of a liquid crystal display element is required, which maintains

basic characteristics of a liquid crystal display element and which is free from a problem of burn-in and hardly causes drop marks. It has been confirmed that, owing to the combination of compounds represented by the general formulae (1) and (2) and a polymerizable monomer therein, the polymerizable monomer-containing liquid crystal composition of the present invention can reduce incidence of burn-in and drop marks.

The polymerizable monomer-containing liquid crystal composition of the present invention indispensably contains a polymerizable monomer, a compound represented by the general formula (1) and a compound represented by the general formula (2), and if desired, may further contain at least one selected from the group consisting of other liquid crystal compounds, additives and others.

The polymerizable monomer-containing liquid crystal composition of the present invention contains compounds represented by the general formulae (1) and (2), in which, therefore the light irradiated thereto for polymerizing the polymerizable monomer is sensitized and the thus-sensitized light is propagated to the polymerizable monomer, and as a result, the monomer can be polymerized through UV irradiation at a low intensity and for a short period of time. In particular, by the combination of the compounds of the formulae (1) and (2), a high sensitizing effect can be exhibited.

Specifically, the polymerizable monomer-containing liquid crystal composition of the present invention contains, as indispensable components, compounds represented by the general formulae (1) and (2) and a polymerizable monomer, and further if desired, may contain at least one selected from the group consisting of compounds represented by the general formulae (5) and (6) to be mentioned hereinunder.

Relative to the polymerizable monomer contained in the liquid crystal composition, the lower limit of the total content of the liquid-crystalline compounds represented by the general formula (1), the general formula (2) and optionally the general formula (5) and the general formula (6) is preferably 60% by mass, preferably 65% by mass, preferably 70% by mass, preferably 75% by mass, preferably 80% by mass, preferably 85% by mass, preferably 90% by mass, preferably 92% by mass, preferably 95% by mass, preferably 98% by mass, preferably 99% by mass, and the upper limit thereof is preferably 100% by mass, preferably 99.5% by mass.

Consequently, the amount of the additives (antioxidant, UV absorbent, etc.) in the liquid crystal composition of the present invention is preferably 100 ppm to 1% by mass. The amount of the polymerizable monomer in the liquid crystal composition of the present invention is preferably 500 ppm to 10% by mass.

The value of dielectric anisotropy $\Delta\varepsilon$ of the liquid crystal composition of the present invention is, at 25°C, preferably -2.0 to -6.0, more preferably -2.5 to -5.0, even more preferably -2.5 to -4.0, and further in detail, the value of dielectric anisotropy $\Delta\varepsilon$ falls within a range of -2.5 to -3.4 from the viewpoint of response speed.

The value of refractive index anisotropy ($\Delta n$) of the liquid crystal composition of the present invention is, at 25°C, preferably 0.08 to 0.13, more preferably 0.09 to 0.12. Further in detail, the value is preferably about 0.9 to about 0.12 or so for a thin cell gap (cell gap of 3.4 μm or less), and is preferably about 0.08 to about 0.1 or so for a thick cell gap (cell gaps of 3.5 μm or more).

The upper limit of the rotational viscosity ($\gamma 1$) of the liquid crystal composition of the present invention is preferably 150 (mPa·s) or less, more preferably 130 (mPa·s) or less, even more preferably 120 (mPa·s) or less. On the other hand, the lower limit of the rotational viscosity ($\gamma_1$) is preferably 20 (mPa·s) or more, more preferably 30 (mPa·s) or more, even more preferably 40 (mPa·s) or more, still more preferably 50 (mPa·s) or more, further more preferably 60 (mPa·s) or more, and especially preferably 70 (mPa·s) or more.

Of the liquid crystal composition of the present invention, the function Z between the rotational viscosity and the refractive index anisotropy preferably indicates a specific value.

[Math. 1]

$$Z = \gamma 1 / (\Delta n)^2$$

In the above numerical formula, $\gamma_1$ represents a rotational viscosity, and $\Delta n$ represents a refractive index anisotropy.

Z is preferably 13,000 or less, more preferably 12,000 or less, even more preferably 11,000 or less.

In the case where the liquid crystal composition of the present invention is used in an active matrix display element, it must have a specific resistivity of $10^{11}$ (Ω·m) or more, preferably $10^{12}$ (Ω·m) or more, more preferably $10^{13}$ (Ω·m) or more.

The liquid crystal composition of the present invention can be used in a broad nematic phase-isotropic liquid phase transition temperature ($T_{NI}$) range, and the phase transition temperature ($T_{NI}$) is preferably 60 to 120°C, more

preferably 70 to 110°C, even more preferably 75 to 100°C.

The components that can be contained in the polymerizable monomer-containing liquid crystal composition of the present invention are described in detail hereinunder.

The polymerizable monomer-containing liquid crystal composition of the present invention indispensably contains a polymerizable monomer. The polymerizable monomer is described below.

The polymerizable compound in the present invention is preferably a compound represented by the following general formula (P).

[Chem. 6]

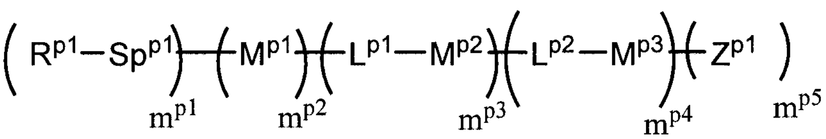

(P)

In the above general formula (P), $Z^{p1}$ represents a fluorine atom, a cyano group, a hydrogen atom, an alkyl group having 1 to 15 carbon atoms in which the hydrogen atom may be substituted with a halogen atom, an alkoxy group having 1 to 15 carbon atoms in which the hydrogen atom may be substituted with a halogen atom, an alkenyl group having 1 to 15 carbon atoms in which the hydrogen atom may be substituted with a halogen atom, or an alkenyloxy group having 1 to 15 carbon atoms in which the hydrogen atom may be substituted with a halogen atom, or $-Sp^{p2}-R^{p2}$;

$R^{p1}$ and $R^{p2}$ each independently represent any of the following formulae (R-I) to (RIX) :

[Chem. 7]

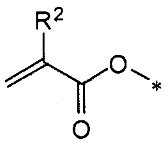

(R-I)

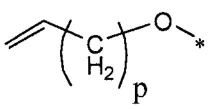

(R-II)

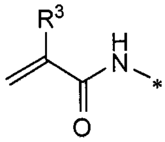

(R-III)

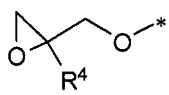

(R-IV)

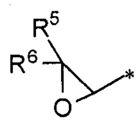

(R-V)

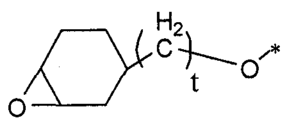

(R-VI)

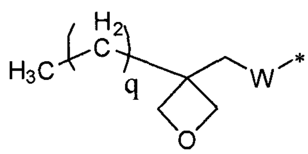

(R-VII)

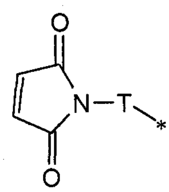

(R-VIII)

HS-*

(R-IX)

in the above formulae (R-I) to (R-IX), $R^2$ to $R^6$ each independently represent a hydrogen atom, an alkyl group having 1 to 5 carbon atoms, or a halogenoalkyl group having 1 to 5 carbon atoms, W represents a single bond, -O- or a methylene group, T represents a single bond or -COO-, p, t and q each independently indicate 0, 1 or 2;

$Sp^{p1}$ and $Sp^{p2}$ each represent a spacer group;

$L^{p1}$ and $L^{p2}$ each independently represent a single bond, -O-, -S-, $-CH_2-$, $-OCH_2-$, $-CH_2O-$, -CO-, $-C_2H_4-$, -COO-, -OCO-, $-OCOOCH_2-$, $-CH_2OCOO-$, $-OCH_2CH_2O-$, $-CO-NR^a-$, $-NR^a-CO-$, $-SCH_2-$, $-CH_2S-$, $-CH=CR^a-COO-$, $-CH=CR^a-OCO-$, $-COO-CR^a=CH-$, $-OCO-CR^a=CH-$, $-COO-CR^a=CH-COO-$, $-COO-CR^a=CH-OCO-$, $-OCO-CR^a=CH-COO-$, $-OCO-CR^a=CH-OCO-$, - $(CH_2)_z-C(=O)-O-$, $-(CH_2)z-O-(C=O)-$, $-O-(C=O)-(CH_2)z-$, $-(C=O)-O-(CH_2)z-$, -CH=CH-, -CF=CF-, -CF=CH-, -CH=CF-, $-CF_2-$, $-CF_2O-$, $-OCF_2-$, $-CF_2CH_2-$, $-CH_2CF_2-$, $-CF_2CF_2-$ or -C≡C- (wherein $R^a$ each independently represents a hydrogen atom, or an alkyl group having 1 to 4 carbon atoms, and in the above formulae, z indicates an integer of 1 to 4);

$M^{p2}$ represents a 1,4-phenylene group, a 1,4-cyclohexylene group, an anthracene-2,6-diyl group, a phenanthrene-2,7-diyl group, a pyridine-2,5-diyl group, a pyrimidine-2,5-diyl group, a naphthalene-2,6-diyl group, an indane-2,5-diyl group, a 1,2,3,4-tetrahydronaphthalene-2,6-diyl group or a 1,3-dioxane-2,5-diyl group, and $M^{p2}$ may be unsubstituted or substituted with an alkyl group having 1 to 12 carbon atoms, a halogenoalkyl group having 1 to 12 carbon atoms, an alkoxy group having 1 to 12 carbon atoms, a halogenoalkoxy group having 1 to 12 carbon atoms, a halogen atom, a cyano group, a nitro group or $-R^{p1}$;
$M^{p1}$represents any of the following formulae (i-11) to ix-11):

[Chem. 8]

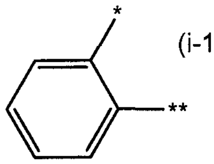
(i-11)
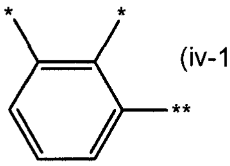
(iv-11)
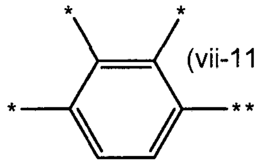
(vii-11)
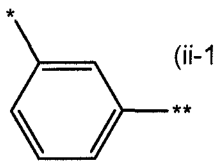
(ii-11)
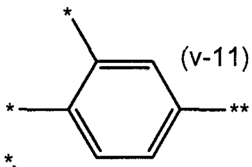
(v-11)
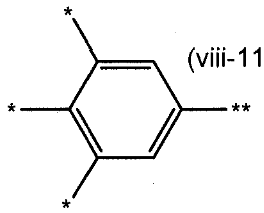
(viii-11)
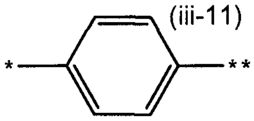
(iii-11)
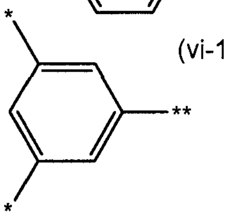
(vi-11)
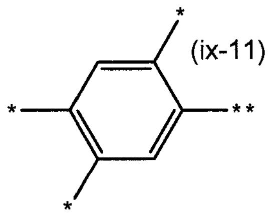
(ix-11)

(in the formulae, the group bonds to $Sp^{p1}$ via *, and bonds to $L^{p1}$ or $L^{p2}$ via **) ;
$M^{p3}$ represents any of the following formulae (i-12) to (ix-13):

[Chem. 9]

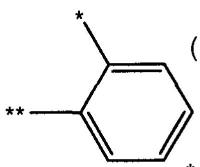
(i-13)
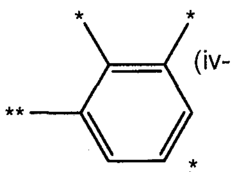
(iv-13)
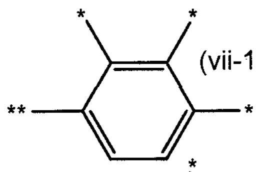
(vii-13)
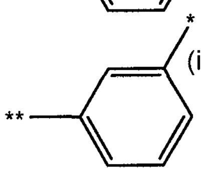
(ii-13)
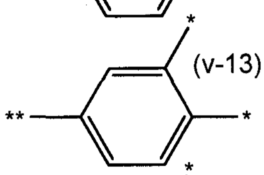
(v-13)
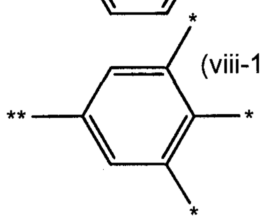
(viii-13)
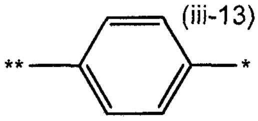
(iii-13)
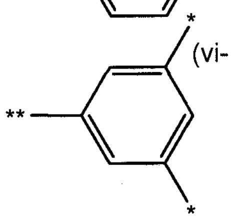
(vi-13)
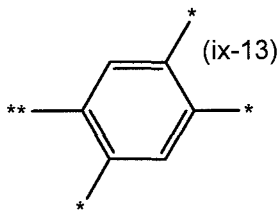
(ix-13)

(in the formulae, the group bonds to $Z^{p1}$ via *, and bonds to $L^{p2}$ via **) ;
$m^{p2}$ to $m^{p4}$ each independently indicate 0, 1,2 or 3, $m^{p1}$ and $m^{p5}$ each independently indicate 1, 2 or 3; and plural $Z^{p1}$'s, if any, may be the same or different, plural $R^{p1}$'s, if any, may be the same or different, plural $R^{p2}$'s, if any, may be the same or different, plural $Sp^{p1}$'s, if any, may be the same or different, plural $Sp^{p2}$'s, if any, may be the same or different, plural $L^{p1}$'s, if any, may be the same or different, and plural $M^{p2}$'s, if any, may be the same or different. Preferably, one or more of these polymerizable monomers are contained.

In the general formula (1) in the present invention, $Z^{p1}$ is preferably $-Sp^{p2}-R^{p2}$, and $R^{11}$ and $R^{12}$ are preferably each independently any of the formulae (R-1) to (R-3).

In the above general formula (P), $m^{p1}+m^{p5}$ is preferably 2 or more.

In the above general formula (P), $L^{p1}$ is preferably a single bond, $-OCH_2-$, $-CH_2O-$, -CO-, $-C_2H_4-$, -COO-, -OCO-, $-COOC_2H_4-$, $-OCOC_2H_4-$, $-C_2H_4OCO-$, $-C_2H_4COO-$, -CH=CH-, $-CF_2-$, $-CF_2O-$, $-(CH2)_z-C(=O)-O-$, $-(CH_2)z-O-(C=O)-$, $-O-(C=O)-(CH_2)z-$, -CH=CH-COO-, -COO-CH=CH-, -OCOCH=CH-, $-(C=O)-O-(CH_2)z-$, $-OCF_2-$ or -C≡C-, $L^{p2}$ is preferably $-OCH_2CH_2O-$, $-COOC_2H_4-$, $-OCOC_2H_4-$, - $(CH_2)_z-C(=O)-O-$, - $(CH_2)z-O-(C=O)-$, $-O-(C=O)-(CH_2)z-$, $-(C=O)-O-(CH_2)z-$, -CH=CH-COO-, -COO-CH=CH-, -OCOCH=CH-, $-C_2H_4OCO-$ or $-C_2H_4COO-$, and z in the above formulae is preferably an integer of 1 to 4.

In the above general formula (1), at least any of $L^{p1}$ and $L^{p2}$ is preferably at least one selected from the group consisting of $-(CH_2)_z-C(=O)-O-$, $-(CH_2)z-O-(C=O)-$, $-O-(C=O)-(CH_2)z-$, and $-(C=O)-O-(CH_2)z-$.

$R^{p1}$ and $R^{p2}$ in the general formula (P) each independently being any of the following formulae (R-1) to (R-15):

[Chem. 10]

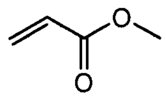
(R-1)

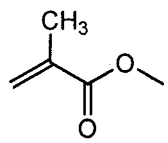
(R-2)

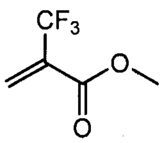
(R-3)

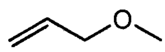
(R-4)

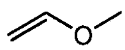
(R-5)

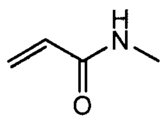
(R-6)

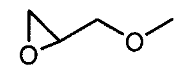
(R-7)

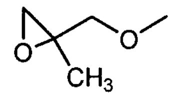
(R-8)

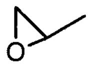
(R-9)

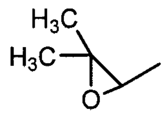
(R-10)

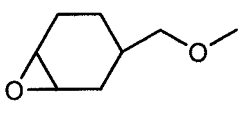
(R-11)

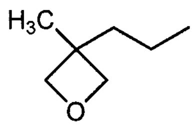
(R-12)

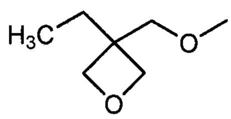
(R-13)

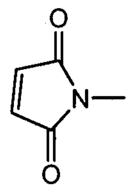
(R14)

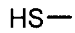
(R-15)

are more preferable.

$m^{p3}$ in the above general formula (P) indicates 0, 1, 2 or 3. When $m^{p2}$ is 1, $L^{p1}$ is preferably a single bond, and in the case where the formula has two or three $m^{p2}$'s, at least one of $L^{p1}$'s is preferably a single bond.

$m^{p3}$ in the above general formula (P) indicates 0, 1, 2 or 3. When $m^{p3}$ is 1, $M^{p2}$ is preferably a 1,4-phenlene group, and in the case where the formula has two or three $m^{p3}$'s, at least $M^{p2}$ adj acent to $M^{p1}$ via $L^{p1}$ among plural $M^{p2}$'s is preferably a 1,4-phenylene group.

$m^{p3}$ in the above general formula (P) indicates 0, 1, 2 or 3. At least one $M^{p2}$ is preferably a 1,4-phenylene group substituted with one or two or more fluorine atoms.

Further, $m^{p4}$ in the above general formula (P) indicates 0, 1, 2 or 3. At least one $M^{p3}$ is preferably a 1,4-phenylene group substituted with one or two or more fluorine atoms.

The spacer group ($Sp^{p1}$, $Sp^{p2}$, $Sp^{p4}$) in the above general formula (P) is preferably a single bond, $-OCH_2-$,

$-(CH_2)_zO-$, -CO-, $-C_2H_4-$, -COO-, -OCO-, $-COOC_2H_4-$, $-OCOC_2H_4-$, $-(CH2)_z-$, $-C_2H_4OCO-$, $-C_2H_4COO-$, -CH=CH-, $-CF_2-$, $-CF_2O-$, $-(CH_2)_z-C(=O)-O-$, $-(CH_2)_z-O-(C=O)-$, $-O-(C=O)-(CH_2)_z-$, $-(C=O)-O-(CH_2)_z-$, $-O-(CH_2)_z-O-$, $-OCF_2-$, -CH=CH-COO-, -COO-CH=CH-, -OCOCH=CH- or -C≡C-, in which z is preferably an integer of 1 or more and 10 or less.

The content of the polymerizable monomer in the polymerizable monomer-containing liquid crystal composition of the present invention is preferably 1 to 20% relative to the content of the compound represented by the general formula (1), more preferably 2 to 18%, even more preferably 3 to 10%.

When the content of the polymerizable monomer is 1 to 20% relative to the content of the compound represented by the general formula (1), it is considered that the compound represented by the general formula (1) can efficiently sensitize the light irradiated for polymerizing the polymerizable monomer and the thus-sensitized light can be propagated to the polymerizable monomer.

A concrete content of the polymerizable monomer in the polymerizable monomer-containing liquid crystal composition is preferably 2% or less, more preferably 1.5% or less, even more preferably 1% or less, especially preferably 0.5% or less, most preferably 0.4% or less. When the content is 2% or less, generation of drop marks can be reduced.

The polymerizable compound of the general formula (P) in the present invention is preferably at least one compound selected from the group consisting of compounds represented by the general formula (P-a), the general formula (P-b), the general formula (P-c) and the general formula (P-d).

[Chem. 11]

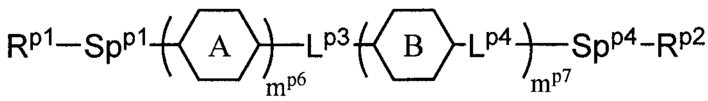
(P-a)

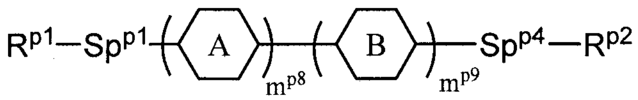
(P-b)

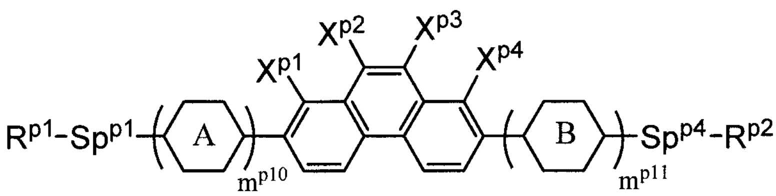
(P-c)

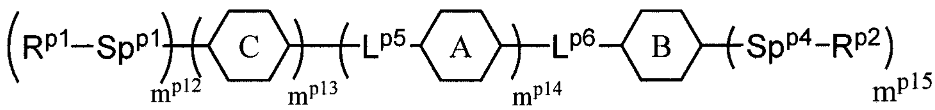
(P-d)

In the above general formula (P-a) to general formula (P-d), $R^{p1}$ and $R^{p2}$ each independently represent any of the following formulae (R-I) to (R-IX).

[Chem. 12]

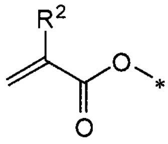
(R-I)
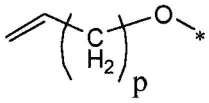
(R-II)
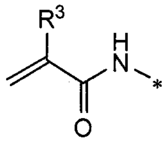
(R-III)
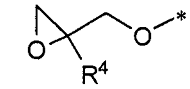
(R-IV)
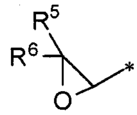
(R-V)

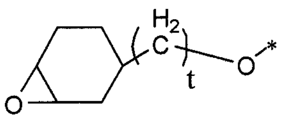
(R-VI)
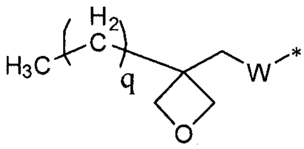
(R-VII)
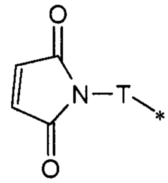
(R-VIII)
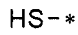
(R-IX)

In the above formulae (R-I) to (R-IX), $R^2$ to $R^6$ each independently represent a hydrogen atom, an alkyl group having 1 to 5 carbon atoms, or a halogenoalkyl group having 1 to 5 carbon atoms, W represents a single bond, -O- or a methylene group, T represents a single bond or -COO-, p, t and q each independently indicate 0, 1 or 2.

The ring A and the ring B each independently represent a 1,4-phenylene group, a 1,4-cyclohexylene group, an anthracene-2,6-diyl group, a phenanthrene-2,7-diyl group, a pyridine-2,5-diyl group, a pyrimidine-2,5-diyl group, a naphthalene-2,6-diyl group, an indane-2,5-diyl group, a 1,2,3,4-tetrahydronaphthalene-2,6-diyl group or a 1,3-dioxane-2,5-diyl group, and may be unsubstituted or substituted with an alkyl group having 1 to 12 carbon atoms, a halogenoalkyl group having 1 to 12 carbon atoms, an alkoxy group having 1 to 12 carbon atoms, a halogenoalkoxy group having 1 to 12 carbon atoms, a halogen atom, a cyano group, a nitro group or $-R^{p1}$.

The ring C represents any of the following formulae (c-i) to (c-ix):

[Chem. 13]

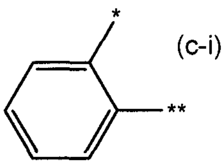
(c-i)
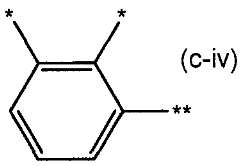
(c-iv)
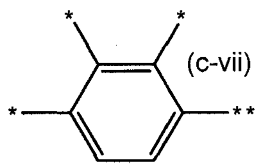
(c-vii)
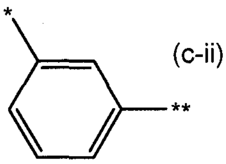
(c-ii)
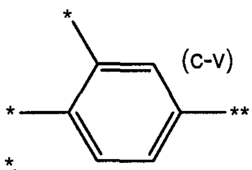
(c-v)
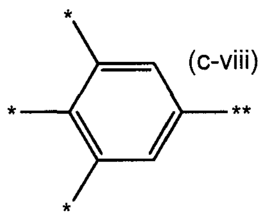
(c-viii)
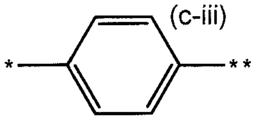
(c-iii)
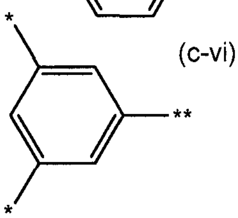
(c-vi)
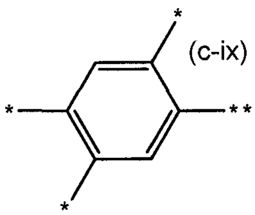
(c-ix)

In the formula, the group bonds to $Sp^{p1}$ via *, and bonds to $L^{p5}$ or $L^{p6}$ via **.

$Sp^{p1}$ and $Sp^{p4}$ each represent a spacer group, $X^{p1}$ to $X^{p4}$ are preferably each independently a hydrogen atom

or a halogen atom.

$L^{p4}$, $L^{p5}$ and $L^{p6}$ are preferably each independently a single bond, $-OCH_2-$, $-CH_2O-$, -CO-, $-C_2H_4-$, -COO-, -OCO-, $-COOC_2H_4-$, $-OCOC_2H_4-$, $-C_2H_4OCO-$, $-C_2H_4COO-$, -CH=CH-, $-CF_2-$, $-CF_2O-$, $-(CH_2)_z-C(=O)-O-$, $-(CH_2)_z-O-(C=O)-$, $-O-(C=O)-(CH_2)_z-$, $-(C=O)-O-(CH_2)_z-$, $-O-(CH_2)_z-O-$, $-OCF_2-$, -CH=CHCOO-, -COOCH=CH-, -OCOCH=CH- or -C≡C-, and z in the above formulae is preferably an integer of 1 to 4.

$L^{p3}$ is preferably -CH=CHCOO-, -COOCH=CH- or -OCOCH=CH-.

In the compound represented by the above general formula (P-a), $m^{p6}$ and $m^{p7}$ each are independently preferably 0, 1, 2 or 3. More preferably, $m^{p6}+m^{p7}$ is 2 to 5. In the polymerizable monomer-containing composition of the present invention, combining the polymerizable monomer represented by the general formula (P-a) with the general formula (1) and the general formula (2) makes it possible to shorten the photopolymerization time.

In the compound represented by the above general formula (P-b), $m^{p8}$ and $m^{p9}$ each are independently preferably 1, 2 or 3. More preferably, $m^{p6}+m^{p7}$ is 2 to 3. In the polymerizable monomer-containing composition, of the present invention, combining the polymerizable monomer represented by the general formula (P-b) with the general formula (1) and the general formula (2) makes it possible to shorten the photopolymerization time.

In the compound represented by the above general formula (P-c), $m^{p10}$ and $m^{p11}$ each are independently preferably 0 or 1. More preferably, $m^{p10}+m^{p11}$ is 0 to 1. In the polymerizable monomer-containing composition of the present invention, combining the polymerizable monomer represented by the general formula (P-c) with the general formula (1) and the general formula (2) makes it possible to shorten the photopolymerization time. In addition, since the general formula (P-c) has a phenanthrene ring, it is considered that the photosensitizing effect of the entire composition would be large.

In the compound represented by the above general formula (P-d), $m^{p12}$ and $m^{p15}$ each are independently preferably 1, 2 or 3, $m^{p13}$ is preferably 0, 1, 2 or 3, and $m^{p14}$ is preferably 0 or 1. More preferably, $m^{p12}+m^{p15}$ is 2 to 5. Plural $R^{p1}$'s, if any, may be the same as or different from each other, plural $R^{p1}$'s, if any, may be the same as or different from each other, plural $R^{p2}$'s, if any, may be the same as or different from each other, plural $Sp^{p1}$'s, if any, may be the same as or different from each other, plural $Sp^{p4}$'s, if any, may be the same as or different from each other, plural $L^{p4}$'s and $L^{p5}$'s, if any, may be the same as or different from each other, and plural rings A's to C's, if any, may be the same as or different from each other. In the polymerizable monomer-containing composition of the present invention, combining the polymerizable monomer represented by the general formula (P-d) with the general formula (1) and the general formula (2) makes it possible to shorten the photopolymerization time.

Examples of preferred structures of the compounds represented by the general formula (P-a) to the general formula (P-d) in the present invention are shown below.

Preferred examples of the compound represented by the general formula (P-a) in the present invention include polymerizable compounds represented by the following formulae (P-a-1) to (P-a-31).

[Chem. 14]

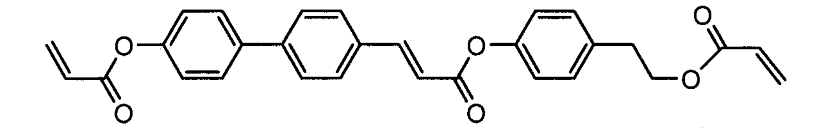

(P-a-1)

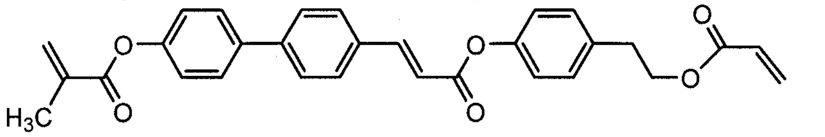

(P-a-2)

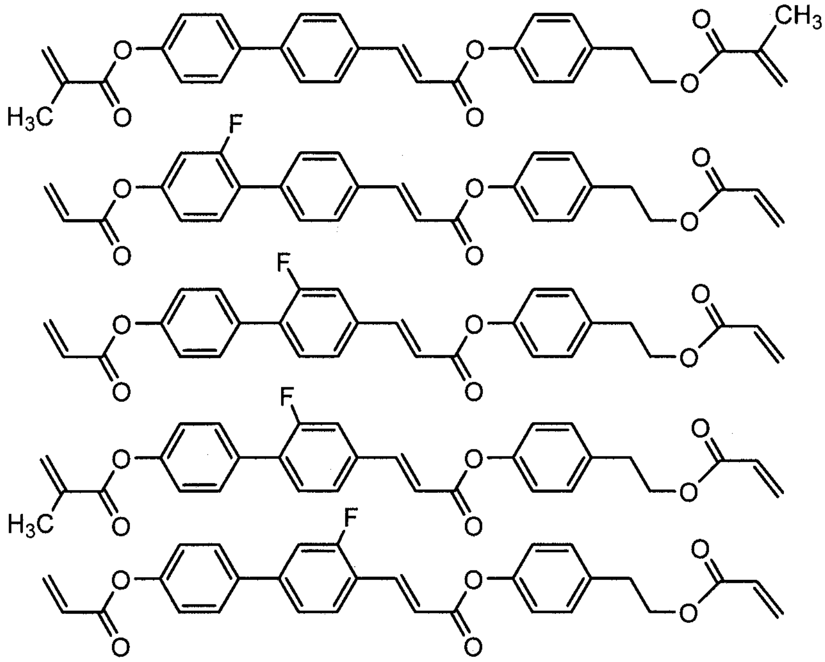

(P-a-3)

(P-a-4)

(P-a-5)

(P-a-6)

(P-a-7)

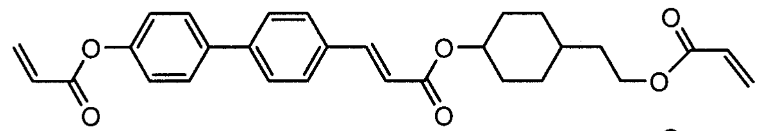

(P-a-8)

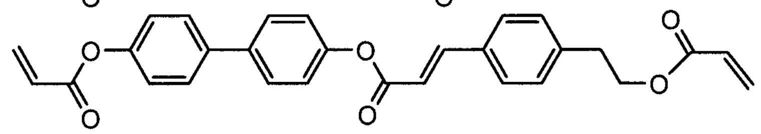

(P-a-9)

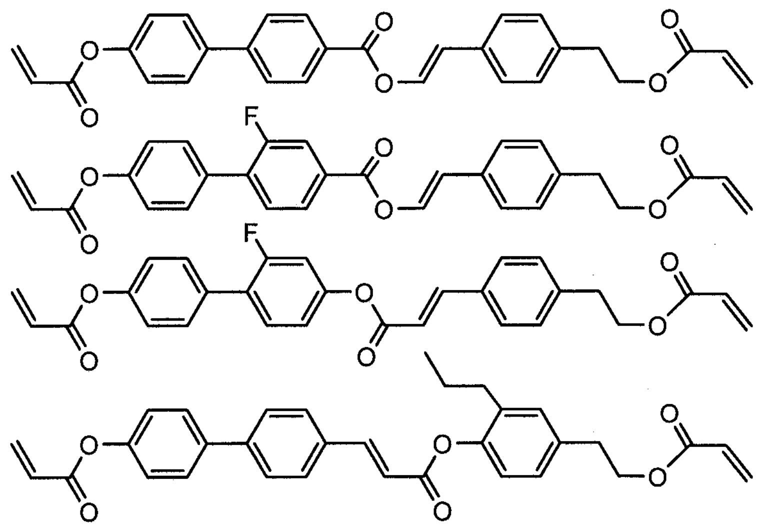

(P-a-10)

(P-a-11)

(P-a-12)

(P-a-13)

[Chem. 15]

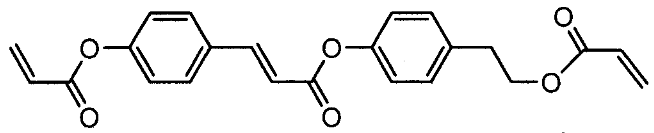

(P-a-14)

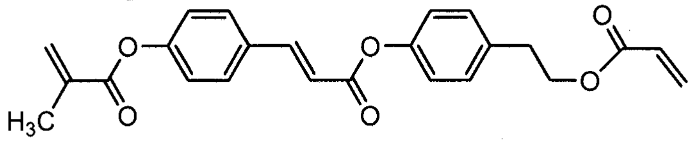

(P-a-15)

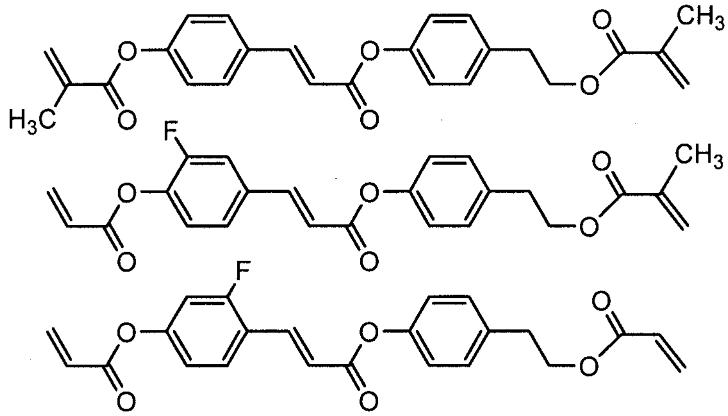

(P-a-16)

(P-a-17)

(P-a-18)

[Chem. 16]

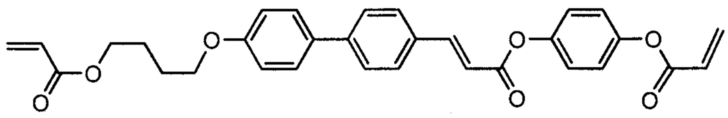
(P-a-19)

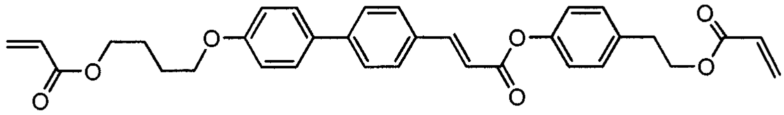
(P-a-20)

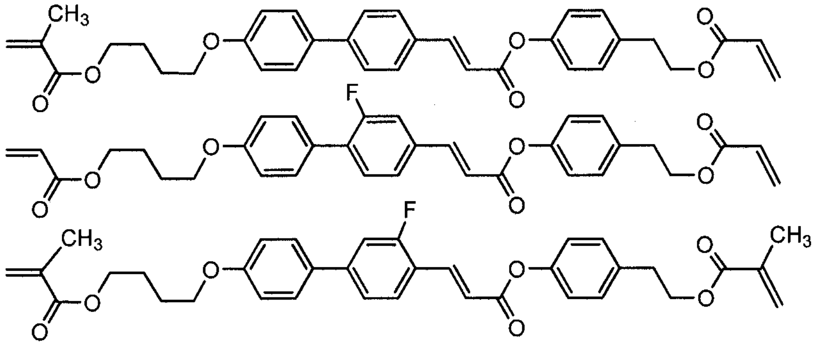
(P-a-21)

(P-a-22)

(P-a-23)

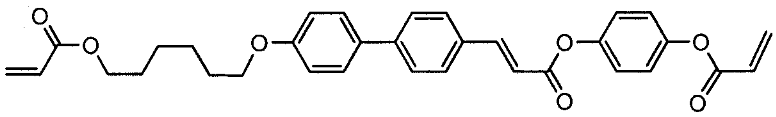
(P-a-24)

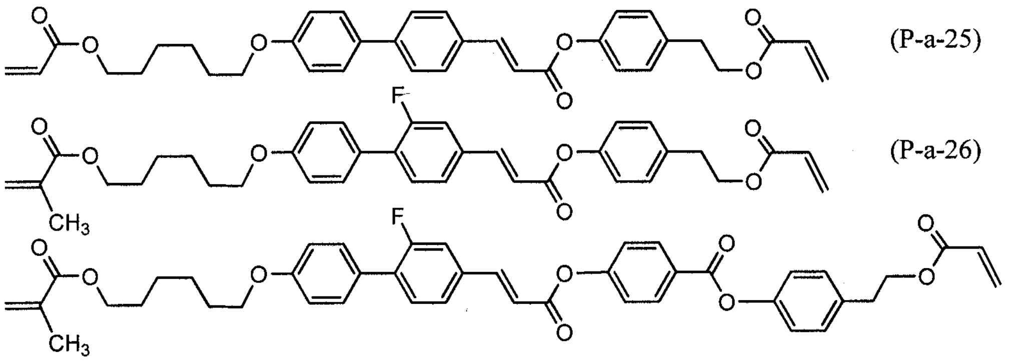
(P-a-25)

(P-a-26)

(P-a-27)

[Chem. 17]

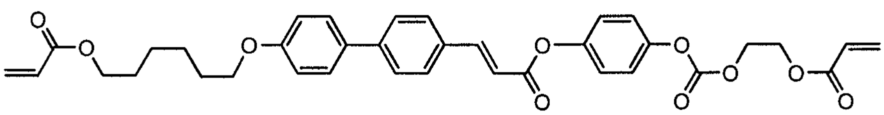
(P-a-28)

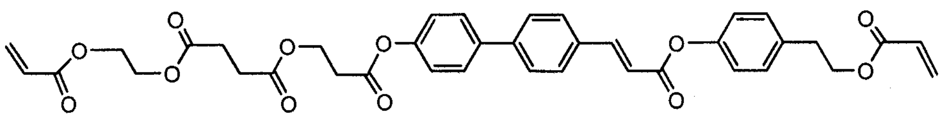
(P-a-29)

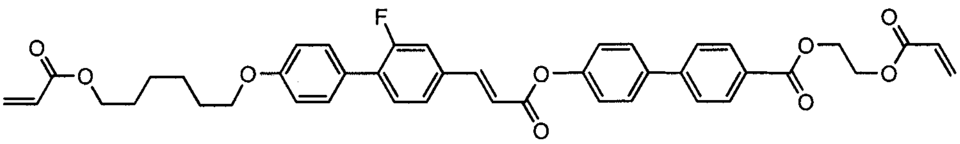
(P-a-30)

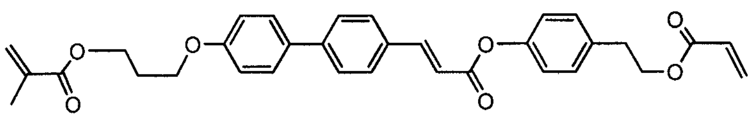
(P-a-31)

The specific content of the polymerizable monomer represented by the above general formula (P-a) is preferably 5% or less, more preferably 3% or less, even more preferably 2% or less, especially preferably 1% or less, and most preferably 0.8% or less.

Preferred examples of the compound represented by the general formula (P-b) in the present invention include polymerizable compounds represented by the following formulae (P-b-1) to (P-b-34).

[Chem. 18]

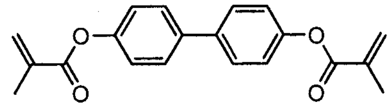

(P-b-1)

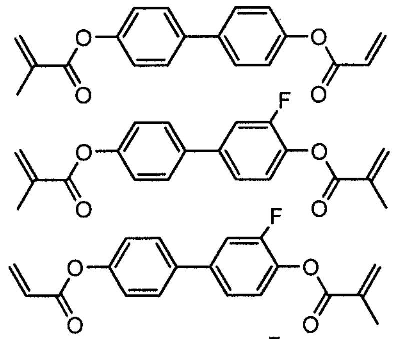

(P-b-2)

(P-b-3)

(P-b-4)

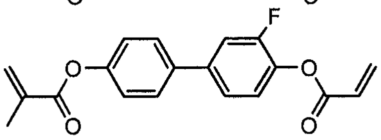

(P-b-5)

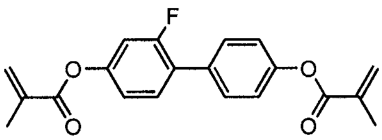

(P-b-6)

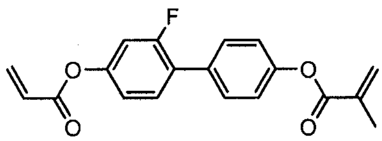

(P-b-7)

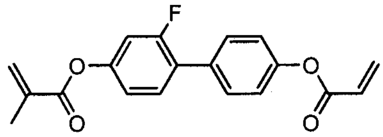

(P-b-8)

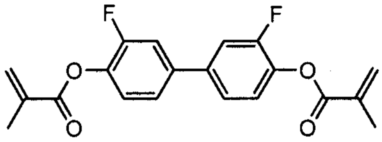

(P-b-9)

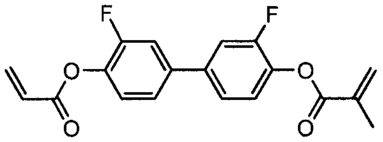

(P-b-10)

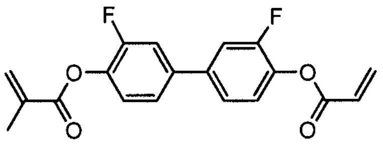

(P-b-11)

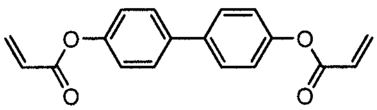

(P-b-12)

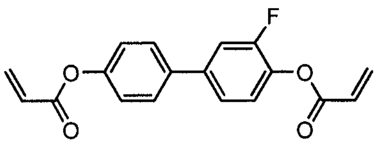

(P-b-13)

[Chem. 19]

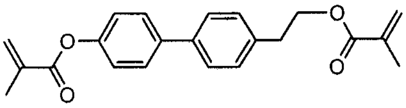
(P-b-14)

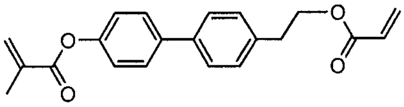
(P-b-15)

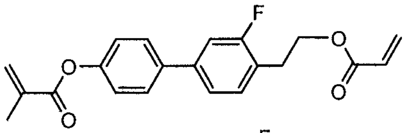
(P-b-16)

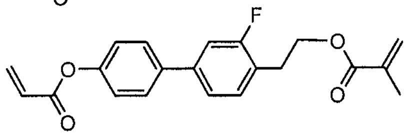
(P-b-17)

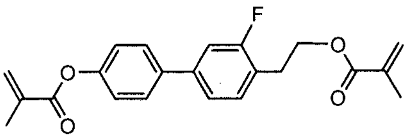
(P-b-18)

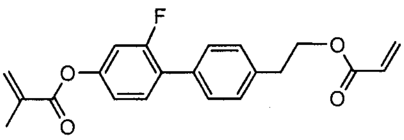
(P-b-19)

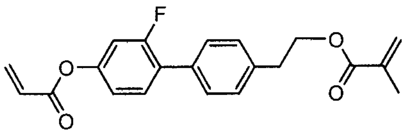
(P-b-20)

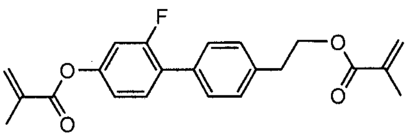
(P-b-21)

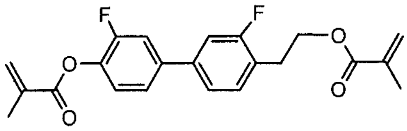
(P-b-22)

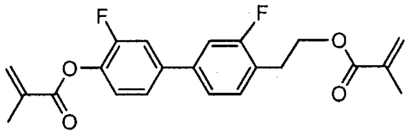
(P-b-23)

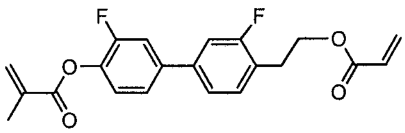
(P-b-24)

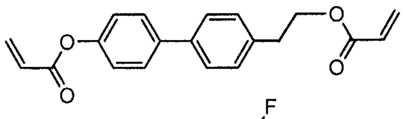
(P-b-25)

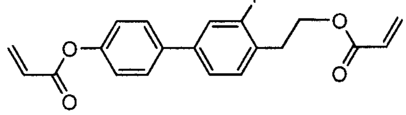
(P-b-26)

[Chem. 20]

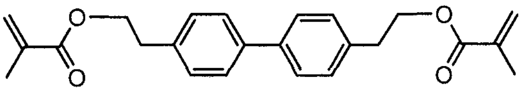

(P-b-27)

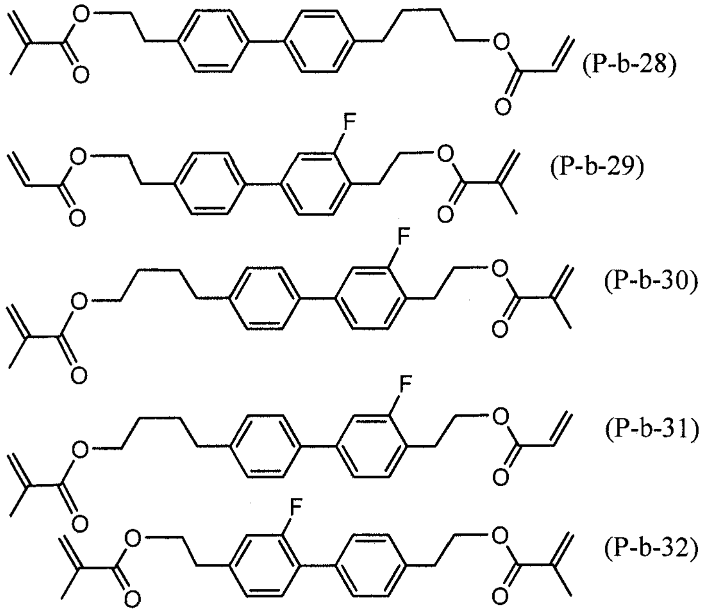

(P-b-28)

(P-b-29)

(P-b-30)

(P-b-31)

(P-b-32)

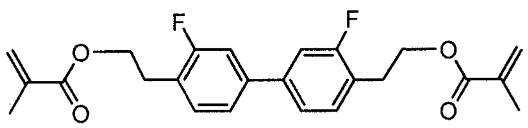

(P-b-33)

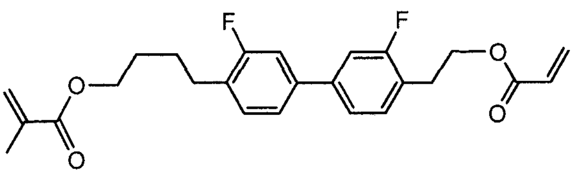

(P-b-34)

The specific content of the polymerizable monomer represented by the above general formula (P-b) (ratio relative to the entire polymerizable monomer-containing liquid crystal composition) is preferably 5% or less, more preferably 3% or less, even more preferably 2% or less, especially preferably 1% or less, and most preferably 0.8% or less.

Preferred examples of the compound represented by the general formula (P-c) in the present invention include polymerizable compounds represented by the following formulae (P-c-1) to (P-c-52).

[Chem. 21]

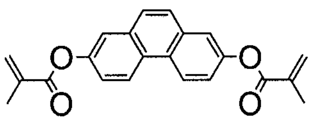 (P-c-1)

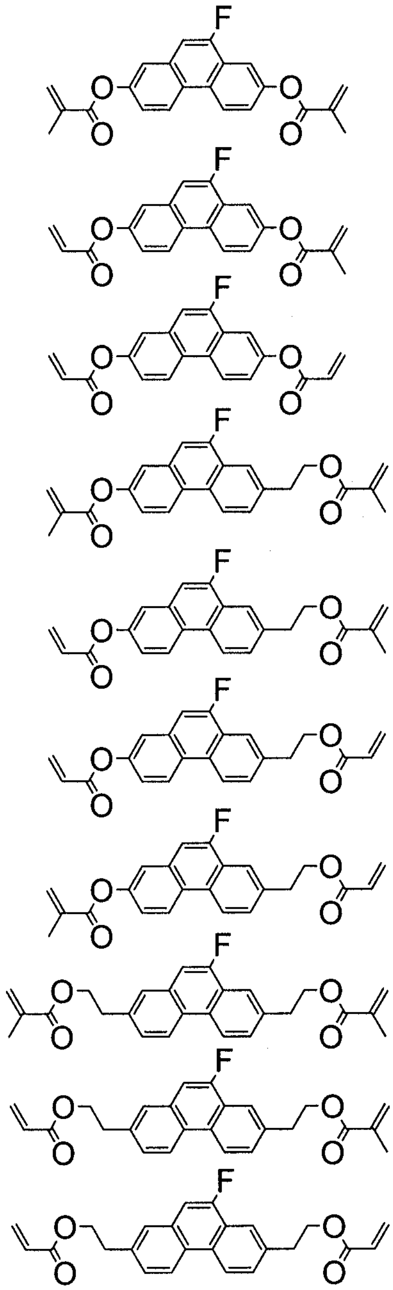 (P-c-11)

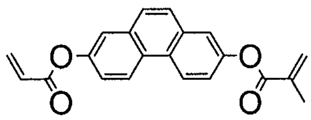 (P-c-2)

(P-c-12)

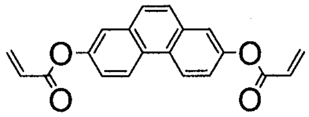 (P-c-3)

(P-c-13)

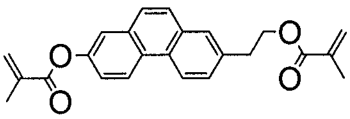 (P-c-4)

(P-c-14)

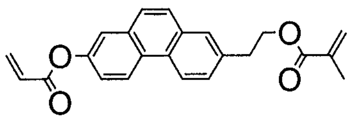 (P-c-5)

(P-c-15)

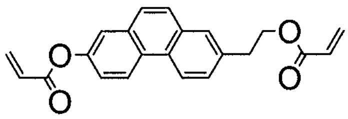 (P-c-6)

(P-c-16)

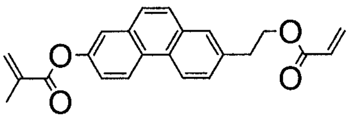 (P-c-7)

(P-c-17)

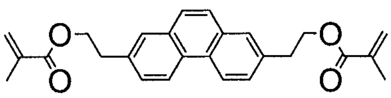 (P-c-8)

(P-c-18)

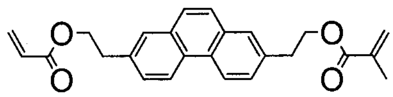 (P-c-9)

(P-c-19)

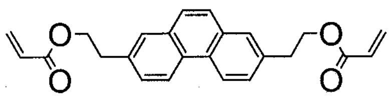 (P-c-10)

(P-c-20)

[Chem. 22]

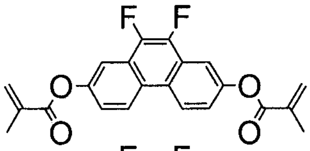

(P-c-21)

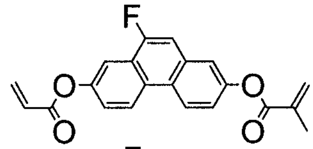

(P-c-31)

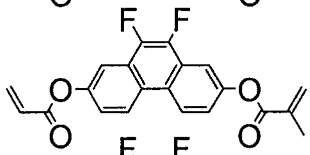

(P-c-22)

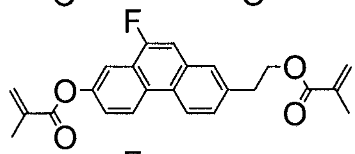

(P-c-32)

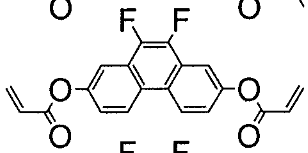

(P-c-23)

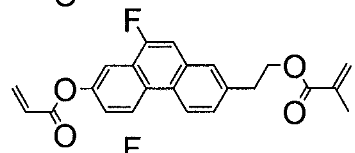

(P-c-33)

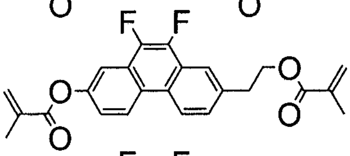

(P-c-24)

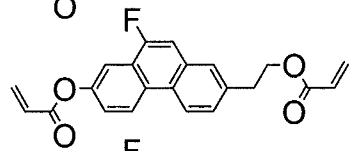

(P-c-34)

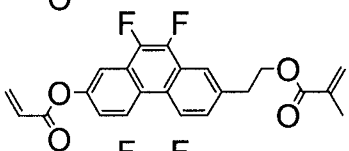

(P-c-25)

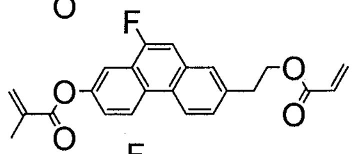

(P-c-35)

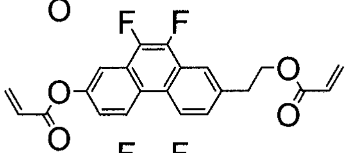

(P-c-26)

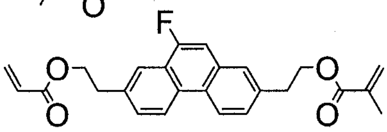

(P-c-36)

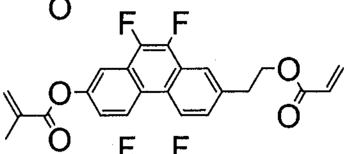

(P-c-27)

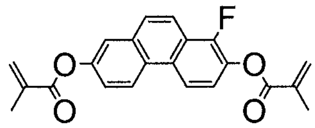

(P-c-37)

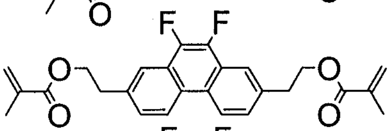

(P-c-28)

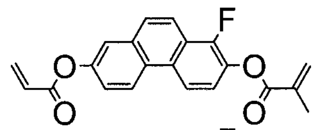

(P-c-38)

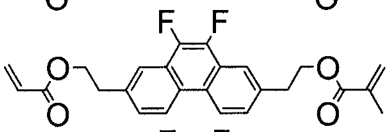

(P-c-29)

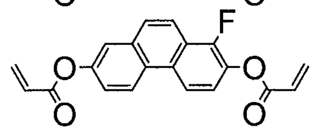

(P-c-39)

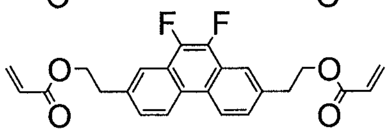

(P-c-30)

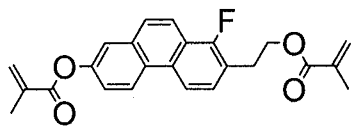

(P-c-40)

[Chem. 23]

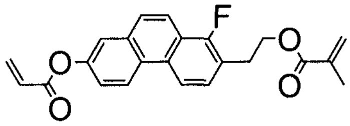
(P-c-41)

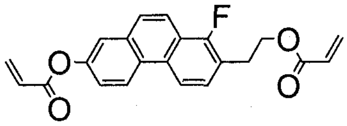
(P-c-42)

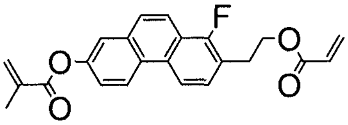
(P-c-43)

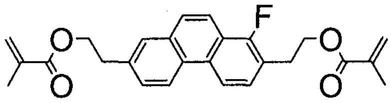
(P-c-44)

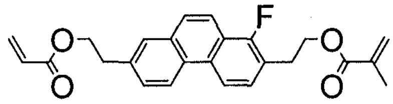
(P-c-45)

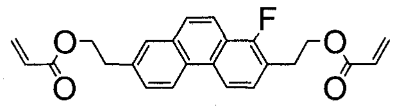
(P-c-46)

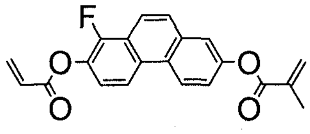
(P-c-47)

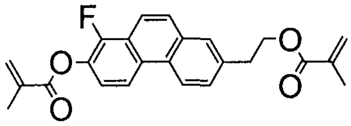
(P-c-48)

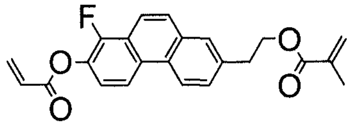
(P-c-49)

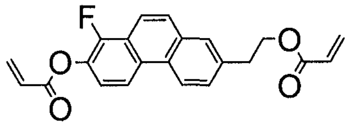
(P-c-50)

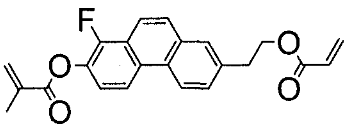
(P-c-51)

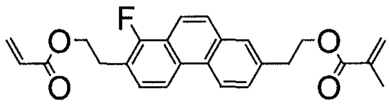
(P-c-52)

The specific content of the polymerizable monomer represented by the above general formula (P-c) is preferably 5% or less, more preferably 3% or less, even more preferably 2% or less, especially preferably 1% or less, and most preferably 0.8% or less.

Preferred examples of the compound represented by the general formula (P-d) in the present invention include polymerizable compounds represented by the following formulae (P-d-1) to (P-d-31).

[Chem. 24]

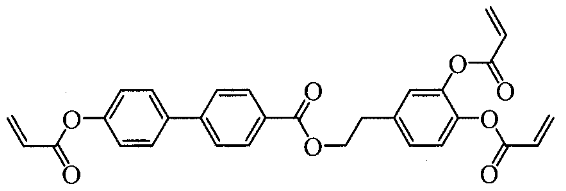

(P-d-1)

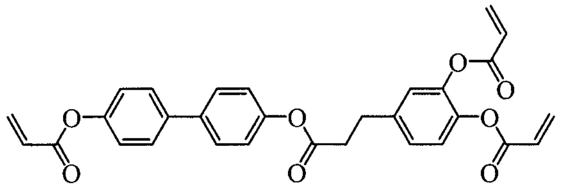

(P-d-2)

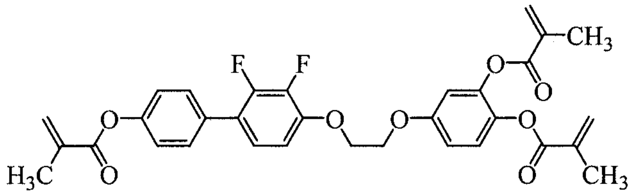

(P-d-3)

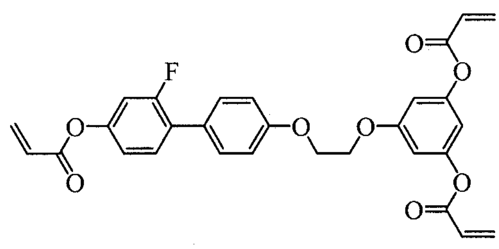

(P-d-4)

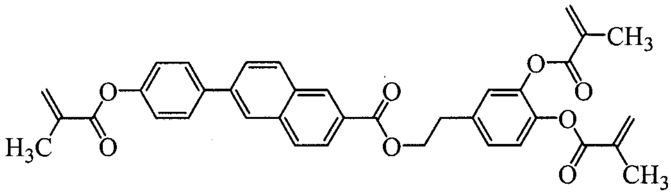

(P-d-5)

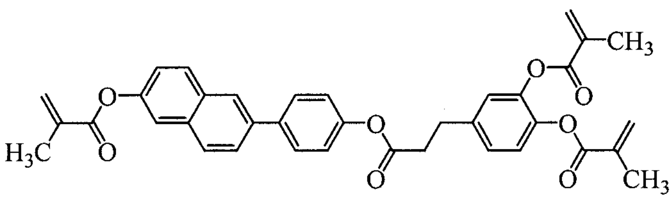

(P-d-6)

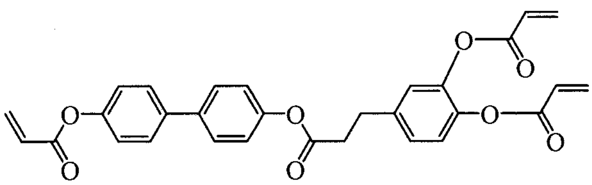

(P-d-7)

[Chem. 25]

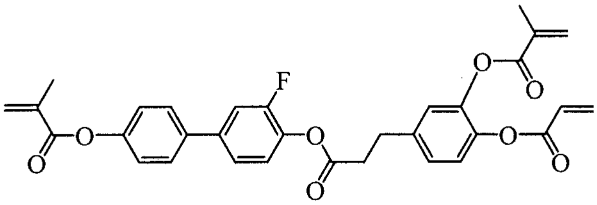

(P-d-8)

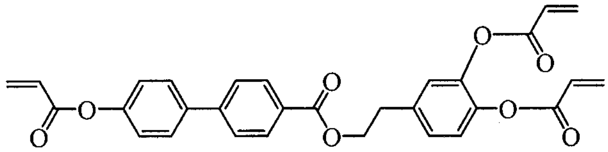

(P-d-9)

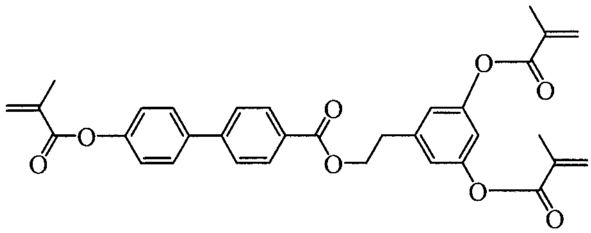

(P-d-10)

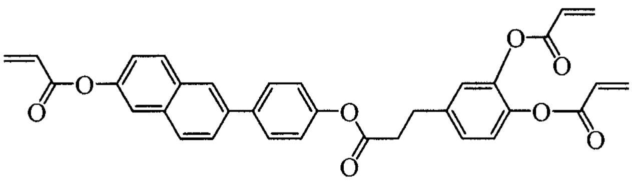

(P-d-11)

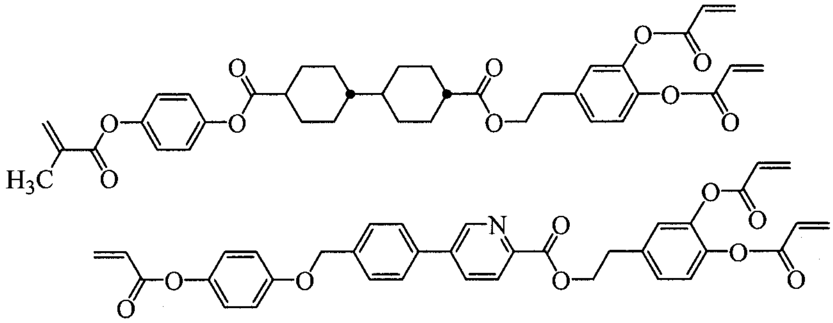

(P-d-12)

(P-d-13)

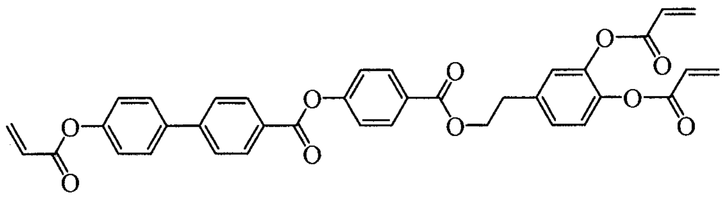

(P-d-14)

[Chem. 26]

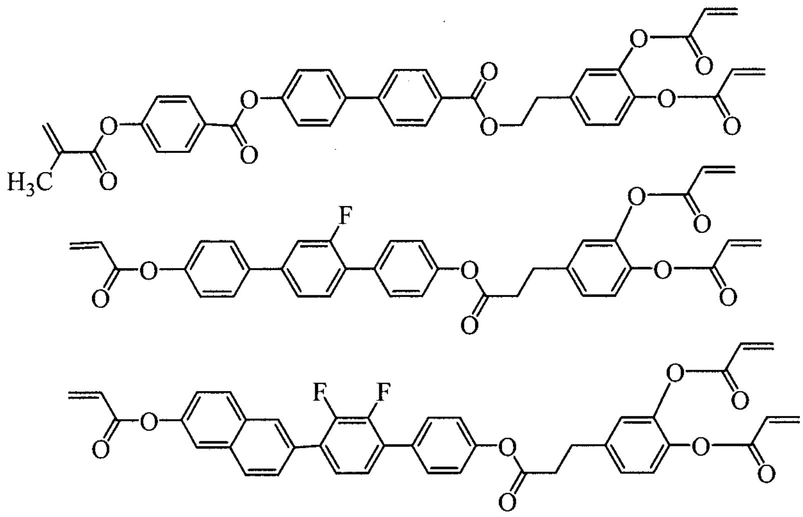

(P-d-15)

(P-d-16)

(P-d-17)

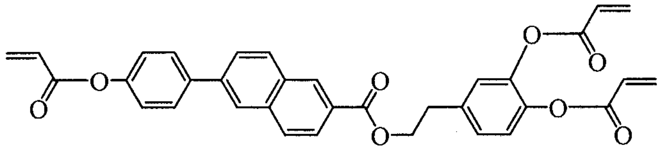

(P-d-18)

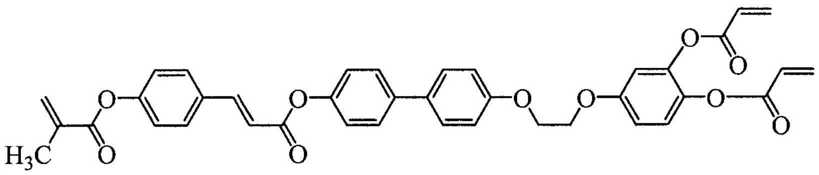

(P-d-19)

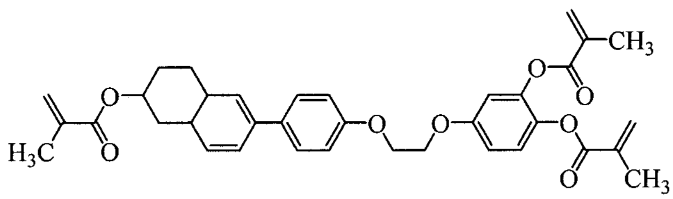

(P-d-20)

[Chem. 27]

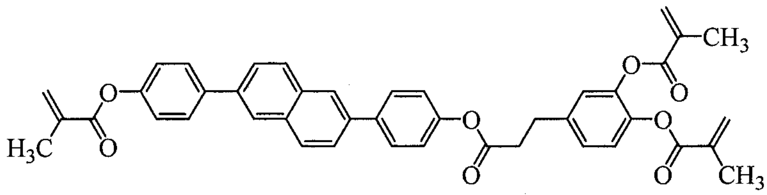
(P-d-21)

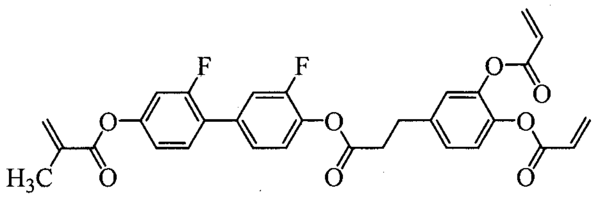
(P-d-22)

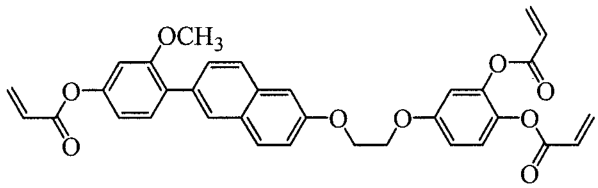
(P-d-23)

[Chem. 28]

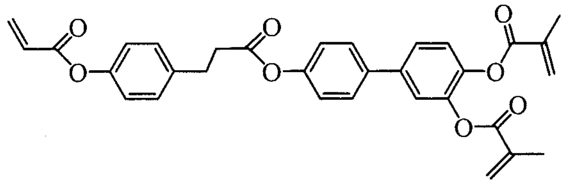
(P-d-24)

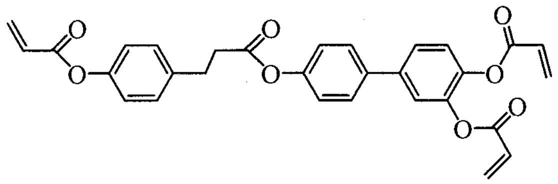
(P-d-25)

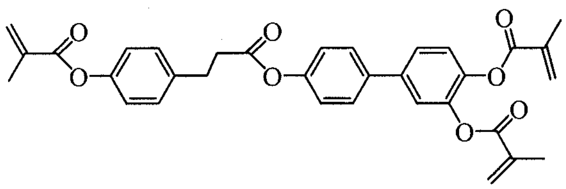
(P-d-26)

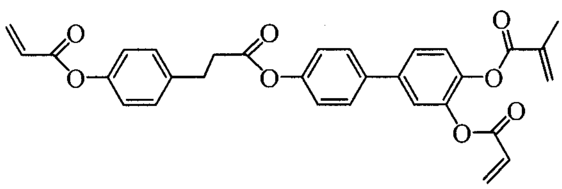
(P-d-27)

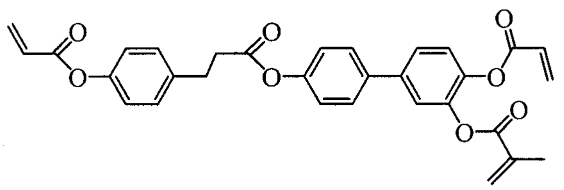
(P-d-28)

[Chem. 29]

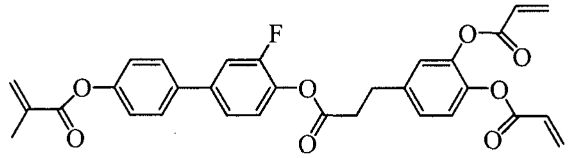

(P-d-29)

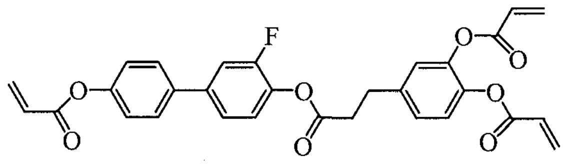

(P-d-30)

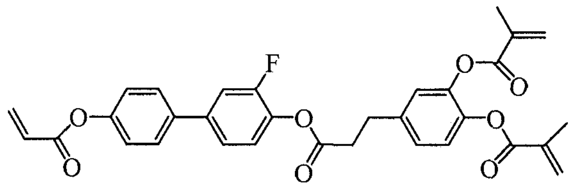

(P-d-31)

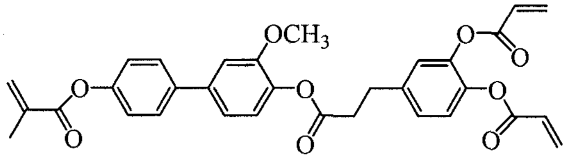

(P-d-32)

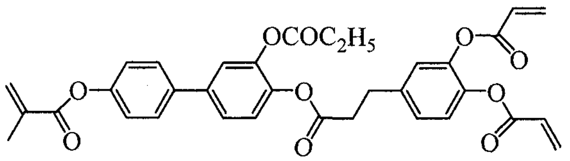

(P-d-33)

[Chem. 30]

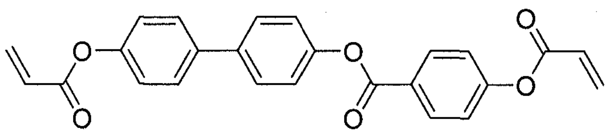

(P-d-34)

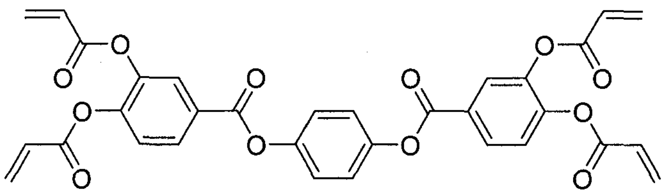

(P-d-35)

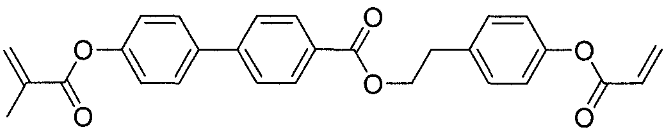

(P-d-36)

The specific content of the polymerizable monomer represented by the above general formula (P-a) is preferably 5% or less, more preferably 3% or less, even more preferably 2% or less, especially preferably 1% or less, and most preferably 0.8% or less.

The compound represented by the general formula (P-d) in the present invention preferably includes compounds

represented by the following general formula (P-d'):

[Chem. 31]

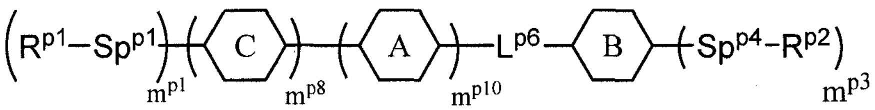

(P-d')

(In the above general formula (P-d'), $m^{p10}$ is more preferably 2 or 3. The other symbols are the same as those in the above general formula (P-d) and are omitted herein.)

In the polymerizable monomer-containing liquid crystal composition of the present invention, the compound represented by the general formula (1) is indispensable. The first component represented by the general formula (1) is described below.

The polymerizable monomer-containing liquid crystal composition of the present invention contains at least one compound selected from the group of compounds represented by the following general formula (1):

[Chem. 32]

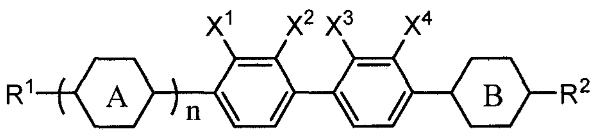

(1)

(In the above general formula (1), $X_1$ to $X_4$ each independently represent a hydrogen atom, a halogen atom or a cyano group,

$R^1$ and $R^2$ each independently represent an alkyl group having 1 to 15 carbon atoms, an alkenyl group having 2 to 15 carbon atoms, an alkoxy group having 1 to 15 carbon atoms,

the ring A and the ring B each independently represent any of the following formulae (A) to (E):

[Chem. 33]

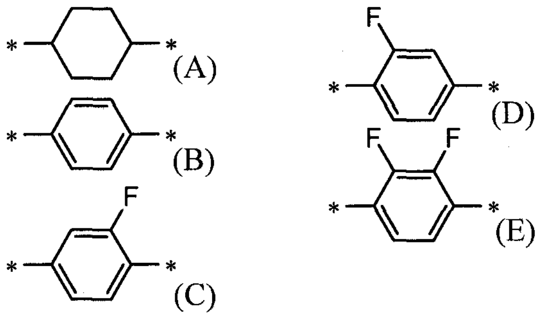

and n indicates 0, 1 or 2.)

When a polymerizable monomer is polymerized through irradiation with light in the presence of a compound represented by the general formula (1), the compound represented by the general formula (1) sensitizes or converts the absorbed light to propagate it to the polymerizable monomer, and therefore the polymerization can be attained through UV irradiation at a low intensity and for a short period of time. In addition, the effect is hardly influenced by the chemical structure of the polymerizable monomer, and therefore it is unnecessary to strictly consider the combination of the liquid crystal compound and the chemical structure of the polymerizable monomer contained in the liquid crystal composition, and accordingly, it is considered that the miscibility between the liquid crystal compound and the polymerizable compound would hardly lower. In addition, when both the compound represented by the general formula (1) and a compound represented by the general formula (2) to be mentioned below are made to coexist in the composition, the photosensitization performance of sensitizing or converting the absorbed light to propagate it to the polymerizable monomer can be further improved.

In the above general formula (1), n is preferably an integer of 0 or more and 2 or less, and when the photosensitivity is considered to be important, n is more preferably an integer of 1 or more and 2 or less, but when the miscibility is considered to be important, n is more preferably an integer of 0 or more and 1 or less, and is especially preferably an integer of 1.

In the above general formula (1), the ring A is at least one selected from the group consisting of the formulae (A) to (E), and is preferably the formula (A) or the formula (B).

In the above general formula (1), $X_1$ to $X_6$ each are independently a hydrogen atom, a halogen atom or a cyano group, and is preferably a hydrogen atom or a halogen atom. The halogen atom is preferably a fluorine atom.

The "alkyl group having 1 to 15 carbon atoms" in the present invention is preferably a linear or branched alkyl group, and more preferably a linear alkyl group. In the above general formula (1), $R^1$ and $R^2$ each are independently an alkyl group having 1 to 15 carbon atoms, preferably $R^1$ and $R^2$ each are independently an alkyl group having 1 to 8 carbon atoms, and more preferably $R^1$ and $R^2$ each are an alkyl group having 1 to 6 carbon atoms.

Examples of the "alkyl group having 1 to 15 carbon atoms" in the present invention include a methyl group, an ethyl group, a propyl group, a butyl group, an isopropyl group, an isobutyl group, a t-butyl group, a 3-pentyl group, an isopentyl group, a neopentyl group, a pentyl group, a hexyl group, a heptyl group, an octyl group, a nonyl group, a decyl group, a dodecyl group, a pentadecyl group, etc. In this description, examples of the alkyl group are in common, and the alkyl group can be suitably selected from the above-mentioned exemplifications depending on the number of the carbon atoms constituting the alkyl group.

Regarding examples of the "alkoxy group having 1 to 15 carbon atoms" in the present invention, at least one oxygen atom in the substituent is preferably in a position directly bonding to the ring structure, and a methoxy group, an ethoxy group, a propoxy group (n-propoxy group, i-propoxy group), a butoxy group, a pentyloxy group, an octyloxy group or a decyloxy group is more preferred. In this description, examples of the alkoxy groups are in common, and the alkoxy group can be suitably selected from the above-mentioned exemplifications depending on the number of the carbon atoms constituting the alkoxy group.

Examples of the "alkenyl group having 2 to 15 carbon atoms" in the present invention include a vinyl group, an allyl group, a 1-propenyl group, an isopropenyl group, a 2-butenyl group, a 3-butenyl group, a 1, 3-butadienyl group, a 2-pentenyl group, a 3-pentenyl group, a 2-hexenyl group, etc. More preferred examples of the alkenyl group in the present invention are those represented by the formula (i) (vinyl group), the formula (ii) (1-propenyl group), the formula (iii) (3-butenyl group) and the formula (iv) (3-pentenyl group) mentioned below.

[Chem. 34]

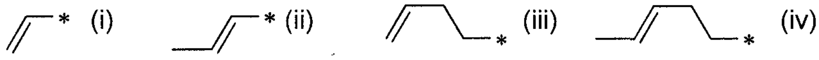

(i) (ii) (iii) (iv)

(In the above formulae (i) to (iv), * shows the bonding site to the ring structure.)

In the case where the liquid crystal composition of the present invention contains a polymerizable monomer, the structure represented by the formula (ii) or the formula (iv) is preferred, and the structure represented by the formula (ii) is more preferred. In this description, examples of the alkenyl group are in common, and the alkenyl group can be suitably selected from the above-mentioned exemplifications depending on the number of the carbon atoms constituting the alkenyl group.

The content of the compound represented by the general formula (1) in the polymerizable monomer-containing liquid crystal composition of the present invention is suitably selected in relation to not only the use mode and the use object of the liquid crystal composition but also to the other components, and therefore a preferred range of the content of the compound represented by the general formula (1) contained in the liquid crystal composition is preferably differently and independently defined, depending on the embodiments of the invention. The lower limit of the content of the compound represented by the general formula (1) in the polymerizable monomer-containing liquid crystal composition of the present invention is, for example as one embodiment of the present invention, 1% by mass relative to the total amount (100% by mass) of the liquid crystal composition of the present invention. In another embodiment of the present invention, the lower limit is 5% by mass. In still another embodiment of the present invention, it is 10% by mass. In still another embodiment of the present invention, it is 20% by mass. Further, in still another embodiment of the present invention, it is 30% by mass. Further, in still another embodiment of the present invention, it is 40% by mass. Further, in still another embodiment of the present invention, it is 50% by mass. Further, in still another embodiment of the present invention, it is 55% by mass. Further, in still another embodiment of the present invention, it is 60% by mass. Further, in still another embodiment of the present invention, it is 65% by mass. Further, in still another embodiment of the present invention, it is 70% by mass. Further, in still another embodiment of the present invention, it is 75% by mass. Further, in still another embodiment of the present invention, it is 80% by mass.

The upper limit of the content of the compound represented by the general formula (1) in the polymerizable monomer-containing liquid crystal composition of the present invention is, for example as one embodiment of the present

invention, 95% by mass relative to the total amount of the liquid crystal composition of the present invention. In another embodiment of the present invention, the upper limit is 85% by mass. In still another embodiment of the present invention, it is 75% by mass. In still another embodiment of the present invention, it is 65% by mass. Further, in still another embodiment of the present invention, it is 55% by mass. Further, in still another embodiment of the present invention, it is 45% by mass. Further, in still another embodiment of the present invention, it is 35% by mass. Further, in still another embodiment of the present invention, it is 25% by mass.

In the polymerizable monomer-containing liquid crystal composition of the present invention, the content of the compound represented by the general formula (1) must be suitably controlled in accordance with not only the photosensitizing effect but also the necessary properties thereof such as low-temperature solubility, transition temperature, electric reliability, birefringence, process adaptability to be mentioned below, drop marks, burn-in, dielectric anisotropy, etc.

In the case where the viscosity of the polymerizable monomer-containing liquid crystal composition of the present invention is desired to be kept low and the response speed thereof is desired to be high, the above-mentioned lower limit is preferably high and the upper limit is preferably high. Further, in the case where Tni of the liquid crystal composition of the present invention is desired to be kept high and the composition is desired to have good temperature stability, the lower limit is preferably high and the upper limit is preferably high. In the case where the dielectric anisotropy of the composition is desired to be high for keeping a low driving voltage, the lower limit is preferably low and the upper limit is preferably low.

In the polymerizable monomer-containing compound of the present invention, the types of the compounds represented by the general formula (1) to be combined are not specifically limited, and any combination of the compounds can be used in accordance with the necessary properties thereof such as photosensitizing effect, low-temperature solubility, transition temperature, electric reliability, birefringence, etc. Regarding the type of the compound represented by the general formula (1) used in the polymerizable monomer-containing liquid crystal composition, for example and as one embodiment of the present invention, one type of the compound represented by the general formula (1) is used in the composition. In another embodiment of the present invention, two types of the compounds represented by the general formula (1) are used. In still another embodiment of the present invention, three types of the compounds represented by the general formula (1) are used. Further in still another embodiment of the present invention, four types of the compounds represented by the general formula (1) are used. Further in still another embodiment of the present invention, five types of the compounds represented by the general formula (1) are used. Further in still another embodiment of the present invention, six types of the compounds represented by the general formula (1) are used. Further in still another embodiment of the present invention, seven types of the compounds represented by the general formula (1) are used. Further in still another embodiment of the present invention, eight types of the compounds represented by the general formula (1) are used. Further in still another embodiment of the present invention, nine types of the compounds represented by the general formula (1) are used. Further in still another embodiment of the present invention, ten or more types of the compounds represented by the general formula (1) are used in the system.

The lower limit of the dielectric anisotropy ($\Delta\varepsilon$) of the compound represented by the general formula (1) in the present invention is -10 in one embodiment, and -8 in another embodiment. In still another embodiment, the value is -6, and further in still another embodiment, it is -12. In still another embodiment, the value is -14, and further in still another embodiment, it is -4. The upper limit of the dielectric anisotropy ($\Delta\varepsilon$) of the compound represented by the general formula (1) in the present invention is 0 in one embodiment, and +1 in another embodiment, in still another embodiment, the value is -1, further in still another embodiment, it is -2, further in still another embodiment, it is 2, and further in still another embodiment, it is -0.5.

The compound represented by the general formula (1) in the present invention is preferably at least one compound selected from the group consisting of the general formulae (1-a) to (1-d).

[Chem. 35]

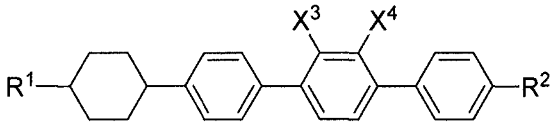
(1-a)

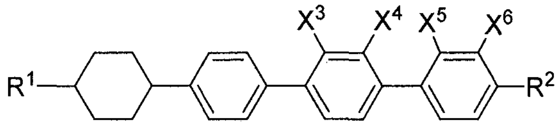
(1-b)

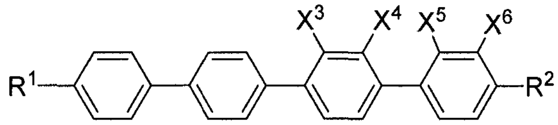
(1-c)

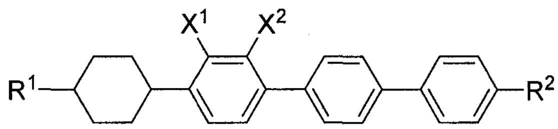
(1-d)

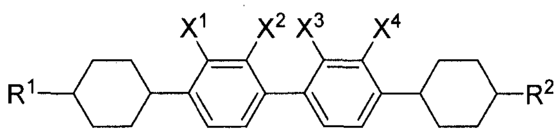
(1-e)

(In the above general formulae (1-a) to (1-e), $R^1$ and $R^2$ each independently represent an alkyl group having 1 to 10 carbon atoms, an alkenyl group having 2 to 10 carbon atoms, or an alkoxy group having 1 to 8 carbon atoms, $X^1$, $X^2$, $X^3$, $X^4$, $X^5$ and $X^6$ each independently represent a fluorine atom or a hydrogen atom.)

The compound represented by the general formula (1-a) in the present invention is more preferably at least one selected from the group of compounds represented by the general formula (1-a-1), the general formula (1-a-2) and the general formula (1-a-3).

[Chem. 36]

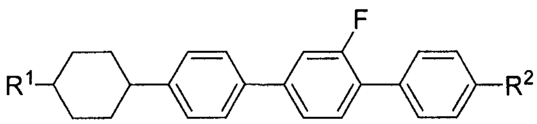
(1-a-1)

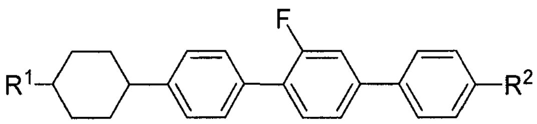
(1-a-2)

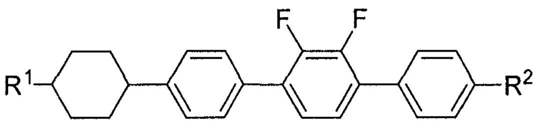
(1-a-3)

(In the above general formulae (1-a-1) to (1-a-3), $R^1$ and $R^2$ each independently represent an alkyl group having 1 to 8 carbon atoms, an alkenyl group having 2 to 8 carbon atoms, or an alkoxy group having 1 to 8 carbon atoms.)

Preferred examples of the compound represented by the general formula (1-a) in the present invention include the following formulae (1.1) to (1.12).

[Chem. 37]

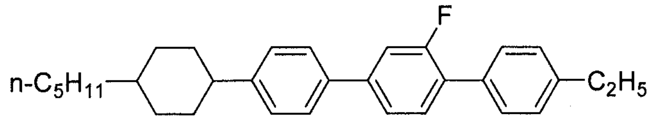
(1.1)

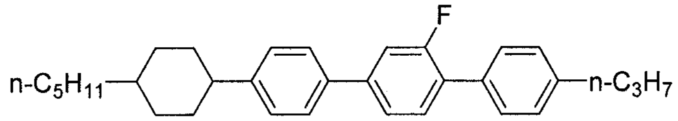
(1.2)

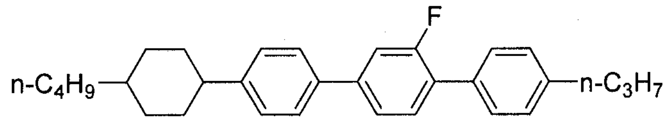
(1.3)

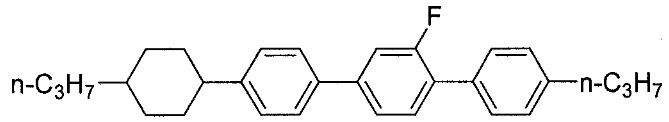
(1.4)

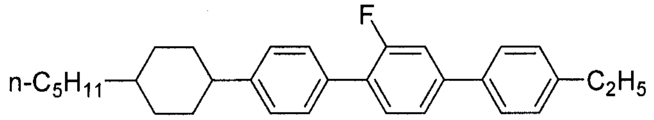
(1.5)

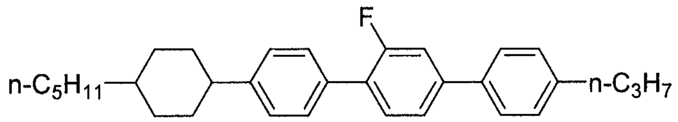
(1.6)

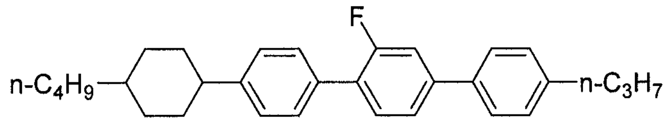
(1.7)

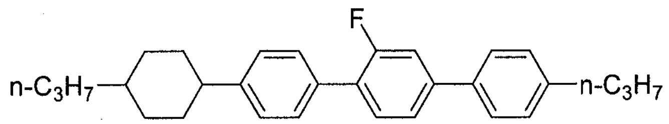
(1.8)

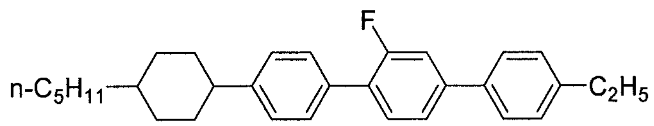
(1.9)

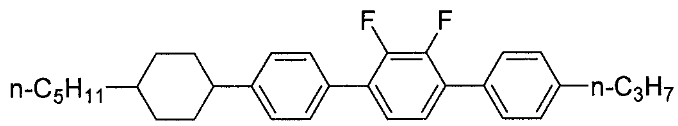
(1.10)

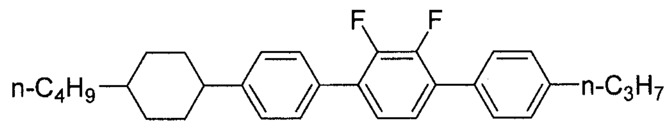
(1.11)

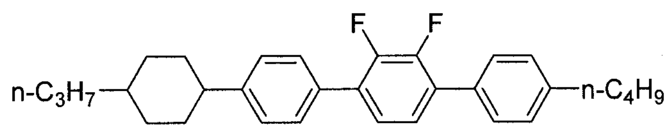
(1.12)

The compound represented by the general formula (1-b) in the present invention is more preferably at least one compound selected from the group of compounds represented by the general formula (1-b-1) and the general formula (1-b-2).

[Chem. 38]

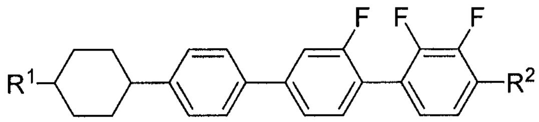

(1-b-1)

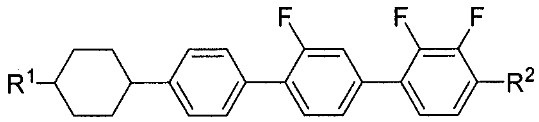

(1-b-2)

(In the above general formulae (1-b-1) and (1-b-2), $R^1$ and $R^2$ each independently represent an alkyl group having 1 to 8 carbon atoms, an alkenyl group having 2 to 8 carbon atoms, or an alkoxy group having 1 to 8 carbon atoms.)

Preferred examples of the compound represented by the general formula (1-b) in the present invention include the following formulae (1.13) to (1.21).

[Chem. 39]

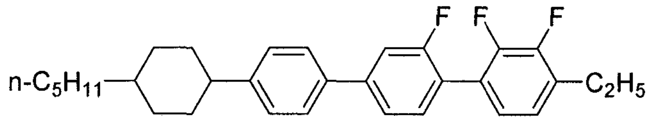

(1.13)

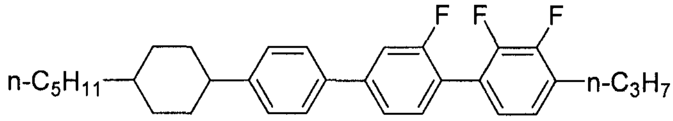

(1.14)

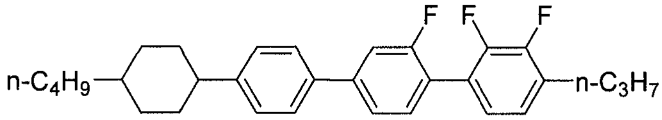

(1.15)

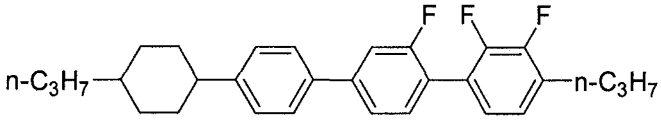

(1.16)

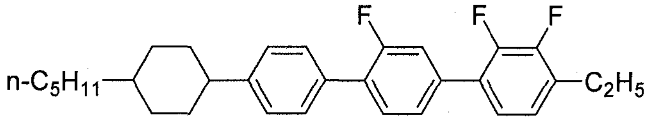

(1.17)

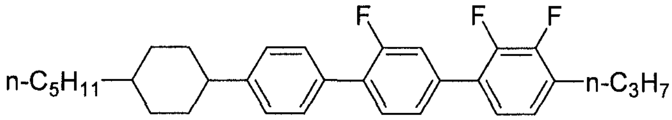

(1.18)

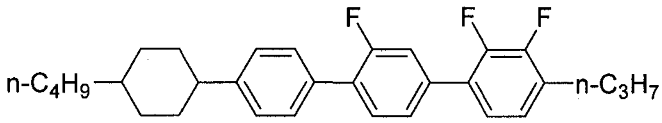

(1.19)

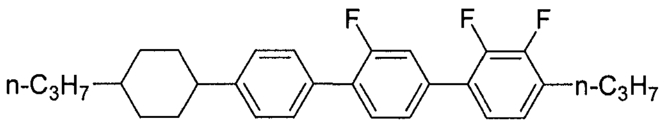

(1.20)

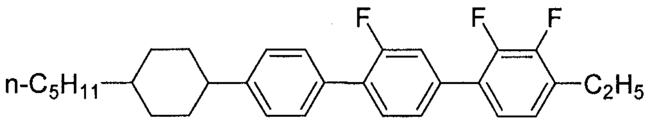

(1.21)

More preferably, the compound represented by the general formula (1-c) in the present invention is at least one selected from the group consisting of compounds represented by the general formula (1-c-1), the general formula (1-c-2) and the general formula (1-c-3).

[Chem. 40]

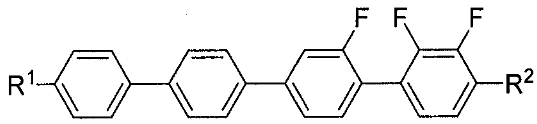

(1-c-1)

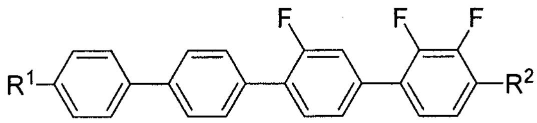

(1-c-2)

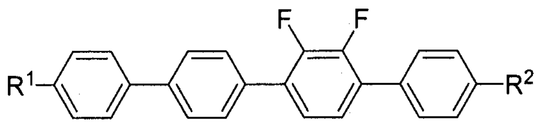

(1-c-3)

(In the above general formulae (1-c-1) to (1-c-3), $R^1$ and $R^2$ each independently represent an alkyl group having 1 to 8 carbon atoms, an alkenyl group having 2 to 8 carbon atoms, or an alkoxy group having 1 to 8 carbon atoms.)

Preferred examples of the compound represented by the general formula (1-c) in the present invention include the following formulae (1.22) to (1.35).

[Chem. 41]

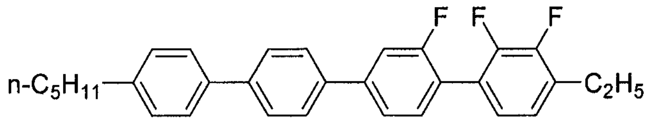

(1.22)

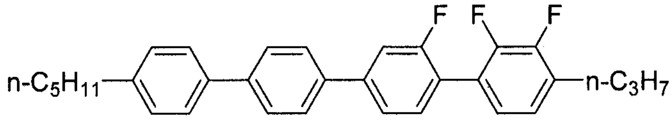

(1.23)

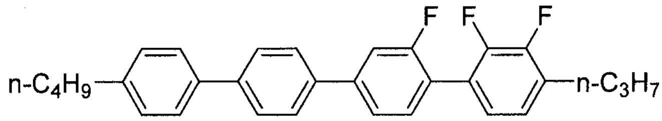

(1.24)

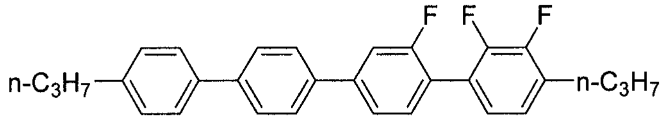

(1.25)

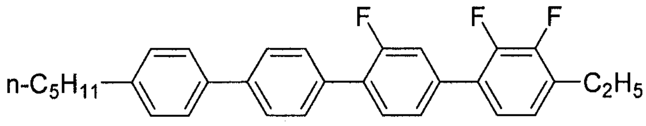

(1.26)

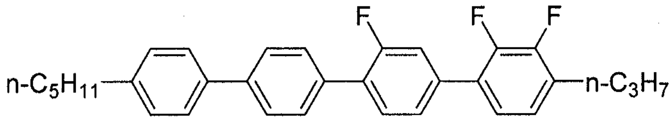

(1.27)

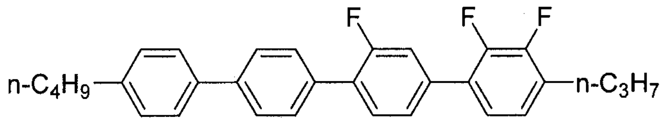

(1.28)

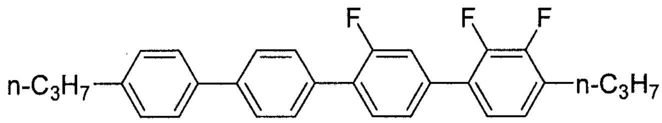

(1.29)

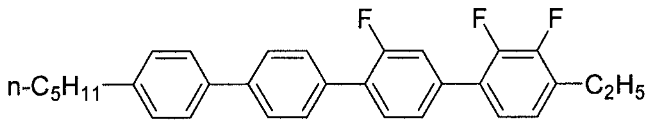

(1.30)

[Chem. 42]

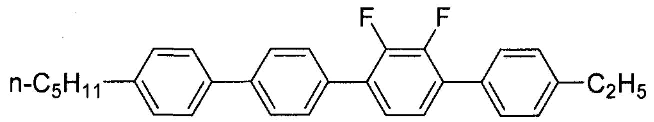
(1.31)

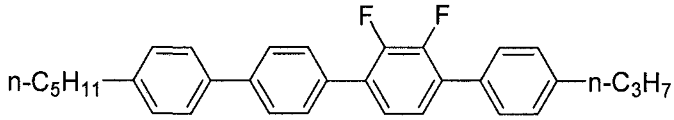
(1.32)

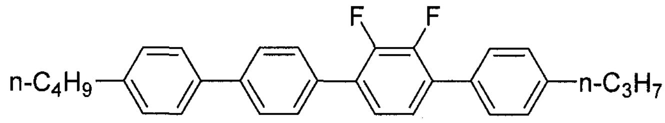
(1.33)

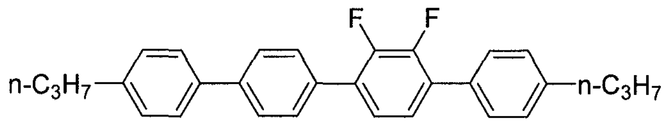
(1.34)

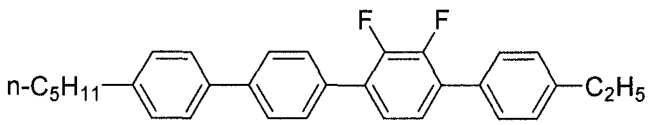
(1.35)

More preferably, the compound represented by the general formula (1-d) in the present invention is at least one selected from the group consisting of compounds of the general formula (1-d-1).

[Chem. 43]

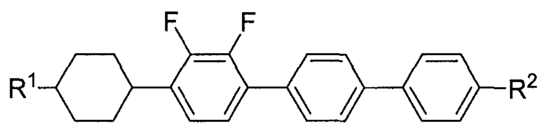
(1-d-1)

(In the above general formula (1-d-1), $R^1$ and $R^2$ each independently represent an alkyl group having 1 to 8 carbon atoms, an alkenyl group having 2 to 8 carbon atoms, or an alkoxy group having 1 to 8 carbon atoms.)

Preferred examples of the compound represented by the general formula (1-d) in the present invention include the following formulae (1.36) to (1.12).

[Chem. 44]

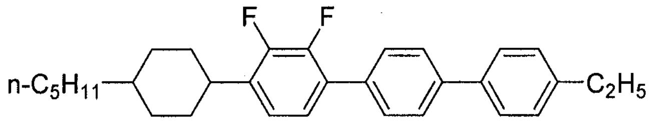

(1.36)

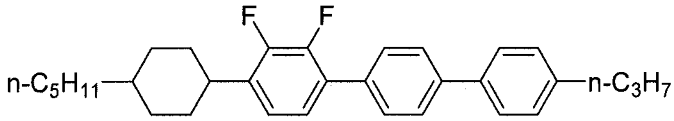

(1.37)

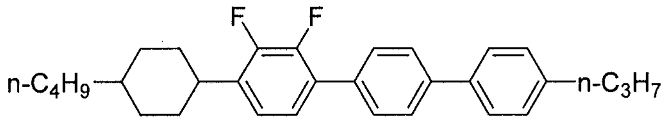

(1.38)

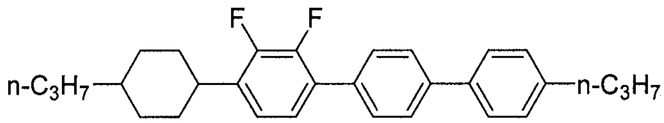

(1.39)

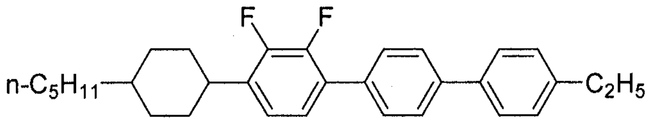

(1.40)

More preferably, the compound represented by the general formula (1-e) in the present invention is at least one selected from the group consisting of compounds of the general formulae (1-e-1) and (1-e-2).

[Chem. 45]

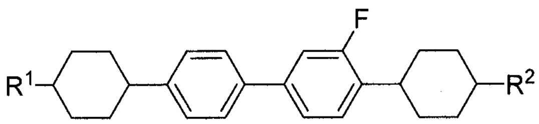

(1-e-1)

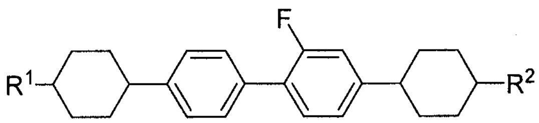

(1-e-2)

(In the above general formulae (1-e-1) and (1-e-2), $R^1$ and $R^2$ each independently represent an alkyl group having 1 to 8 carbon atoms, an alkenyl group having 2 to 8 carbon atoms, or an alkoxy group having 1 to 8 carbon atoms.)
Preferred examples of the compound represented by the general formula (1-e) in the present invention include the following formulae (1.41) to (1.49).

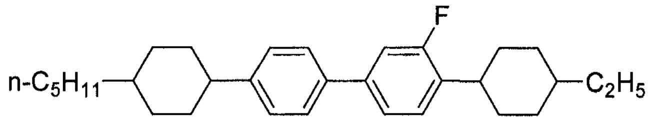
(1.41)

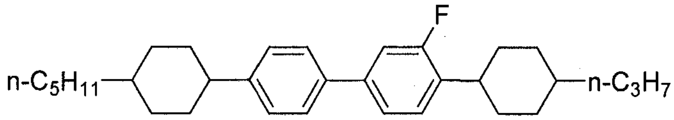
(1.42)

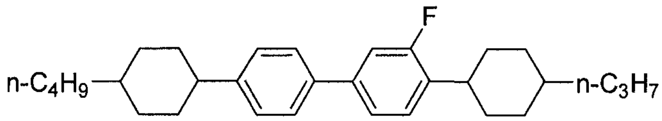
(1.43)

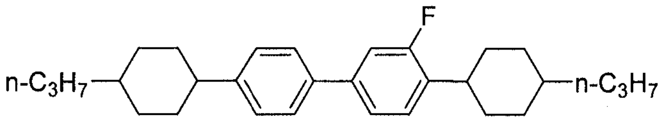
(1.44)

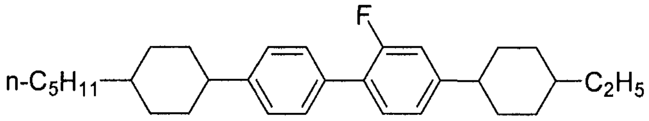
(1.45)

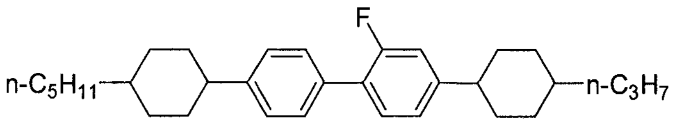
(1.46)

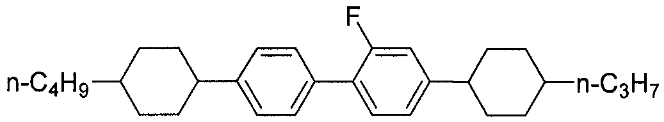
(1.47)

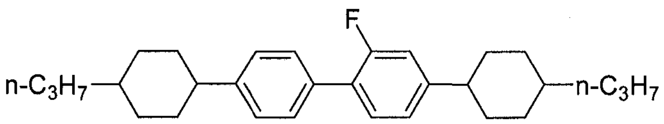
(1.48)

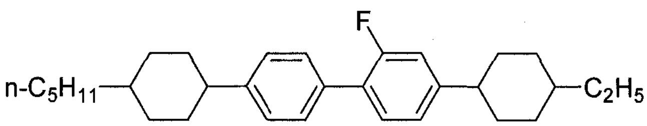
(1.49)

The polymerizable monomer-containing liquid crystal composition of the present invention indispensably contains the compound represented by the general formula (2). The compound represented by the general formula (2) is described below.

The compound is at least one selected from the group consisting of compounds represented by the following general formula (2).

[Chem. 46]

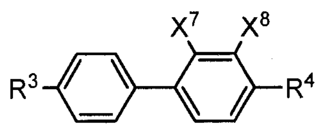
(2)

In the above general formula (2), $X^7$ and $X^8$ each independently represent a hydrogen atom, a halogen atom or a cyano group, and

$R^3$ and $R^4$ each independently represent an alkyl group having 1 to 15 carbon atoms, an alkenyl group having 2 to 15 carbon atoms, or an alkoxy group having 1 to 15 carbon atoms.

When a polymerizable monomer is polymerized through irradiation with light in the presence of a compound

represented by the general formula (2) as the second component, the compound represented by the general formula (1) sensitizes or converts the absorbed light to propagate it to the polymerizable monomer, and therefore it is considered that the compound can assist the advantageous effect of enabling polymerization through UV irradiation at a low intensity and for a short period of time. In addition, the effect is hardly influenced by the chemical structure of the polymerizable monomer, and therefore it is considered that presence of a polymerizable monomer excellent in miscibility with the liquid crystal composition in the composition could reduce solubility and reduce the amount of uncured monomer.

The alkyl group, the alkoxy group and the alkenyl group in the compound represented by the general formula (2) in the present invention are the same as those in the compound represented by the general formula (1) in the present invention and are therefore omitted herein.

The content of the compound represented by the general formula (2) in the polymerizable monomer-containing liquid crystal composition of the present invention is suitably selected in relation to not only the use mode and the use object of the liquid crystal composition but also to the other components, and therefore a preferred range of the content of the compound represented by the general formula (2) contained in the liquid crystal composition is preferably differently and independently defined, depending on the embodiments of the invention. The lower limit of the content of the compound represented by the general formula (2) in the polymerizable monomer-containing liquid crystal composition of the present invention is, for example as one embodiment of the present invention, 1% by mass relative to the total amount (100% by mass) of the liquid crystal composition of the present invention. In another embodiment of the present invention, the lower limit is 10% by mass. In still another embodiment of the present invention, it is 20% by mass. In still another embodiment of the present invention, it is 30% by mass. Further, in still another embodiment of the present invention, it is 40% by mass. Further, in still another embodiment of the present invention, it is 50% by mass. Further, in still another embodiment of the present invention, it is 55% by mass. Further, in still another embodiment of the present invention, it is 60% by mass. Further, in still another embodiment of the present invention, it is 65% by mass. Further, in still another embodiment of the present invention, it is 70% by mass. Further, in still another embodiment of the present invention, it is 75% by mass. Further, in still another embodiment of the present invention, it is 80% by mass.

The upper limit of the content of the compound represented by the general formula (2) in the polymerizable monomer-containing liquid crystal composition of the present invention is, for example as one embodiment of the present invention, 95% by mass relative to the total amount of the liquid crystal composition of the present invention. In another embodiment of the present invention, the upper limit is 85% by mass. In still another embodiment of the present invention, it is 75% by mass. In still another embodiment of the present invention, it is 65% by mass. Further, in still another embodiment of the present invention, it is 55% by mass. Further, in still another embodiment of the present invention, it is 45% by mass. Further, in still another embodiment of the present invention, it is 35% by mass. Further, in still another embodiment of the present invention, it is 25% by mass.

In the polymerizable monomer-containing liquid crystal composition of the present invention, the content of the compound represented by the general formula (2) must be suitably controlled in accordance with not only the photosensitizing effect but also the necessary properties thereof such as low-temperature solubility, transition temperature, electric reliability, birefringence, process adaptability to be mentioned below, drop marks, burn-in, dielectric anisotropy, etc.

In the case where the viscosity of the polymerizable monomer-containing liquid crystal composition of the present invention is desired to be kept low and the response speed thereof is desired to be high, the above-mentioned lower limit is preferably high and the upper limit is preferably high. Further, in the case where Tni of the liquid crystal composition of the present invention is desired to be kept high and the composition is desired to have good temperature stability, the lower limit is preferably high and the upper limit is preferably high. In the case where the dielectric anisotropy of the composition is desired to be high for keeping a low driving voltage, the lower limit is preferably low and the upper limit is preferably low.

In the polymerizable monomer-containing liquid crystal composition of the present invention, the types of the compounds represented by the general formula (2) to be combined are not specifically limited, and any combination of the compounds can be used in accordance with the necessary properties thereof such as photosensitizing effect, low-temperature solubility, transition temperature, electric reliability, birefringence, etc. Regarding the type of the compound represented by the general formula (2) used in the polymerizable monomer-containing liquid crystal composition, for example and as one embodiment of the present invention, one type of the compound represented by the general formula (2) is used in the composition. In another embodiment of the present invention, two types of the compounds represented by the general formula (2) are used. In still another embodiment of the present invention, three types of the compounds represented by the general formula (2) are used. Further in still another embodiment of the present invention, four types of the compounds represented by the general formula (2) are used. Further in still another embodiment of the present invention, five types of the compounds represented by the general formula (2) are used. Further in still another embodiment of the present invention, six types of the compounds represented by the general formula (2) are used. Further in still another embodiment of the present invention, seven types of the compounds represented by the general formula (2) are used. Further in still another embodiment of the present invention, eight types of the compounds represented by the

general formula (2) are used. Further in still another embodiment of the present invention, nine types of the compounds represented by the general formula (2) are used. Further in still another embodiment of the present invention, ten or more types of the compounds represented by the general formula (2) are used in the system.

A preferred embodiment of the compounds represented by the general formula (2) in the present invention is a mixture prepared by missing 1 to 3 different types of compounds selected from the compounds represented by the general formula (2). In this case, the mass ratio of all the compounds represented by the general formula (2) in the present invention is, when the composition contains one alone of the compound represented by the general formula (2), especially preferably 5 to 13% by mass relative to the entire liquid crystal composition, when the composition contains two types of compounds represented by the general formula (2), the mass ratio is especially preferably 5 to 16% by mass relative to the entire liquid crystal composition, and when the composition contains three types of compounds represented by the general formula (2), the mass ratio is especially preferably 5 to 20% by mass relative to the entire liquid crystal composition.

Specific examples of the compound represented by the general formula (2) in the present invention are at least one selected from the group consisting of the following formulae (2.1) to (2.9).

[Chem. 47]

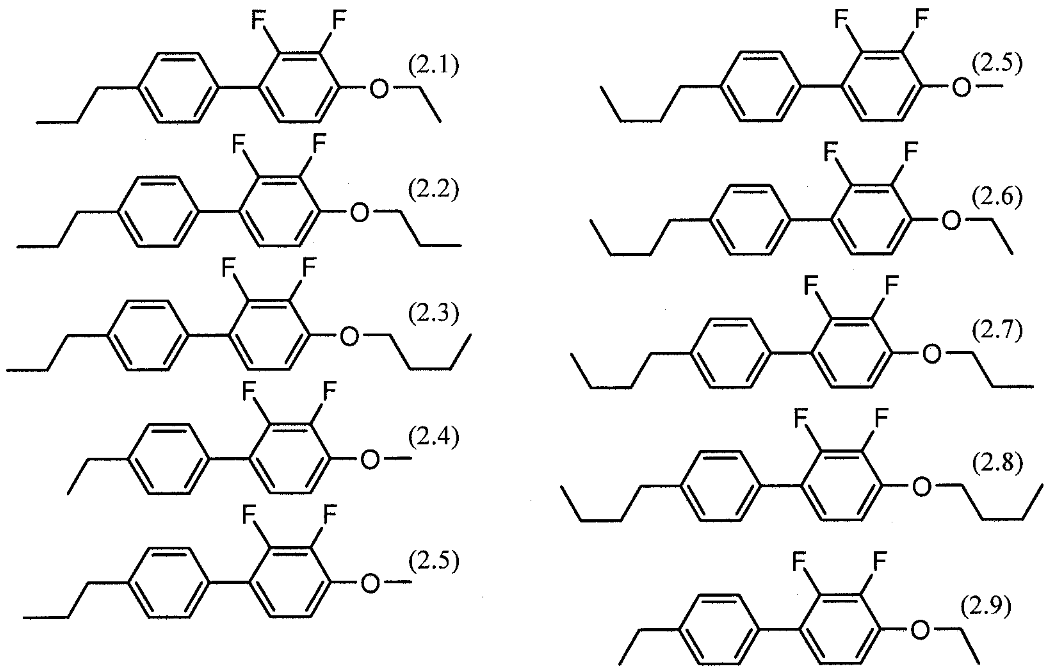

(2.1) (2.2) (2.3) (2.4) (2.5) (2.5) (2.6) (2.7) (2.8) (2.9)

Preferably, the polymerizable monomer-containing liquid crystal composition of the present invention further contains at least one compound selected from the group consisting of compounds represented by the following general formula (5):

[Chem. 48]

$$R^{L1}-B^{L1}-L^{L1}-B^{L2}\left(-L^{L2}-B^{L3}\right)_{OL}-R^{L2} \quad (5)$$

(in the above general formula (5), $R^{L1}$ and $R^{L2}$ each independently represent an alkyl group having 1 to 8 carbon atoms, and one or non-adjacent two or more ($-CH_2-$) 's in the alkyl group may be each independently substituted with -CH=CH-, -C=C-, -O-, -CO-, -COO- or -OCO-,

OL indicates 0, 1, 2 or 3,

$B^{L1}$, $B^{L2}$ and $B^{L3}$ each independently represent a group selected from the following (a) and (b):

(a) a 1, 4-cyclohexylene group (one $-CH_2-$ or non-adjacent 2 or more $(-CH_2-)$'s existing in this group may be substituted with -O-),

(b) a 1,4-phenylene group (one -CH= or non-adjacent two or more (-CH=)'s existing in this group may be substituted with -N=),

wherein the hydrogen atom contained in the group represented by the above (a) and the above (b) may be each independently substituted with a cyano group, a chlorine atom or a fluorine atom,

$L_{L1}$ and $L_{L2}$ each independently represent a single bond, $-CH_2CH_2-$, - $(CH_2)_4-$, $-OCH_2-$, $-CH_2O-$, -COO-, -OCO-, $-OCF_2-$, $-CF_2O-$, -CH=N-N=CH-, -CH=CH-, -CF=CF- or -C≡C-,

when OL is 2 or 3 and when the formula has plural $L^{L2}$'s, they may be the same or different, and when OL is 2 or 3 and when the formula has plural $B^{L3}$'s, they may be the same or different,

with the proviso that compounds represented by the general formula (1) and compounds represented by the general formula (2) are excluded.)

In the above general formula (5) where the cyclic structure bonding thereto is a phenyl group (aromatic), $R^{L1}$ and $R^{L2}$ each are preferably a linear alkyl group having 1 to 5 carbon atoms, a linear alkoxy group having 1 to 4 (or more) carbon atoms, or an alkenyl group having 4 to 5 carbon atoms, and where the cyclic structure bonding thereto is a cyclohexane, a pyran, a dioxane or the like saturated cyclic structure, they each are preferably a linear alkyl group having 1 to 5 carbon atoms, a linear alkoxy group having 1 to 4 (or more) carbon atoms, or a linear alkenyl group having 2 to 5 carbon atoms.

In the case where the liquid crystal composition of the present invention is required to have chemical stability, it is desirable that the compound represented by the general formula (5) to be therein does not have a chlorine atom in the molecule thereof. Also preferably, the compound represented by the general formula (5) in the present invention does not contain halogens in the same cyclic structure.

Adding such a compound represented by the general formula (5) to the liquid crystal composition is especially preferred in the point that the viscosity, $\Delta n$ and the transition point of the liquid crystal composition can be changed arbitrarily while minimizing the driving voltage change for liquid crystal display elements.

The content of the compound represented by the general formula (5) in the polymerizable monomer-containing liquid crystal composition of the present invention is, like that of the above-mentioned other components, suitably selected in relation to not only the use mode and the use object of the liquid crystal composition but also to the other components, and therefore a preferred range of the content of the compound represented by the general formula (5) contained in the liquid crystal composition is preferably differently and independently defined, depending on the embodiments of the invention.

The lower limit of the content of the compound represented by the general formula (5) in the polymerizable monomer-containing liquid crystal composition of the present invention is, for example as one embodiment of the present invention, 1% by mass relative to the total amount (100% by mass) of the liquid crystal composition of the present invention. In another embodiment of the present invention, the lower limit is 10% by mass. In still another embodiment of the present invention, it is 20% by mass. Further, in still another embodiment of the present invention, it is 30% by mass. Further, in still another embodiment of the present invention, it is 40% by mass. Further, in still another embodiment of the present invention, it is 50% by mass. Further, in still another embodiment of the present invention, it is 55% by mass. Further, in still another embodiment of the present invention, it is 60% by mass. Further, in still another embodiment of the present invention, it is 65% by mass. Further, in still another embodiment of the present invention, it is 70% by mass. Further, in still another embodiment of the present invention, it is 75% by mass. Further, in still another embodiment of the present invention, it is 80% by mass.

The upper limit of the content of the compound represented by the general formula (5) in the polymerizable monomer-containing liquid crystal composition of the present invention is, for example as one embodiment of the present invention, 95% by mass relative to the total amount (100% by mass) of the liquid crystal composition of the present invention. In another embodiment of the present invention, the upper limit is 85% by mass. In still another embodiment of the present invention, it is 75% by mass. In still another embodiment of the present invention, it is 65% by mass. Further, in still another embodiment of the present invention, it is 55% by mass. Further, in still another embodiment of the present invention, it is 45% by mass. Further, in still another embodiment of the present invention, it is 35% by mass. Further, in still another embodiment of the present invention, it is 25% by mass.

In the polymerizable monomer-containing liquid crystal composition of the present invention, the content of the compound represented by the general formula (5) must be suitably controlled in accordance with the necessary properties thereof such as low-temperature solubility, transition temperature, electric reliability, birefringence, process adaptability to be mentioned below, drop marks, burn-in, dielectric anisotropy, etc.

In the case where the viscosity of the polymerizable monomer-containing liquid crystal composition of the present invention is desired to be kept low and the response speed thereof is desired to be high, the above-mentioned

lower limit is preferably high and the upper limit is preferably high. Further, in the case where Tni of the liquid crystal composition of the present invention is desired to be kept high and the composition is desired to have good temperature stability, the lower limit is preferably high and the upper limit is preferably high. In the case where the dielectric anisotropy of the composition is desired to be high for keeping a low driving voltage, the lower limit is preferably low and the upper limit is preferably low.

In the polymerizable monomer-containing liquid crystal composition of the present invention, the types of the compounds represented by the general formula (5) to be combined are not specifically limited, and any combination of the compounds can be used in accordance with the necessary properties thereof such as low-temperature solubility, transition temperature, electric reliability, birefringence, etc. Regarding the type of the compound represented by the general formula (5) used in the polymerizable monomer-containing composition, for example and as one embodiment of the present invention, one type of the compound represented by the general formula (5) is used in the composition. In another embodiment of the present invention, two types of the compounds represented by the general formula (5) are used. In still another embodiment of the present invention, three types of the compounds represented by the general formula (5) are used. Further in still another embodiment of the present invention, four types of the compounds represented by the general formula (5) are used. Further in still another embodiment of the present invention, five types of the compounds represented by the general formula (5) are used. Further in still another embodiment of the present invention, six types of the compounds represented by the general formula (5) are used. Further in still another embodiment of the present invention, seven types of the compounds represented by the general formula (5) are used. Further in still another embodiment of the present invention, eight types of the compounds represented by the general formula (5) are used. Further in still another embodiment of the present invention, nine types of the compounds represented by the general formula (5) are used. Further in still another embodiment of the present invention, ten or more types of the compounds represented by the general formula (5) are used in the system.

The lower limit of the dielectric anisotropy ($\Delta\varepsilon$) of the compound represented by the general formula (5) in the present invention is -1 in one embodiment, and -0.5 in another embodiment. In still another embodiment, the value is 0, and further in still another embodiment, it is 0.5. In still another embodiment, the value is 1, and further in still another embodiment, it is -0.3. The upper limit of the dielectric anisotropy ($\Delta\varepsilon$) of the compound represented by the general formula (5) in the present invention is +1 in one embodiment, and +0.5 in another embodiment. In still another embodiment, the value is 0, further in still another embodiment, it is -0.5, further in still another embodiment, it is +0.3, and further in still another embodiment, it is -0.7.

The compound represented by the general formula (5) in the present invention is preferably at least one compound selected from the group consisting of the general formulae (V-a) to (V-g).

[Chem. 49]

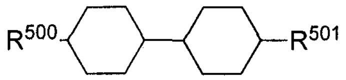
(V-a)

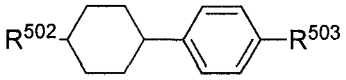
(V-b)

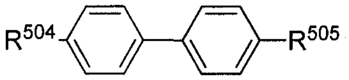
(V-c)

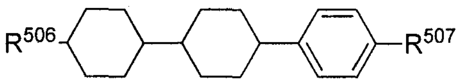
(V-d)

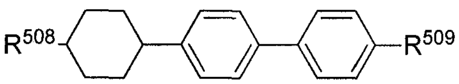
(V-e)

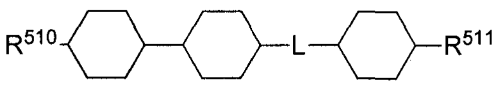
(V-f)

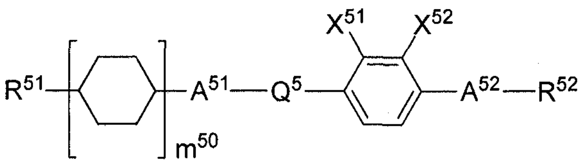
(V-g)

In the above general formulae (V-a) to (V-f), $R^{500}$ to $R^{511}$ each independently represent an alkyl group having 1 to 10 carbon atoms, an alkoxy group having 1 to 10 carbon atoms, or an alkenyl group having 2 to 10 carbon atoms, L represents a divalent linking group, and in the above general formula (V-g), $R^{51}$ and $R^{52}$ each independently represent an alkyl group having 1 to 5 carbon atoms, an alkenyl group having 2 to 5 carbon atoms or an alkoxy group having 1 to 4 carbon atoms, $A^{51}$ and $A^{52}$ each independently represent a 1,4-cyclohexylene group or a 1,4-phenylene group, $Q^5$ represents a single bond or COO-, $X^{51}$ and $X^{52}$ each independently represent a fluorine atom or a hydrogen atom, $m^{50}$ indicates an integer of 0 or 1, and in the general formula (V-g), the conditions to be the same structure as in the above general formulae (V-b) to (V-e) are excluded. Further, in the above general formula (V-g), it is desirable that the case where $X^{51}$ and $X^{52}$ are both fluorine atoms is excluded, like in the compound represented by the general formula (5) in the present invention where the same ring structure does not contain halogens.

In the above general formulae (V-a) to (V-f), $R^{500}$ to $R^{511}$ are preferably each independently an alkyl group having 1 to 10 carbon atoms, an alkenyl group having 2 to 10 carbon atoms or an alkoxy group having 1 to 10 carbon atoms, more preferably an alkyl group having 1 to 5 carbon atoms, an alkenyl group having 2 to 5 carbon atoms or an alkoxy group having 2 to 5 carbon atoms. The divalent linking group (L) in the above general formula (V-f) is preferably a single bond, $-CF_2O-$ or COO-.

Regarding the alkenyl group in the above general formulae (V-a) to (V-g), examples of the alkenyl group are preferably those mentioned hereinabove, and are more preferably any of the above formulae (i) to (iv).

Further, the above $R^{500}$ and $R^{509}$ may be the same or different, but preferably represent different substituents.

In the case where a compound selected from the group of seven compounds represented by the above general formulae (V-a) to (V-g) is used, it is desirable that the composition contains 1 to 10 types of the compounds, more preferably 1 to 8 types of the compounds, even more preferably 1 to 5 types of the compounds, still more preferably 2 to 4 types of the compounds. In this case, the total content of the compounds represented by the general formula (5) in the polymerizable monomer-containing liquid crystal composition of the present invention is preferably 5 to 50%, more preferably 5 to 40% by mass, even more preferably 5 to 35% by mass, especially preferably 7 to 30% by mass.

The compound represented by the general formula (V-a) in the present invention is preferably a compound selected from the group of compounds represented by the general formula (V-a-1).

[Chem. 50]

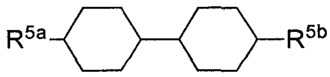

(V-a-1)

In the above general formula (V-a-1), $R^{5a}$ and $R^{5b}$ each independently represent an alkyl group having 1 to 5 carbon atoms.

More specifically, the compound represented by the above general formula (V-a-1) is preferably any of the following compounds.

[Chem. 51]

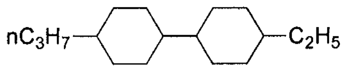

(5.1)

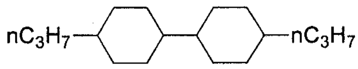

(5.2)

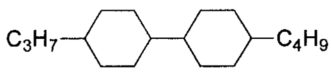

(5.3)

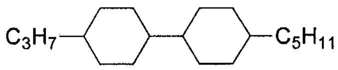

(5.4)

Compounds represented by the general formula (5.1), the general formula (5.3) and the formula (5.4) are more preferred.

For producing a high-response liquid crystal display element having a small viscosity, using a larger amount of the formula (5.1) is preferred, but for producing a liquid crystal display element having a high Tni and stable even at high temperatures, increasing the content of the compound represented by the formula (5.3) or the formula (5.4) is preferred.

The compound represented by the general formula (V-a) in the present invention is preferably a compound selected from the group of compounds represented by the general formula (V-a-2).

[Chem. 52]

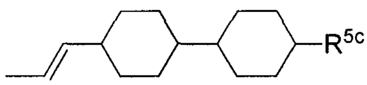

(V-a-2)

In the above general formula (V-a-2), $R^{5c}$ each independently represent an alkyl group having 1 to 5 carbon atoms, an alkenyl group having 2 to 5 carbon atoms, or an alkoxy group having 1 to 5 carbon atoms.

More specifically, the compound represented by the general formula (V-a-2) is preferably any of the following compounds.

[Chem. 53]

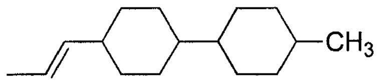
(5.5)

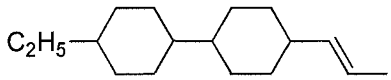
(5.6)

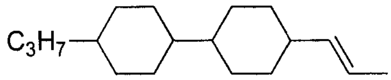
(5.7)

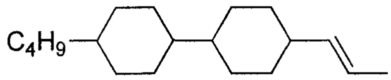
(5.8)

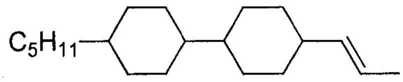
(5.9)

The compound represented by the above formula (5.6) or (5.7) is preferred and the compound represented by the formula (5.7) is more preferred.

Further, the compound represented by the above general formula (V-a) is preferably a compound selected from the group of compounds represented by the general formula (V-a-3).

[Chem. 54]

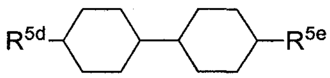
(V-a-3)

In the above general formula (V-a-3), $R^{5d}$ represents an alkyl group having 1 to 5 carbon atoms, and $R^{5e}$ represents an alkoxy group having 1 to 4 carbon atoms.

More specifically, the compound represented by the above general formula (V-a-3) is preferably any of the following compounds.

[Chem. 55]

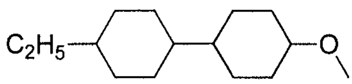
(5.10)

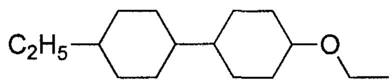
(5.14)

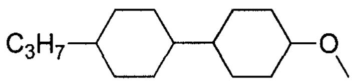
(5.11)

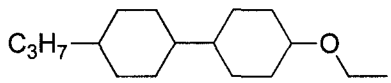
(5.15)

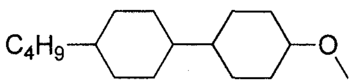
(5.12)

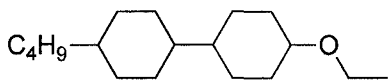
(5.16)

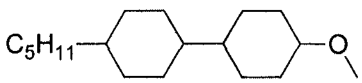
(5.13)

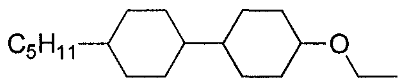
(5.17)

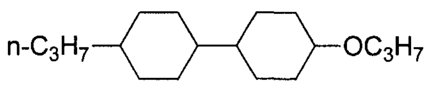
(5.18)

The compound of the above formula (5.11), the compound of the formula (5.13) and the compound of the formula (5.18) are preferred.

The liquid crystal composition of the present invention may further contain a compound of the formula (5.19) having a structure similar to that of the compound represented by the general formula (V-a).

[Chem. 56]

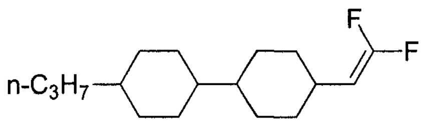

(5.19)

Further, the compound represented by the above general formula (V-a) is preferably a compound selected from the group of compounds represented by the general formula (V-a-4).

[Chem. 57]

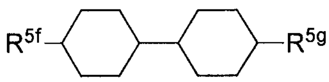

(V-a-4)

In the above general formula (V-a-4), $R^{5f}$ and $R^{5g}$ each independently represent an alkenyl group having 2 to 5 carbon atoms.

Further, the compound represented by the above general formula (V-a-4) is preferably a compound selected from the group of compounds represented by the formulae (5.20) to (5.29), more preferably a compound represented by the formula (5.21), the formula (5.23) or the formula (5.26).

[Chem. 58]

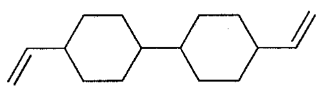

(5.20)

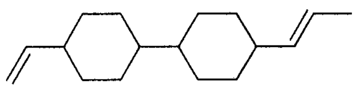

(5.21)

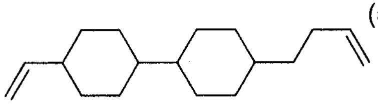

(5.22)

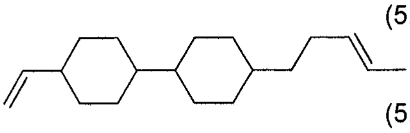

(5.23)

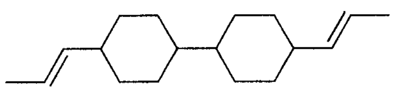

(5.24)

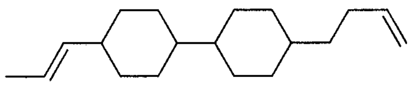

(5.25)

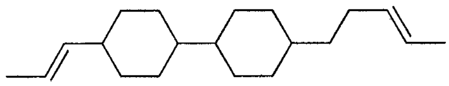

(5.26)

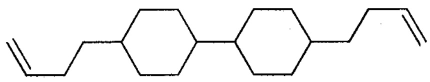

(5.27)

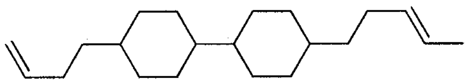

(5.28)

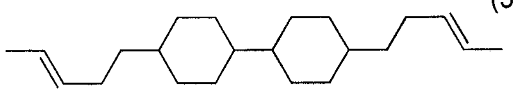

(5.29)

Further, the compound represented by the above general formula (V-b) is preferably a compound selected from the group of compounds represented by the general formula (V-b-1).

[Chem. 59]

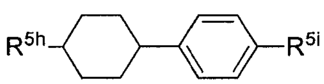

(V-b-1)

In the above general formula (V-b-1), $R^{5h}$ represents an alkyl group having 1 to 5 carbon atoms, an alkenyl group having 2 to 5 carbon atoms or an alkoxy group having 1 to 4 carbon atoms, $R^{5i}$ represents an alkyl group having 1 to 5 carbon atoms, an alkenyl group having 4 to 5 carbon atoms or an alkoxy group having 1 to 4 carbon atoms.

More specifically, the compound represented by the above general formula (V-b-1) is preferably any of the following compounds.

[Chem. 60]

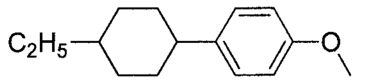
(5.30)

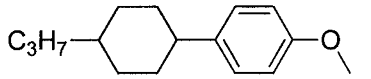
(5.31)

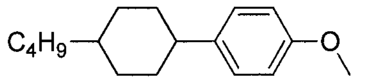
(5.32)

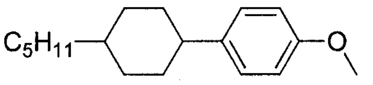
(5.33)

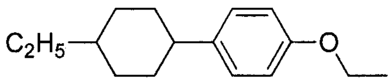
(5.34)

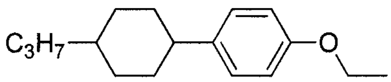
(5.35)

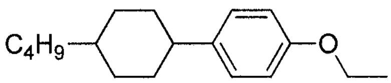
(5.36)

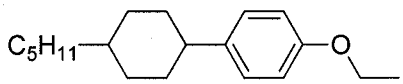
(5.37)

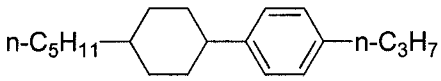
(5.38)

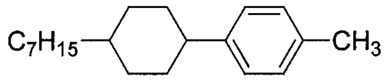
(5.39)

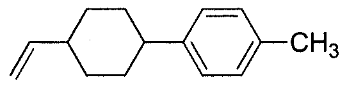
(5.40)

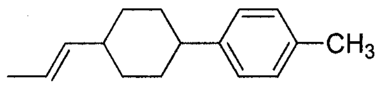
(5.41)

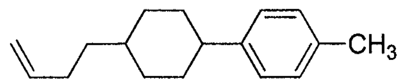
(5.42)

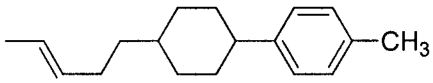
(5.43)

The compounds represented by the formula (5.31) and the formula (5.38) are preferred.

Further, the polymerizable monomer-containing liquid crystal composition of the present invention may contain a compound selected from the group of compounds represented by the general formula (V-b-2) having a structure similar to that of the compound represented by the general formula (V-b-1).

[Chem. 61]

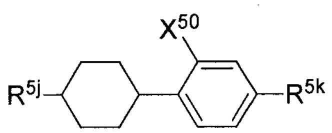
(V-b-2)

In the above general formula (V-b-2), $R^{5j}$ and $R^{5k}$ each independently represent an alkyl group having 1 to 5 carbon atoms, an alkenyl group having 2 to 5 carbon atoms or an alkoxy group having 1 to 4 carbon atoms, $X^{50}$ each independently represents a fluorine atom or a chlorine atom.

Further, the compound represented by the general formula (V-b-2) is preferably a compound represented by the formula (5.44).

[Chem. 62]

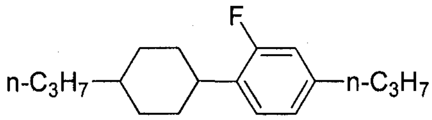

(5.44)

Further, the compound represented by the general formula (V-c) is preferably a compound selected from the group of compounds represented by the general formula (V-c-1).

[Chem. 63]

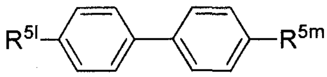

(V-c-1)

In the above general formula (V-c-1), $R^{5l}$ and $R^{5m}$ each independently represent an alkyl group having 1 to 5 carbon atoms, an alkenyl group having 4 to 5 carbon atoms or an alkoxy group having 1 to 4 carbon atoms.

More specifically, the compound represented by the above general formula (V-c-1) is preferably any of the following compounds.

[Chem. 64]

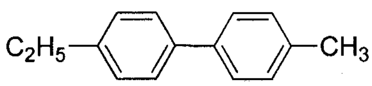

(5.45)

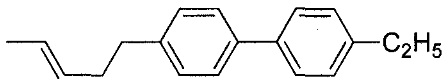

(5.50)

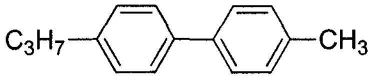

(5.46)

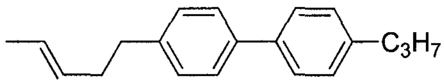

(5.51)

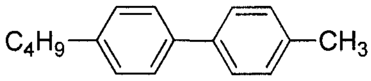

(5.47)

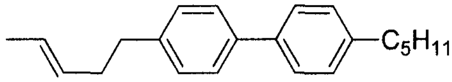

(5.52)

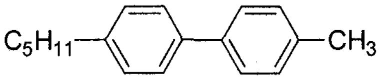

(5.48)

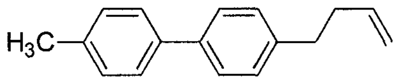

(5.53)

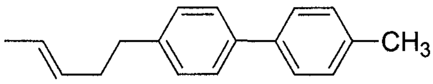

(5.49)

Compounds represented by the formula (5.48), the formula (5.49) and the formula (5.50) are preferred.

Further, the composition may contain a compound selected from the group of compounds represented by the general formula (V-c-2) having a structure similar to that of the compound represented by the general formula (V-c-1).

[Chem. 65]

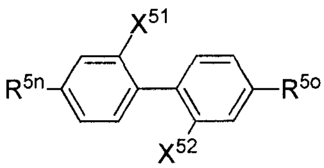

(V-c-2)

In the above general formula (V-c-2), $R^{5n}$ and $R^{5o}$ each independently represent an alkyl group having 1 to 5 carbon atoms, an alkenyl group having 4 to 5 carbon atoms or an alkoxy group having 1 to 4 carbon atoms, and $X^{51}$

and $X^{52}$ each independently represent a fluorine atom or a hydrogen atom, provided that any one of $X^{51}$ and $X^{52}$ is a fluorine atom.

Further, the compound represented by the general formula (V-c-2) is preferably a compound represented by the formula (5.54).

[Chem. 66]

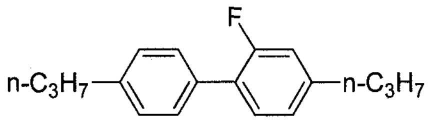

(5.54)

Further, the compound represented by the general formula (V-d) is, for example, preferably a compound selected from the group of compounds represented by the general formula (V-d-1) .

[Chem. 67]

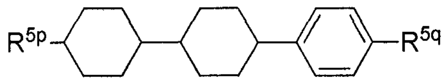

(V-d-1)

In the above general formula (V-d-1), $R^{5p}$ represents an alkyl group having 1 to 5 carbon atoms, and $R^{5q}$ represents an alkyl group having 1 to 5 carbon atoms or an alkoxy group having 1 to 4 carbon atoms.

More specifically, the compound represented by the above general formula (V-d-1) is preferably any of the following compounds.

[Chem. 68]

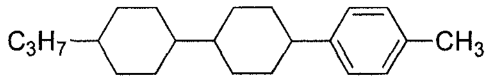

(5.55)

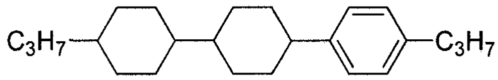

(5.56)

The compound represented by the above general formula (V-d-1) is more preferably a compound represented by the formula (5.55).

Further, the compound represented by the general formula (V-d) is, for example, preferably a compound selected from the group of compounds represented by the general formula (V-d-2).

[Chem. 69]

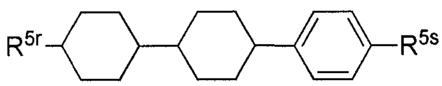

(V-d-2)

In the above general formula (V-d-2), $R^{5r}$ represents an alkyl group having 1 to 5 carbon atoms, and $R^{5s}$ represents an alkoxy group having 1 to 4 carbon atoms.

Further, the compound represented by the general formula (V-d-1) is, for example, preferably any of compounds represented by the formulae (5.57) to (5.60), and among these, the compound represented by the formula (5.60) is more preferred.

[Chem. 70]

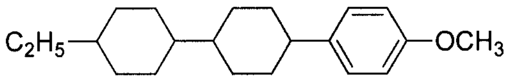

(5.57)

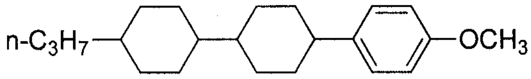

(5.58)

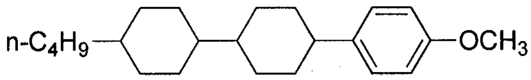

(5.59)

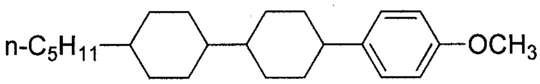

(5.60)

The compound represented by the general formula (V-d) in the present invention is, for example, preferably a compound selected from the group of compounds represented by the general formula (V-d-3).

[Chem. 71]

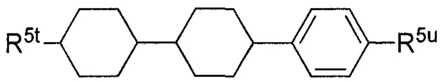

(V-d-3)

(In the above general formula (V-d-3), $R^{5t}$ represents an alkenyl group having 2 to 5 carbon atoms, and $R^{5u}$ represents an alkyl group having 1 to 5 carbon atoms or an alkoxy group having 1 to 4 carbon atoms.)

Further, the compound represented by the general formula (V-d-3) is, for example, preferably any of compounds represented by the formulae (5.61) to (5.63).

[Chem. 72]

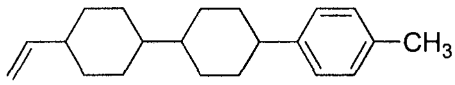

(5.61)

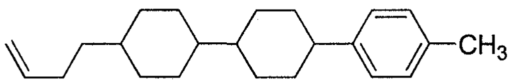

(5.62)

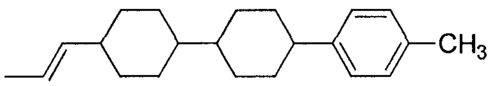

(5.63)

The compound represented by the general formula (V-e) in the present invention is preferably a compound selected from the group of compounds represented by the general formula (V-e-1).

[Chem. 73]

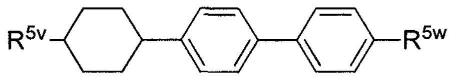

(V-e-1)

In the above general formula (V-e-1), $R^{5v}$ and $R^{5w}$ each independently represent an alkenyl group having 2 to 5 carbon atoms, an alkyl group having 1 to 5 carbon atoms or an alkoxy group having 1 to 4 carbon atoms.

More specifically, the compound represented by the above general formula (V-e-1) is preferably any of the following compounds.

[Chem. 74]

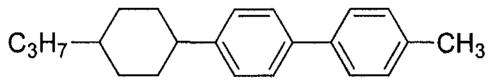

(5.64)

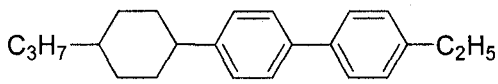

(5.65)

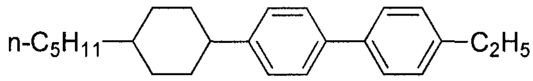

(5.66)

The compound represented by the general formula (V-e) in the present invention is more preferably a compound selected from the group of compounds represented by the general formula (V-e-2).

[Chem. 75]

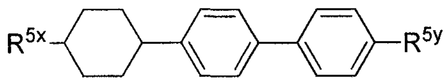

(V-e-2)

In the above general formula (V-e-2), $R^{5x}$ represents an alkenyl group having 2 to 5 carbon atoms, and $R^{5y}$ each independently represents an alkyl group having 1 to 5 carbon atoms or an alkoxy group having 1 to 4 carbon atoms.

The compound represented by the above general formula (V-e-2) is, for example, preferably a compound represented by the formula (5.67) or the formula (5.68).

[Chem. 76]

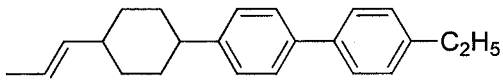

(5.67)

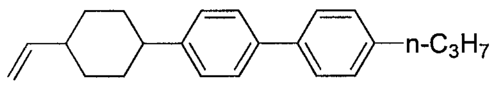

(5.68)

The compound represented by the general formula (V-e) in the present invention is preferably a compound selected from the group of compounds represented by the general formula (V-e-3).

[Chem. 77]

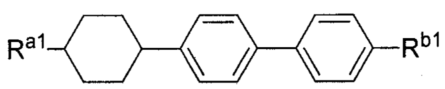

(V-e-3)

In the above general formula (V-e-3), $R^{a1}$ represents an alkyl having 1 to 5 carbon atoms, and $R^{b1}$ represents an alkoxy group having 1 to 4 carbon atoms.

Further, the compound represented by the general formula (V-e-3) is, for example, preferably a compound selected from the group of compounds represented by the formula (5.69) to the formula (5.71), and is especially preferably a compound represented by the formula (5.71).

[Chem. 78]

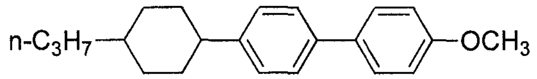

(5.69)

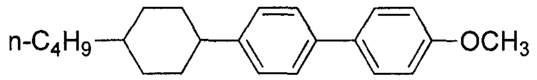

(5.70)

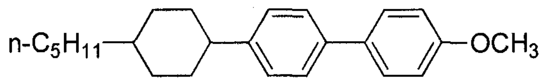

(5.71)

The compound represented by the general formula (V-f) in the present invention is, for example, preferably a compound selected from the group of compounds represented by the general formula (V-f-1).

[Chem. 79]

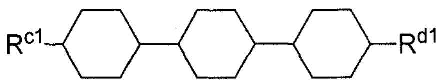

(V-f-1)

(In the above general formula (V-f-1), $R^{c1}$ and $R^{d1}$ each independently represent an alkenyl group having 2 to 5 carbon atoms, an alkyl group having 1 to 5 carbon atoms, or an alkoxy group having 1 to 4 carbon atoms.).
Further, the compound represented by the above general formula (V-f-1) is, for example, preferably a compound of the formula (5.72).

[Chem. 80]

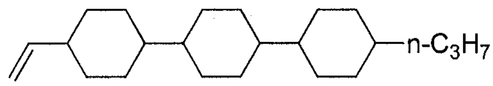

(5.72)

The compound represented by the general formula (V-f) in the present invention is, for example, preferably a compound selected from the group of compounds represented by the general formula (V-f-2).

[Chem. 81]

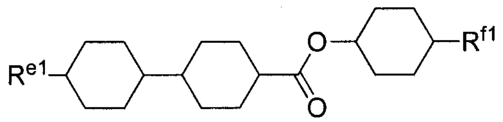

(V-f-2)

In the above general formula (V-f-2), $R^{e1}$ and $R^{f1}$ each independently represent an alkenyl group having 2 to 5 carbon atoms, an alkyl group having 1 to 5 carbon atoms or an alkoxy group having 1 to 4 carbon atoms.
Further, the compound represented by the above general formula (V-f-2) is, for example, preferably a compound represented by any of the formulae (5.73) to (5.77), and is especially preferably a compound represented by the formula (5.74) and/or the formula (5.77).

[Chem. 82]

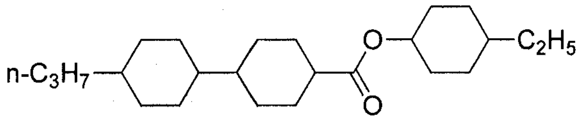

(5.73)

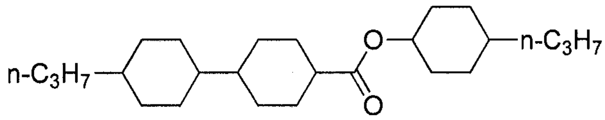

(5.74)

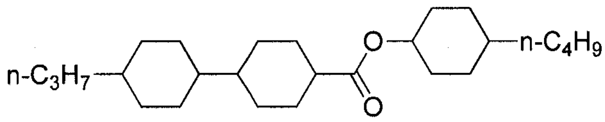

(5.75)

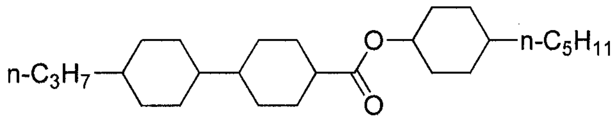

(5.76)

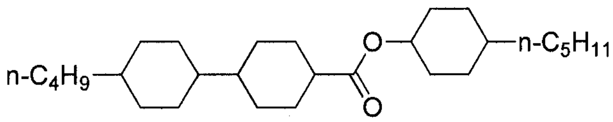

(5.77)

The compound represented by the general formula (V-g) in the present invention is preferably a compound represented by the general formula (V-g-1).

[Chem. 83]

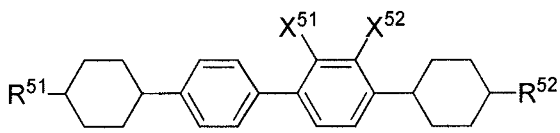

(V-g-1)

In the above general formula (V-g-1), $R^{51}$ and $R^{52}$ each independently represent an alkyl group having 1 to 5 carbon atoms, an alkenyl group having 2 to 5 carbon atoms or an alkoxy group having 1 to 4 carbon atoms, and $X^{51}$ and $X^{52}$ each independently represent a fluorine atom or a hydrogen atom.

The compound represented by the general formula (V-g) in the present invention is preferably a compound represented by the general formula (V-g-2).

[Chem. 84]

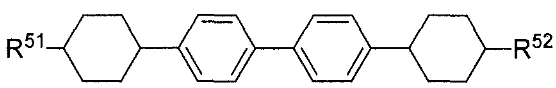

(V-g-2)

In the above general formula (V-g-2), $R^{51}$ and $R^{52}$ each independently represent an alkyl group having 1 to 5 carbon atoms, an alkenyl group having 2 to 5 carbon atoms or an alkoxy group having 1 to 4 carbon atoms.

Further, the compound represented by the above general formula (V-g-2) is preferably a compound of any of the formulae (5.87) to (5.81), and is preferably a compound of the formula (5.79).

[Chem. 85]

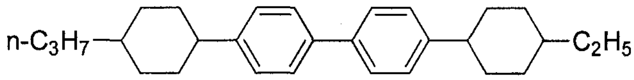

(5.78)

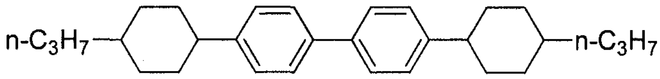

(5.79)

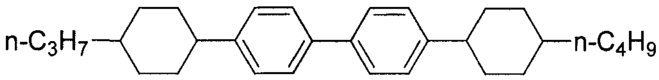

(5.80)

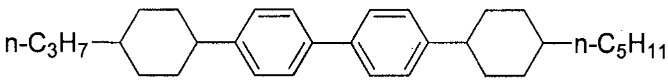

(5.81)

The compound represented by the general formula (V-g) in the present invention is preferably a compound represented by the general formula (V-g-8).

[Chem. 86]

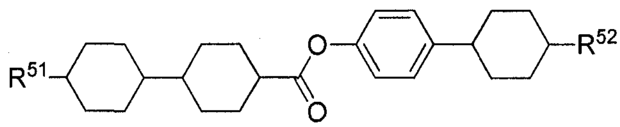

(V-g-8)

In the above general formula (V-3), $R^{51}$ and $R^{52}$ each independently represent an alkyl group having 1 to 5 carbon atoms, an alkenyl group having 2 to 5 carbon atoms or an alkoxy group having 1 to 4 carbon atoms.

Further, the compound represented by the above general formula (V-g-8) is preferably any of compounds of the formulae (5.96) to (5.98).

[Chem. 87]

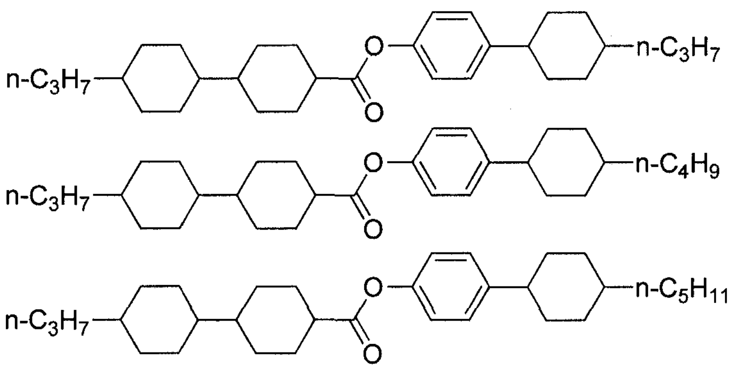

(5.96)

(5.97)

(5.98)

The compound represented by the general formula (V-g) in the present invention is preferably a compound represented by the general formula (V-g-9).

[Chem. 88]

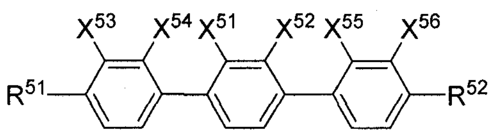

(V-g-9)

In the above general formula (V-g-9), $R^{51}$ and $R^{52}$ each independently represent an alkyl group having 1 to 5 carbon atoms, an alkenyl group having 2 to 5 carbon atoms or an alkoxy group having 1 to 4 carbon atoms, and $X^{51}$ to $X^{56}$ each independently represent a fluorine atom or a hydrogen atom.

In the combination of $X^{51}$ and $X^{52}$, the combination of $X^{53}$ and $X^{54}$, and the combination of $X^{55}$ and $X^{56}$ in the general formula (V-g-9), one substituent is preferably a fluorine atom.

The compound represented by the general formula (V-g) in the present invention is further preferably a compound represented by any of the general formulae (V-g-10) to (V-g-13).

[Chem. 89]

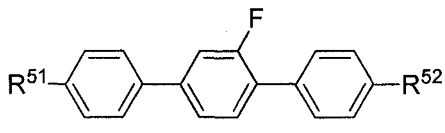
(V-g-10)

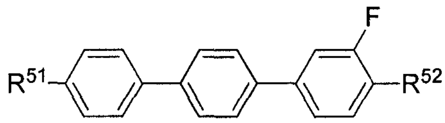
(V-g-11)

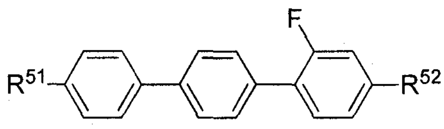
(V-g-12)

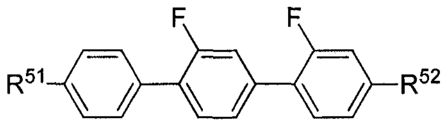
(V-g-13)

In the above general formulae (V-g-10) to (V-g-13), $R^{51}$ and $R^{52}$ each independently represent an alkyl group having 1 to 5 carbon atoms, an alkenyl group having 2 to 5 carbon atoms or an alkoxy group having 1 to 4 carbon atoms.

Further, the compound represented by the above general formula (V-g) is preferably a compound represented by the general formula (V-g-10). Preferred examples of the compound represented by the general formula (V-g-10) are preferably compounds of the following formulae (5.100) to (5.116).

[Chem. 90]

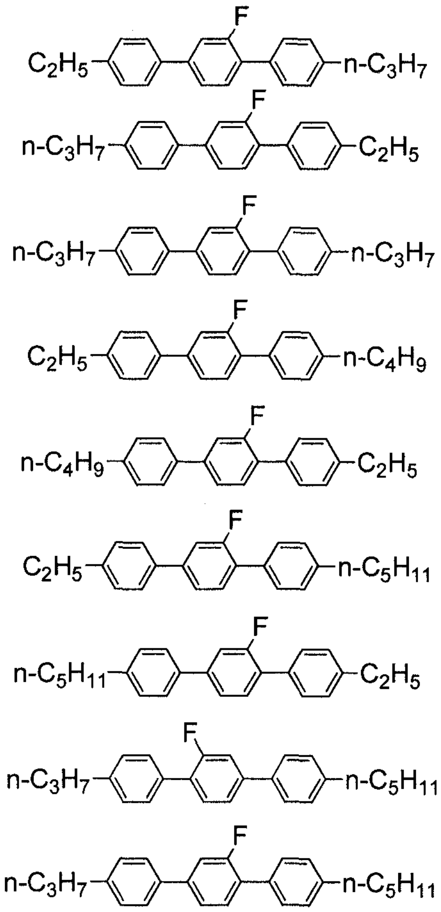

(5.100)

(5.101)

(5.102)

(5.103)

(5.104)

(5.105)

(5.106)

(5.107)

(5.108)

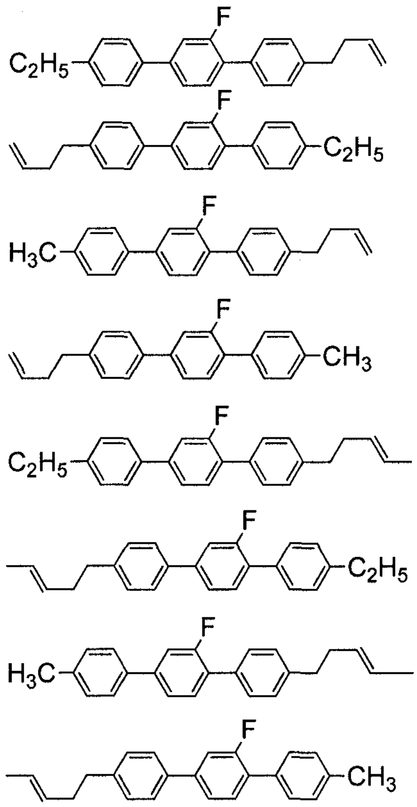

(5.109)

(5.110)

(5.111)

(5.112)

(5.113)

(5.114)

(5.115)

(5.116)

Among the compounds represented by the general formula (5) in the present invention, the general formula (V-a) and the general formula (V-b) as well as the formula (5.1) to the formula (5.116) are preferred, and among the formula (5.1) to (5.116), the compounds represented by the formula (5.1) to the formula (5.4), the formula (5.6) to the formula (5.9), the formula (5.11), the formula (5.18), the formula (5.31), the formula (5.35), the formula (5.37), the formula (5.46), the formula (5.48), the formula (5.49), the formula (5.53), the formula (5.55) to the formula (5.60) and the formula (5.65) are more preferred, and the compounds represented by the formula (5.1), the formula (5.3), the formula (5.7) and the formula (5.31) are even more preferred.

The lower limit of the content of the compound represented by the above general formula (V-a) and the general formula (V-b) is preferably 20% by mass, 25% by mass, 30% by mass, 35% by mass, 40% by mass, 45% by mass and 50% by mass in that order. The upper limit of the content of the compound represented by the above general formula (V-a) and the general formula (V-b) is preferably 70% by mass, 65% by mass, 60% by mass, 55% by mass, 50% by mass, 45% by mass, 40% by mass, 35% by mass and 30% by mass in that order.

An especially preferred embodiment of the compound represented by the general formula (5) in the present invention is a mixture of one to three different compounds of the compounds represented by the general formula (V-a) and the general formula (V-b) as well as the formulae (5.1) to (5.116). In this case, the ratio by mass of all the fourth component in the present invention is especially preferably 32 to 40% by mass relative to the whole liquid crystal composition.

The polymerizable monomer-containing liquid crystal composition of the present invention preferably contains at least one compound selected from the group of compounds represented by the following general formula (6):

[Chem. 91]

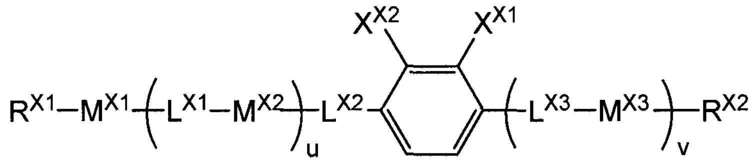

(6)

In the above general formula (6), $R^{X1}$ and $R^{X2}$ each independently represent an alkyl group having 1 to 10 carbon atoms, an alkoxy group having 1 to 10 carbon atoms, or an alkenyl group having 2 to 10 carbon atoms, and one methylene group or two or more non-adjacent methylene groups existing in these groups may be substituted with -O- or -S-, and one or more hydrogen atoms exiting in these groups may be substituted with a chlorine atom and/or a fluorine atom,
u and v each independently indicate 0, 1 or 2, and u+v is 2 or less,
$M^{X1}$, $M^{X2}$ and $M^{X3}$ each independently represent a group selected from the following (a) and (b):

(a) a trans-1,4-cyclohexylene group (one methylene group or two or more non-adjacent methylene groups existing in this group may be substituted with -O- or -S-),
(b) a 1,4-phenylene group (one -CH= or two or more non-adjacent (-CH=)'s existing in this group may be substituted with -N=),
the hydrogen atom contained in the group of the above (a) or the above (b) may be substituted with a group selected from a cyano group, a fluorine atom, a trifluoromethyl group and a trifluoromethoxy group, and plural $M^{X2}$'s and/or $M^{X3}$'s, if any, may be the same or different,
$L^{X1}$, $L^{X2}$ and $L^{X3}$ each independently represent a single bond, -COO-, -OCO-, $-CH_2CH_2-$, $-(CH_2)_4-$, $-OCH_2-$, $-CH_2O-$, $-OCF_2-$, $-CF_2O-$, -CH=CH- or -C=C-, and plural $L^{X1}$'s and/or $L^{X3}$'s, if any, may be the same or different, and
$X^{X1}$ and $X^{X2}$ each independently represent a trifluoromethyl group, a trifluoromethoxy group or a fluorine atom, provided that any one of $X^{X1}$ and $X^{X2}$ represents a fluorine atom,
with the proviso that the compounds represented by the above general formula (1) to the general formula (4) are excluded.

In the case where the cyclic structure bonding thereto is a phenyl group (aromatic), $R^{x1}$ and $R^{x2}$ each are preferably a linear or branched alkyl group having 1 to 10 carbon atoms, a linear or branched alkoxy group having 1 to 10 (or more) carbon atoms, or an alkenyl group having 2 to 10 carbon atoms, more preferably a linear alkyl group having 1 to 5 carbon atoms, a linear alkoxy group having 1 to 4 (or more) carbon atoms, or an alkenyl group having 4 to 5 carbon atoms. On the other hand where the cyclic structure bonding thereto is a cyclohexane, a pyran, a dioxane or the like saturated cyclic structure, $R^{x1}$ and $R^{x2}$ each are preferably a linear or branched alkyl group having 1 to 10 carbon atoms, a linear alkoxy group having 1 to 10 (or more) carbon atoms, or a linear alkenyl group having 2 to 10 carbon atoms, more preferably a linear alkyl group having 1 to 5 carbon atoms, a linear alkoxy group having 1 to 4 (or more) carbon atoms, or a linear alkenyl group having 2 to 5 carbon atoms.
In the case where improving the response speed of a display element is considered to be important, an alkenyl group is preferred in the general formula (6) in the present invention, but where reliability such as a voltage holding ratio or the like is considered to be important, an alkyl group is preferred.
The alkyl group and the alkoxy group in the above general formula (6) are preferably at least one selected from the same groups of the alkyl group, the alkenyl group and the alkoxy group as those in the above-mentioned general formula (5). As preferred examples of the alkenyl group in the above general formula (6), those of the alkenyl group in the above general formula (1) are preferably mentioned, and the above formulae (i) to (iv) are more preferred.
Preferably the compound represented by the general formula (6) does not have a chlorine atom in the molecule thereof for liquid crystal compositions that are required to have chemical stability.
Adding such a compound represented by the general formula (6) to a liquid crystal composition is especially preferred from the viewpoint of the ability to change the driving voltage of liquid crystal display elements.
The content of the compound represented by the general formula (6) in the polymerizable monomer-containing liquid crystal composition of the present invention is suitably selected not only depending on the use mode and the use object of the liquid crystal composition but also in relation to the other components thereof, like that of the above-mentioned indispensable components, and therefore it is desirable that the content of the fourth component contained in the liquid crystal composition individually differs depending on the embodiments of the invention.
The lower limit of the content of the compound represented by the general formula (6) in the polymerizable monomer-containing liquid crystal composition of the present invention is, for example and as one embodiment, preferably

1% by mass relative to the total amount (100% by mass) of the liquid crystal composition of the present invention. In another embodiment of the present invention, the lower limit is preferably 10% by mass. In still another embodiment of the present invention, it is 20% by mass. In still another embodiment of the present invention, it is 30% by mass. In still another embodiment of the present invention, it is 40% by mass. In still another embodiment of the present invention, it is 50% by mass. In still another embodiment of the present invention, it is 55% by mass. In still another embodiment of the present invention, it is 60% by mass. In still another embodiment of the present invention, it is 65% by mass. In still another embodiment of the present invention, it is 70% by mass. In still another embodiment of the present invention, it is 75% by mass. In still another embodiment of the present invention, it is 80% by mass.

The upper limit of the content of the compound represented by the general formula (6) in the polymerizable monomer-containing liquid crystal composition of the present invention is, for example and as one embodiment, preferably 95% by mass relative to the total amount (100% by mass) of the liquid crystal composition of the present invention. In another embodiment of the present invention, the upper limit is preferably 85% by mass. In still another embodiment of the present invention, it is 75% by mass. In still another embodiment of the present invention, it is 65% by mass. In still another embodiment of the present invention, it is 55% by mass. In still another embodiment of the present invention, it is 45% by mass. In still another embodiment of the present invention, it is 35% by mass. In still another embodiment of the present invention, it is 25% by mass.

In the liquid crystal composition of the present invention, the content of the compound represented by the general formula (6) must be suitably controlled in accordance with the necessary properties thereof such as low-temperature solubility, transition temperature, electric reliability, birefringence, process adaptability to be mentioned below, drop marks, burn-in, dielectric anisotropy, etc.

In the case where the viscosity of the liquid crystal composition of the present invention is desired to be kept low and the response speed thereof is desired to be high, the above-mentioned lower limit is preferably high and the upper limit is preferably high. Further, in the case where Tni of the liquid crystal composition of the present invention is desired to be kept high and the composition is desired to have good temperature stability, the lower limit is preferably high and the upper limit is preferably high. In the case where the dielectric anisotropy of the composition is desired to be high for keeping a low driving voltage, the lower limit is preferably low and the upper limit is preferably low.

Regarding the compound represented by the general formula (6) in the present invention, the types of the compounds represented by the general formula (6) to be combined are not specifically limited, and any combination of the compounds can be used in accordance with the necessary properties thereof such as low-temperature solubility, transition temperature, electric reliability, birefringence, etc. Regarding the type of the compound represented by the general formula (6) used in the liquid crystal composition, for example and as one embodiment of the present invention, one type of the compound represented by the general formula (6) is used in the composition. In another embodiment of the present invention, two types of the compounds represented by the general formula (6) are used. In still another embodiment of the present invention, three types of the compounds represented by the general formula (6) are used. Further in still another embodiment of the present invention, four types of the compounds represented by the general formula (6) are used. Further in still another embodiment of the present invention, five types of the compounds represented by the general formula (6) are used. Further in still another embodiment of the present invention, six types of the compounds represented by the general formula (6) are used. Further in still another embodiment of the present invention, seven types of the compounds represented by the general formula (6) are used. Further in still another embodiment of the present invention, eight types of the compounds represented by the general formula (6) are used. Further in still another embodiment of the present invention, nine types of the compounds represented by the general formula (6) are used. Further in still another embodiment of the present invention, ten or more types of the compounds represented by the general formula (6) are used in the system.

The lower limit of the dielectric anisotropy ($\Delta\varepsilon$) of the compound represented by the general formula (6) in the present invention is -20 in one embodiment, and -15 in another embodiment. In still another embodiment, the value is -13, and further in still another embodiment, it is -12. In still another embodiment, the value is -10, and further in still another embodiment, it is -8. The upper limit of the dielectric anisotropy ($\Delta\varepsilon$) of the compound represented by the general formula (6) in the present invention is 0 in one embodiment, and -1 in another embodiment. In still another embodiment, the value is -2, further in still another embodiment, it is -3, further in still another embodiment, it is -4, and further in still another embodiment, it is -5.

At least one compound selected from the group consisting of the general formula (VI-a), the general formula (VI-b), the general formula (VI-c) and the general formula (VI-d) to be mentioned below:

[Chem. 92]

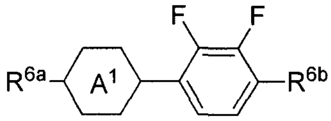
(VI-a)

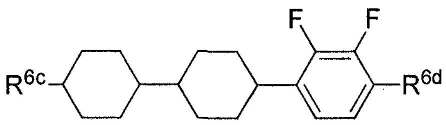
( VI-b )

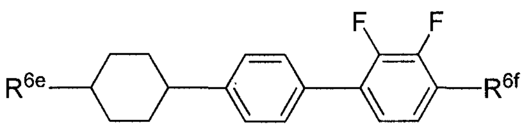
(VI-c)

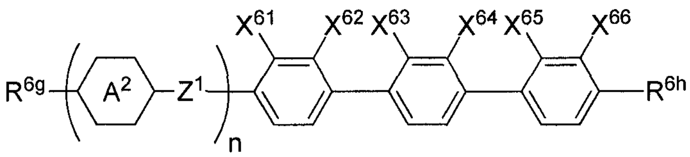
(VI-d)

is preferable as the compound represented by the general formula (6) in the present invention.

The compounds represented by the above general formulae (VI-a) to (VI-d) are described in detail hereinunder.

The compound represented by the general formula (6) in the present invention is preferably a compound represented by the general formula (VI-a).

[Chem. 93]

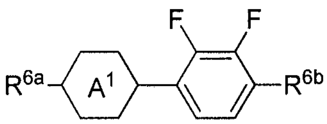
(VI-a)

In the above general formula (VI-a), $R^{6a}$ and $R^{6b}$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, and one or more hydrogen atoms in the alkyl group, the alkenyl group, the alkoxy group and/or the alkenyloxy group may be substituted with a fluorine atom, and the methylene group in the alkyl group, the alkenyl group, the alkoxy group and/or the alkenyloxy group may be substituted with an oxygen atom so far as oxygen atoms do not bond continuously, and may be substituted with a carbonyl group so far as carbonyl groups do not bond continuously, and

$A^1$ represents a 1,4-cyclohexylene group, a 1,4-phenylene group or a tetrahydropyrane-2,5-diyl group, and when $A^1$ represents a 1,4-phenylene group, one or more hydrogen atoms in the 1,4-phenylene group may be substituted with a fluorine atom.

In the above general formula (VI-a), $R^{6a}$ is preferably an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably an alkyl group having 1 to 8 carbon atoms or an alkenyl group having 2 to 8 carbon atoms, even more preferably an alkyl group having 1 to 8 carbon atoms, and further more preferably an alkyl group having 3 to 5 carbon atoms.

In the above general formula (VI-a), $R^{6b}$ is preferably an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably an alkyl group having 1 to 8 carbon atoms or an alkenyl group having 2 to 8 carbon atoms, even more preferably an alkyl group having 3 to 5 carbon atoms or an alkoxy group having 2 to 4 carbon atoms, and further more preferably an alkyl group having 3 or 5 carbon atoms or an alkoxy group having 2 or 4 carbon atoms.

In the general formula (VI-a), $A^1$ represents a 1,4-cyclohexylene group, a 1,4-phenylene group or a tetrahydropyrane-2,5-diyl group, and when $A^1$ is a 1,4-phenylene group, one or more hydrogen atoms in the 1,4-phenylene group may be substituted with a fluorine atom, but $A^1$ is preferably a 1,4-cyclohexylene group or a 1,4-phenylene group. More specifically, in the liquid crystal element and the liquid crystal display produced using the liquid crystal composition of the present invention, when the response speed is considered to be important, $A^1$ is preferably a 1,4-phenylene group, but when the operation temperature range is considered to be important, that is, the element and the display require a high operation temperature range (high $T_{ni}$), $A^1$ is preferably a 1,4-cyclohexylene group. In the case where $A^1$ is a 1,4-phenylene group, one or more hydrogen atoms in the benzene ring may be substituted with a fluorine atom, but preferably the group is unsubstituted or mono-substituted or di-substituted. More preferably, the group is unsubstituted. As the di-substituted group, a 2,3-difluoro-1,4-phenylene group is preferred.

Specifically, the compound represented by the above general formula (VI-a) is preferably a compound selected from the group of the following general formula (VI-a-1) and/or the general formula (VI-b-1).

[Chem. 94]

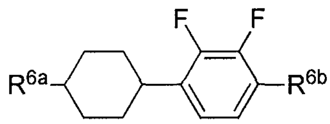

(VI-a-1)

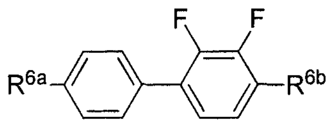

(VI-b-1)

In the above general formula (VI-a-1) and/or the general formula (VI-b-1), $R^{6a}$ and $R^{6b}$ each independently represent an alkyl group having 1 to 5 carbon atoms, an alkenyl group having 2 to 5 carbon atoms, an alkoxy group having 1 to 8 carbon atoms, or an alkenyloxy group having 2 to 8 carbon atoms, and one or more hydrogen atoms in the alkyl group, the alkenyl group, the alkoxy group and/or the alkenyloxy group may be substituted with a fluorine atom, and the methylene group in the alkyl group, the alkenyl group, the alkoxy group and/or the alkenyloxy group may be substituted with an oxygen atom so far as oxygen atoms do not bond continuously, and may be substituted with a carbonyl group so far as carbonyl groups do not bond continuously.

More preferably, $R^{6a}$ and $R^{6b}$ each independently represent an alkyl group having 1 to 5 carbon atoms, an alkenyl group having 2 to 5 carbon atoms, an alkoxy group having 1 to 5 carbon atoms, or an alkenyloxy group having 2 to 5 carbon atoms, and in the case where $R^{6a}$ and $R^{6b}$ each are an alkenyl group, the carbon number thereof is preferably 4 to 5.

Specifically, the compound represented by the general formula (VI) in the present invention is preferably a compound represented by any of the following formulae (6.1) to (6.12).

[Chem. 95]

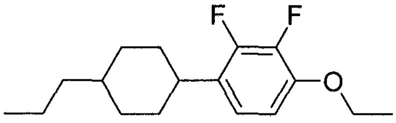
(6.1)

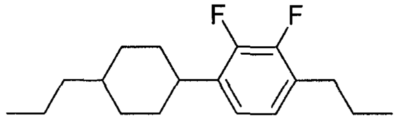
(6.7)

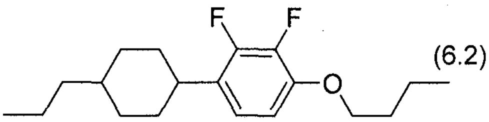
(6.2)

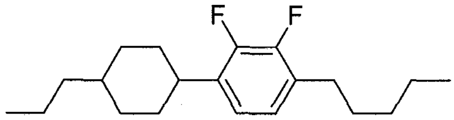
(6.8)

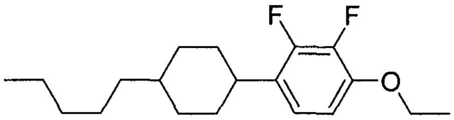
(6.3)

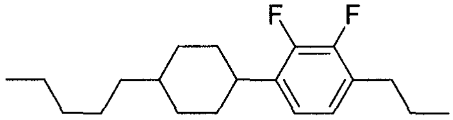
(6.9)

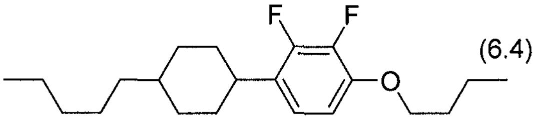
(6.4)

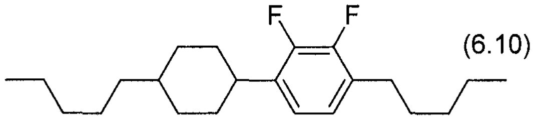
(6.10)

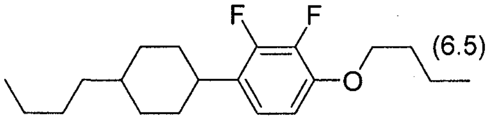
(6.5)

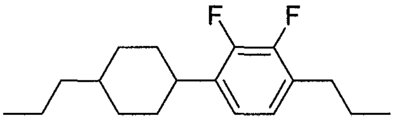
(6.11)

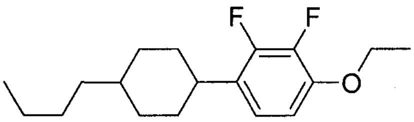
(6.6)

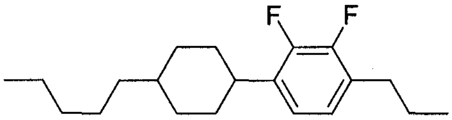
(6.12)

The formulae (6.1) to (6.6) are more preferred, the compounds represented by the formula (6.1), the formula (6.3), the formula (6.5) and the formula (6.6) are even more preferred, and the compounds represented by the formula (6.1), the formula (6.3) and the formula (6.5) are especially preferred.

More specifically, in the case where the refractive index anisotropy Δn necessary for the liquid crystal composition of the present invention is relatively low (approximately 0.09 to less than 0.1), the compound represented by the formula (6.1) and the formula (6.3) is most preferred, and in the case where the value of the refractive index anisotropy Δn is relatively high (approximately 0.09 to more than 0.1), the compound represented by the formula (6.5) is most preferred. In a range of the value of the refractive index anisotropy Δn of 0.09 or more and 0.1 or less, any compound of the formula (6.1), the formula (6.3) or the formula (6.5) may be used.

In the case where the compound represented by the general formula (VI-a) in the present invention has an alkenyl group, specifically, a compound selected from the group of the following formulae (6.22) to (6.27) is preferred:

[Chem. 96]

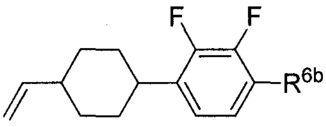 (6.22) 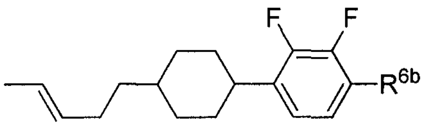 (6.25)

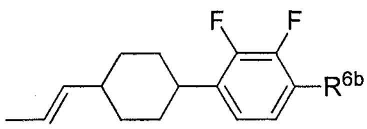 (6.23) 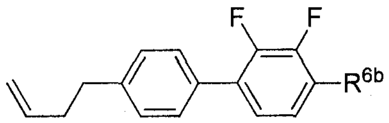 (6.26)

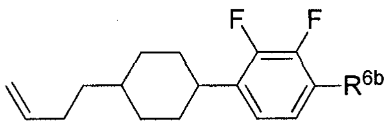 (6.24) 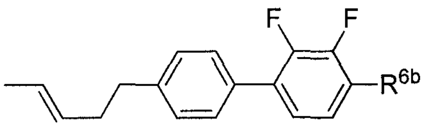 (6.27)

In the above formulae, $R^{6b}$ each independently represent an alkyl group having 1 to 5 carbon atoms, an alkenyl group having 4 to 5 carbon atoms, or an alkoxy group having 1 to 4 carbon atoms.

The compound represented by the general formula (6) in the present invention is preferably a compound selected from the group represented by the general formula (VI-b):

[Chem. 97]

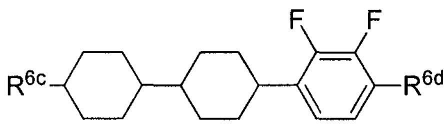 ( VI-b )

In the above general formula (VI-b), $R^{6c}$ and $R^{6d}$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, and one or more hydrogen atoms in the alkyl group, the alkenyl group, the alkoxy group and/or the alkenyloxy group may be substituted with a fluorine atom, and the methylene group in the alkyl group, the alkenyl group, the alkoxy group and/or the alkenyloxy group may be substituted with an oxygen atom so far as oxygen atoms do not bond continuously, and may be substituted with a carbonyl group so far as carbonyl groups do not bond continuously.

In the case where the liquid crystal composition of the present invention contains a compound represented by the general formula (4) as the fourth component and where the compound represented by the general formula (VI-b) and the compound represented by the general formula (4) are the same, preferably the compound represented by the above general formula (VI-b) is not contained in the sixth component.

In the above general formula (VI-b), $R^{6c}$ is preferably an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably an alkyl group having 1 to 8 carbon atoms or an alkenyl group having 2 to 8 carbon atoms, even more preferably an alkyl group having 1 to 8 carbon atoms, and further more preferably an alkyl group having 3 to 5 carbon atoms.

In the above general formula (VI-b), $R^{6d}$ is preferably an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably an alkyl group having 1 to 8 carbon atoms or an alkoxy group having 1 to 8 carbon atoms, even more preferably an alkyl group having 3 to 5 carbon atoms or an alkoxy group having 2 to 4 carbon atoms, and further more preferably an alkyl group having 3 or 5 carbon atoms or an alkoxy group having 2 or 4 carbon atoms.

Specifically, the compound represented by the general formula (VI-b) is preferably a compound of the following formulae (6.28) to (6.34).

[Chem. 98]

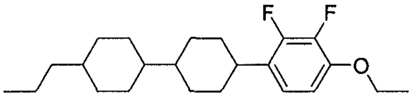

(6.28)

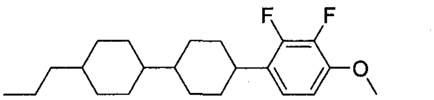

(6.29)

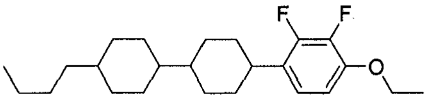

(6.30)

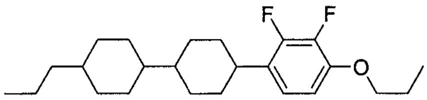

(6.31)

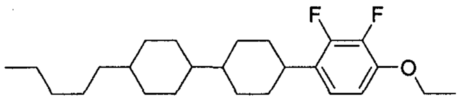

(6.32)

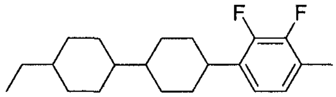

(6.33)

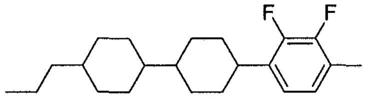

(6.33)

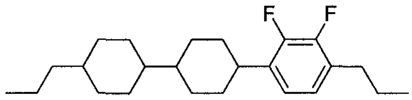

(6.33)

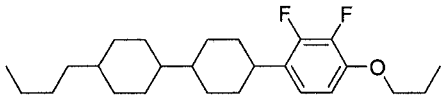

(6.34)

The compounds represented by the formulae (6.28) to (6.32) are more preferred, the compounds represented by the formulae (6.28) to (6.31) are even more preferred, and the compounds represented by the formula (6.28) and the formula (6.30) are especially preferred.

In the case where the compound represented by the general formula (VI-b) in the present invention has an alkenyl group, specifically, compounds of the following formulae (6.34) to (6.37) are preferred.

[Chem. 99]

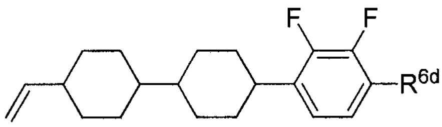

(6.34)

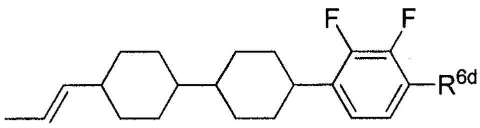

(6.35)

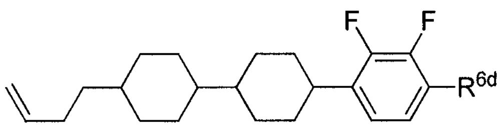

(6.36)

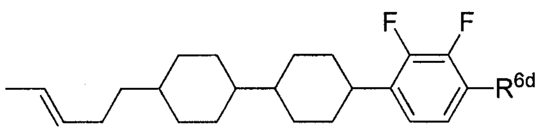

(6.37)

(In the above formulae, $R^{6d}$ represents an alkyl group having 1 to 5 carbon atoms, an alkenyl group having 4 to 5 carbon atoms or an alkoxy group having 1 to 4 carbon atoms.)

The compound represented by the general formula (6) in the present invention is preferably a compound represented by the general formula (VI-c).

[Chem. 100]

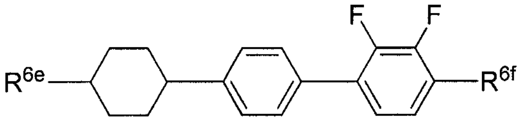

(VI-c)

In the general formula (VI-c), $R^{6e}$ and $R^{6f}$ each independently represent an alkyl group having 1 to 15 carbon atoms, an alkenyl group having 2 to 15 carbon atoms or an alkoxy group having 1 to 15 carbon atoms.

In the compound represented by the above general formula (VI-c), more preferably, $R^{6e}$ is an alkyl group having 1 to 10 carbon atoms and $R^{6f}$ is an alkoxy group having 1 to 10 carbon atoms, and even more preferably $R^{6e}$ is an alkyl group having 1 to 5 carbon atoms and $R^{6f}$ is an alkoxy group having 1 to 5 carbon atoms.

A compound selected from the group of the following formulae (6.38) to (6.43):

[Chem. 101]

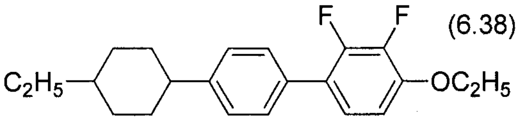

(6.38)

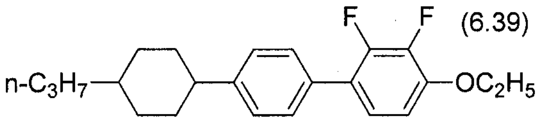

(6.39)

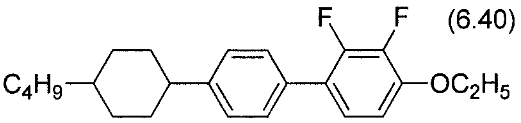

(6.40)

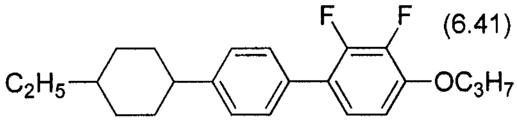

(6.41)

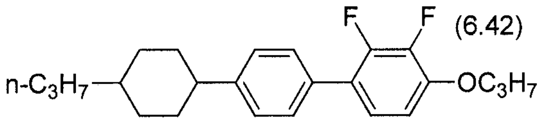

(6.42)

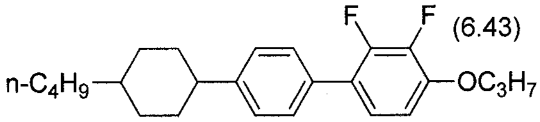

(6.43)

is preferable as the compound represented by the general formula (VI-c) in the present invention.

The compound represented by the general formula (6) in the present invention is preferably a compound represented by the general formula (VI-d).

[Chem. 102]

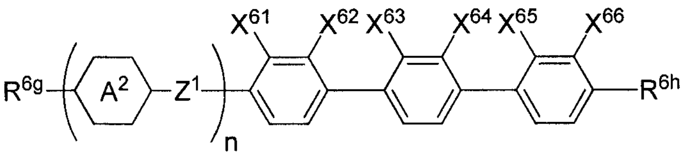

(VI-d)

(In the above general formula (VI-d), $R^{6g}$ and $R^{6h}$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, and one or more hydrogen atoms in the alkyl group, the alkenyl group, the alkoxy group and/or the alkenyloxy group may be substituted with a fluorine atom, and the methylene group in the alkyl group, the alkenyl group, the alkoxy group and/or the alkenyloxy group may be substituted with an oxygen atom so far as oxygen atoms do not bond continuously, and may be substituted with a carbonyl group so far as carbonyl groups do not bond continuously,

$A^2$ represents a 1, 4-cyclohexylene group, a 1,4-phenylene group or a tetrahydropyrane-2,5-diyl group, and when $A^2$ is a 1,4-phenylene group, one or more hydrogen atoms in the 1,4-phenylene group may be substituted with a fluorine atom,

$Z^1$ represents a single bond, $-OCH_2-$, $-OCF_2-$, $-CH_2O-$, or $CF_2O-$,

n indicates 0 or 1, and

$X^{61}$ to $X^{66}$ each independently represent a hydrogen atom or a fluorine atom, provided that at least two of $X^{61}$ to $X^{66}$ are fluorine atoms.)

The 1,4-cyclohexyl group in the present application is preferably a trans-1,4-cyclohexyl group.

In the case where the liquid crystal composition of the present invention contains a compound represented by the general formula (2) as the second component and where the compound represented by the above general formula (VI-d) is the same as the compound represented by the above general formula (2), preferably, the compound represented by the above general formula (VI-d) is not contained in the sixth component.

In the above general formula (VI-d), $R^{6g}$ preferably represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably an alkyl group having 1 to 8 carbon atoms or an alkenyl group having 2 to 8 carbon atoms, even more preferably an alkyl group having 1 to 8 carbon atoms, and further more preferably an alkyl group having 3 to 5 carbon atoms.

In the above general formula (VI-d), $R^{6h}$ preferably represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably an alkyl group having 1 to 8 carbon atoms or an alkoxy group having 1 to 8 carbon atoms, even more preferably an alkyl group having 3 to 5 carbon atoms or an alkoxy group having 2 to 4 carbon atoms, further more preferably an alkyl group having 3 or 5 carbon atoms. Also preferably, $R^e$ and $R^f$ differ from each other in point of the number of carbon atoms.

In the above general formula (VI-d), preferably, $X^{61}$ to $X^{66}$ each are independently a hydrogen atom or a fluorine atom, and preferably, two to five of them are fluorine atoms, more preferably two to four are fluorine atoms, even more preferably, two to three are fluorine atoms, further more preferably two are fluorine atoms, and most preferably two are fluorine atoms.

In this case, when the formula has one fluorine atom, preferably any two of $X^{63}$ to $X^{66}$ are fluorine atoms, more preferably $X^{63}$ or $X^{64}$ is a fluorine atom. When the formula has two fluorine atoms, preferably any two of $X^{63}$ to $X^{66}$ are fluorine atoms, more preferably $X^{63}$ and $X^{64}$ are fluorine atoms or $X^{65}$ and $X^{66}$ are fluorine atoms, and even more preferably $X^{63}$ and $X^{64}$ are fluorine atoms. When the formula has three or more fluorine atoms, preferably at least $X^{63}$ and $X^{64}$ are fluorine atoms or at least $X^{65}$ and $X^{66}$ are fluorine atoms, and even more preferably at least $X^{63}$ and $X^{64}$ are fluorine atoms.

In the above general formula (VI-d), $A^2$ is preferably a 1,4-cyclohexylene group, a 1,4-phenylene group or a tetrahydropyrane-2,5-diyl group, and in the case where response speed is considered to be important for display elements and liquid crystal displays produced using the liquid crystal composition, the group is preferably a 1,4-phenylene group or a tetrahydropyrane-2,5-diyl group, and more preferably a 1,4-phenylene group. In the case where a driving voltage is considered to be important, the group is preferably a 1,4-phenylene group or a tetrahydropyrane-2,5-diyl group, and more preferably a tetrahydropyrane-2,5-diyl group. In the case where an operation temperature range is considered to be important, that is, where a high operation temperature range is needed, the group is preferably a 1,4-cyclohexylene group or a tetrahydropyrane-2,5-diyl group, and more preferably a 1,4-cycloyexylene group. When the group is a 1,4-phenylene group, one or more hydrogen atoms in the benzene ring may be substituted with a fluorine atom, and the group is preferably unsubstituted, monosubstituted or disubstituted, and when it is disubstituted, the group is preferably 2,3-difluorobenzene.

In the above general formula (VI-d), $Z^1$ represents a single bond, $-OCH_2-$, $-OCF_2-$, $-CH_2O-$, or $-CF_2O-$, and is preferably a single bond, $-OCF_2-$ or $-CF_2O-$, more preferably a single bond.

In the above general formula (VI-c), n indicates 0 or 1, and in the case where rapid response is considered to be important, n is preferably 0, but where an operation temperature range is considered to be important, that is, where a high operation temperature range is needed, n is preferably 1.

In the above general formulae (VI-a) to (VI-d), $R^{6a}$ to $R^{6h}$ correspond to $R^{X1}$ and $R^{X2}$ in the general formula (6), and therefore it is needless to say that the alkyl group, the alkenyl group, the alkoxy group and the alkenyloxy group each are preferably linear or branched and more preferably linear.

Specifically, the compound represented by the general formula (VI-d) in the present invention is preferably any of compounds represented by the following general formulae (VI-d-1) to (VI-d-12):

[Chem. 103]

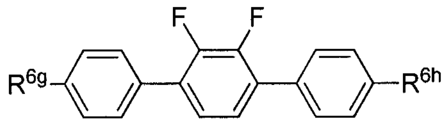
(VI-d-1)

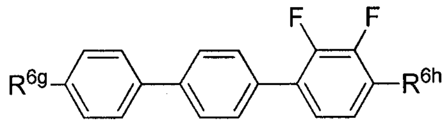
(VI-d-2)

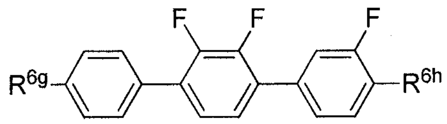
(VI-d-3)

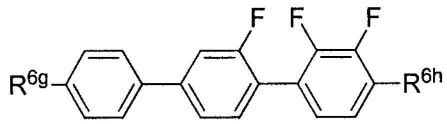
(VI-d-4)

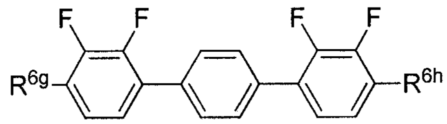
(VI-d-5)

[Chem. 104]

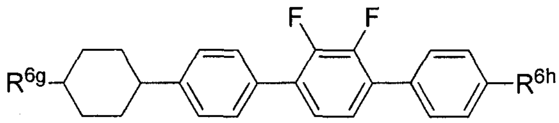
(VI-d-6)

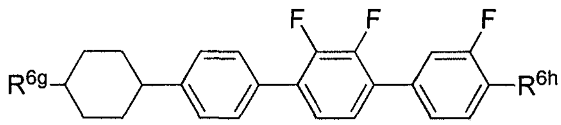
(VI-d-7)

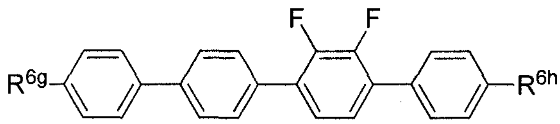
(VI-d-8)

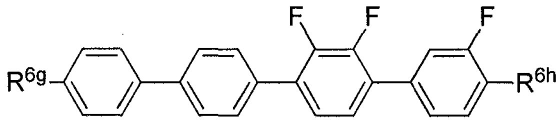
(VI-d-9)

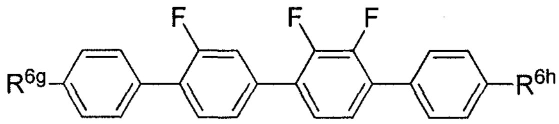
(VI-d-10)

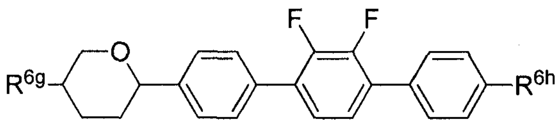
(VI-d-11)

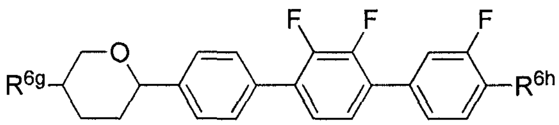
(VI-d-12)

In the above formulae, $R^{6g}$ has the same meaning as that of $R^{6g}$ in the general formula (VI-d), and $R^{6h}$ has the same meaning as that of $R^{6h}$ in the general formula (VI-d).

The general formula (VI-d-1), the general formulae (VI-d-3) to (VI-d-9) and the general formulae (VI-d-12) to (VI-d-15) are more preferred, the general formula (VI-d-1), the general formula (VI-d-3), the general formula (VI-d-5), the general formula (VI-d-6), the general formula (VI-d-9), the general formula (VI-d-12), the general formula (VI-d-13) and the general formula (VI-d-15) are even more preferred, the general formula (VI-d-1), the general formula (VI-d-5) and the general formula (VI-d-6) are especially preferred, and the general formula (VI-d-5) is most preferred.

In the general formula (VI-d) (including the general formulae (VI-d-1) to (VI-d-12)) in the present invention, $R^{6g}$ and $R^{6h}$ each independently represent an alkyl group having 1 to 8 carbon atoms, an alkenyl group having 2 to 8 carbon atoms, an alkoxy group having 1 to 8 carbon atoms or an alkenyloxy group having 2 to 8 carbon atoms, preferably an alkyl group having 1 to 8 carbon atoms or an alkenyloxy group having 2 to 8 carbon atoms, more preferably an alkyl group having 1 to 5 carbon atoms or an alkenyloxy group having 2 to 5 carbon atoms, and these groups are preferably linear. In the case where $R^{6g}$ and $R^{6h}$ are both alkyl groups, preferably, they differ from each other in point of the number of carbon atoms.

More precisely, the compound where $R^{6g}$ is a propyl group and $R^{6h}$ is an ethyl group, or the compound where $R^{6g}$ is a butyl group and $R^{6h}$ is an ethyl group is preferred.

Specifically, the compound represented by the general formula (VI-d-1) in the present invention is preferably any of compounds of the formulae (6.44) to (6.55).

[Chem. 105]

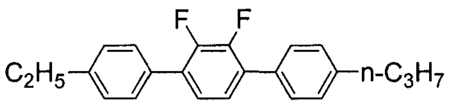 (6.44)

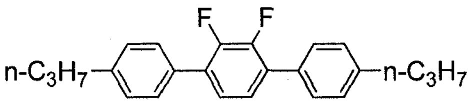 (6.45)

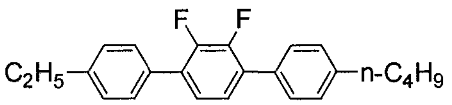 (6.46)

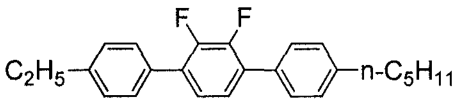 (6.47)

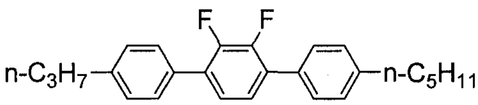 (6.48)

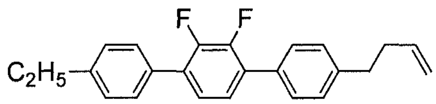 (6.49)

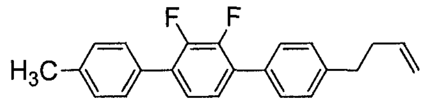 (6.50)

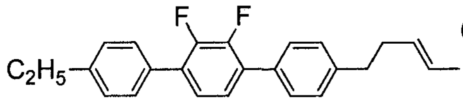 (6.51)

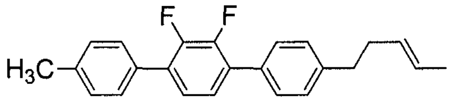 (6.52)

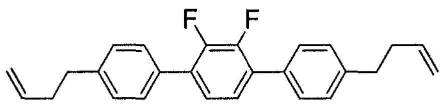 (6.53)

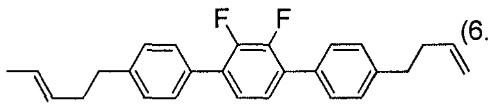 (6.54)

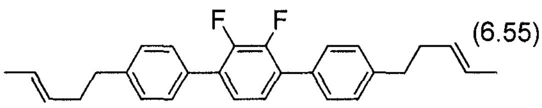 (6.55)

Among the compounds represented by the general formula (6) in the present invention, a compound selected from the group of the compound represented by the general formula (VI-a), the compound represented by the general formula (VI-c) and the compounds represented by the formula (6.1), the formula (6.3), the formula (6.5), the formula (6.28), the formula (6.29), the formula (6.30), the formula (6.31), the formula (6.44) and the formula (6.46) are more preferred, and a compound selected from the group of the compound represented by the general formula (VI-a), the compound represented by the general formula (VI-c) and the compounds represented by the formula (6.1), the formula (6.3), the formula (6.28), the formula (6.29), the formula (6.30), the formula (6.31), the formula (6.44) and the formula (6.46) are even more preferred.

An especially preferred embodiment of the compound represented by the general formula (6) in the present invention is a mixture of 1 to 3 different types of compounds selected from the group consisting of the compound

represented by the general formula (VI-a), the compound represented by the general formula (VI-c) and the compounds represented by the formula (6.1), the formula (6.3), the formula (6.5), the formula (6.28), the formula (6.29), the formula (6.30), the formula (6.31), the formula (6.44) and the formula (6.46). In this case, the mass by ratio of the compound represented by the general formula (6) in the present invention is especially preferably 20 to 32% by mass relative to the whole liquid crystal composition.

The polymerizable monomer-containing liquid crystal composition of the present invention may further contain, as the other component, at least one or more compounds represented by the following general formula (VII-A) and the general formula (VIII-B).

[Chem. 106]

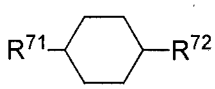

(VII-A)

In the general formula (VII-A), $R^{71}$ and $R^{72}$ each independently represent a linear alkyl group having 1 to 10 carbon atoms, a linear alkoxy group having 1 to 10 carbon atoms, or a linear alkenyl group having 2 to 10 carbon atoms.

[Chem. 107]

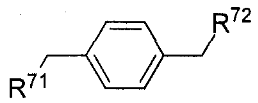

(VII-B)

In the general formula (VII-B), $R^{71}$ and $R^{72}$ each independently represent, like in the above-mentioned general formula (VII-A), a linear alkyl group having 1 to 10 carbon atoms, a linear alkoxy group having 1 to 10 carbon atoms, or a linear alkenyl group having 4 to 10 carbon atoms.

Adding such a compound represented by the general formulas (VII-A) and (VII-B) is especially preferred from the viewpoint of providing a liquid crystal composition having an especially low viscosity.

The content of the compound represented by the general formula (VII-A) and/or the general formula (VII-B) in the polymerizable monomer-containing liquid crystal composition of the present invention is, like that of the above-mentioned indispensable components, suitably selected not only depending on the use mode and the use object of the liquid crystal composition but also in relation to the other components thereof, and therefore it is desirable that the preferred range of the content of the compound represented by the general formula (5) to be contained in the liquid crystal composition individually differs depending on the embodiments of the invention.

In the polymerizable monomer-containing liquid crystal composition of the present invention, the lower limit of the content of the compound represented by the general formula (VII-A) and/or the general formula (VII-B) is, for example and as one embodiment of the present invention, preferably 1% by mass relative to the total amount (100% by mass) of the polymerizable monomer-containing liquid crystal composition of the present invention. In another embodiment of the present invention, the lower limit is preferably 10% by mass. In still another embodiment of the present invention, the lower limit is preferably 20% by mass. In still another embodiment of the present invention, it is preferably 30% by mass. In still another embodiment of the present invention, it is preferably 40% by mass. In still another embodiment of the present invention, it is preferably 50% by mass. In still another embodiment of the present invention, it is preferably 55% by mass. In still another embodiment of the present invention, it is preferably 60% by mass. In still another embodiment of the present invention, it is preferably 65% by mass. In still another embodiment of the present invention, it is preferably 70% by mass. In still another embodiment of the present invention, it is preferably 75% by mass. In still another embodiment of the present invention, it is preferably 80% by mass.

Further, in the polymerizable monomer-containing liquid crystal composition of the present invention, the upper limit of the content of the compound represented by the general formula (VII-A) and/or the general formula (VII-B) is, for example and as one embodiment of the present invention, preferably 95% by mass relative to the total amount (100% by mass) of the polymerizable monomer-containing liquid crystal composition of the present invention. In another embodiment of the present invention, the upper limit is preferably 85% by mass. In still another embodiment of the present invention, the lower limit is preferably 75% by mass. In still another embodiment of the present invention, it is preferably 65% by mass. In still another embodiment of the present invention, it is preferably 55% by mass. In still another embodiment of the present invention, it is preferably 45% by mass. In still another embodiment of the present invention, it is preferably 35% by mass. In still another embodiment of the present invention, it is preferably 25% by mass.

In the liquid crystal composition of the present invention, the content of the compound represented by the general formula (VII-A) or (VII-B) must be suitably controlled in accordance with the necessary properties thereof such as low-temperature solubility, transition temperature, electric reliability, birefringence, process adaptability to be mentioned below, drop marks, burn-in, dielectric anisotropy, etc.

In the case where the viscosity of the liquid crystal composition of the present invention is desired to be kept low and the response speed thereof is desired to be high, the above-mentioned lower limit is preferably high and the upper limit is preferably high. Further, in the case where Tni of the liquid crystal composition of the present invention is desired to be kept high and the composition is desired to have good temperature stability, the lower limit is preferably high and the upper limit is preferably high. In the case where the dielectric anisotropy of the composition is desired to be high for keeping a low driving voltage, the lower limit is preferably low and the upper limit is preferably low.

Regarding the compound represented by the general formula (VII-A) and the general formula (VII-B) in the present invention, the types of the compounds represented by the general formula (VII-A) and the general formula (VII-B) to be combined are not specifically limited, and any combination of the compounds can be used in accordance with the necessary properties thereof such as low-temperature solubility, transition temperature, electric reliability, birefringence, etc. Regarding the type of the compound represented by the general formula (VII-A) or the general formula (VII-B) for use in the liquid crystal composition, for example and as one embodiment of the present invention, one type of the compound represented by the general formula (VII-A) or the general formula (VII-B) is used in the composition. In another embodiment of the present invention, two types of the compounds represented by the general formula (VII-A) and the general formula (VII-B) are used. In still another embodiment of the present invention, three types of the compounds represented by the general formula (VII-A) and the general formula (VII-B) are used. Further in still another embodiment of the present invention, four types of the compounds represented by the general formula (VII-A) and the general formula (VII-B) are used. Further in still another embodiment of the present invention, five types of the compounds represented by the general formula (VII-A) and the general formula (VII-B) are used. Further in still another embodiment of the present invention, six types of the compounds represented by the general formula (VII-A) and the general formula (VII-B) are used. Further in still another embodiment of the present invention, seven types of the compounds represented by the general formula (VII-A) and the general formula (VII-B) are used. Further in still another embodiment of the present invention, eight types of the compounds represented by the general formula (VII-A) and the general formula (VII-B) are used. Further in still another embodiment of the present invention, nine types of the compounds represented by the general formula (VII-A) and the general formula (VII-B) are used. Further in still another embodiment of the present invention, ten or more types of the compounds represented by the general formula (VII-A) and the general formula (VII-B) are used in the system.

The lower limit of the dielectric anisotropy ($\Delta\varepsilon$) of the compound represented by the general formula (VII-A) or the general formula (VII-B) in the present invention is -1 in one embodiment, and -0.9 in another embodiment. In still another embodiment, the value is -0.8, and further in still another embodiment, it is -0.7. In still another embodiment, the value is -0.5, and further in still another embodiment, it is -0.4. On the other hand, the upper limit of the dielectric anisotropy ($\Delta\varepsilon$) of the compound represented by the general formula (VII-A) or the general formula (VII-B) in the present invention is +1 in one embodiment, and +0.9 in another embodiment. In still another embodiment, the value is +0.8, further in still another embodiment, it is +0.7, further in still another embodiment, it is +0. 6, and further in still another embodiment, it is +0. 5.

Specifically, the compound represented by the general formula (VII-A) in the present invention is preferably any of compounds represented by the following formulae (7.1) to (7.60).

[Chem. 108]

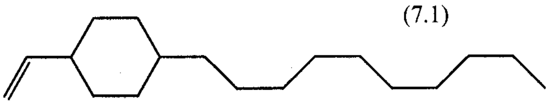
(7.1)

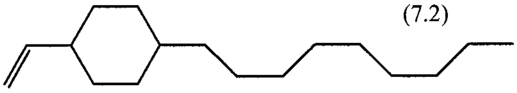
(7.2)

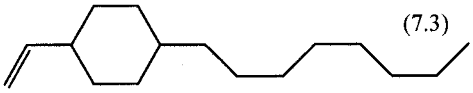
(7.3)

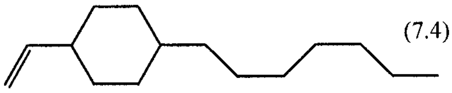
(7.4)

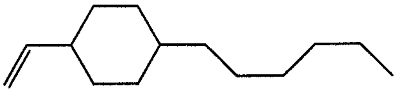
(7.5)

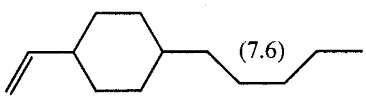
(7.6)

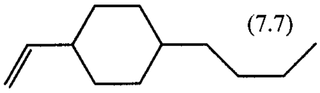
(7.7)

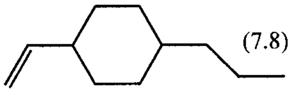
(7.8)

[Chem. 109]

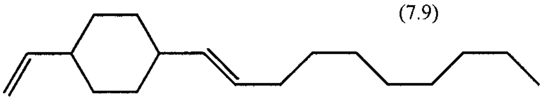
(7.9)

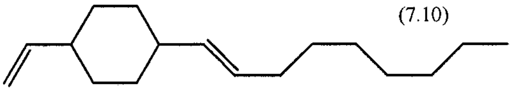
(7.10)

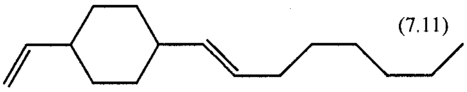
(7.11)

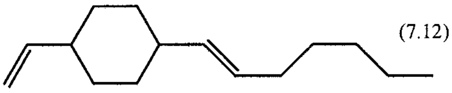
(7.12)

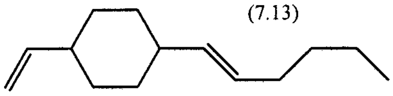
(7.13)

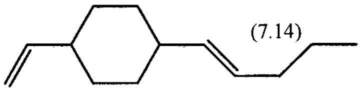
(7.14)

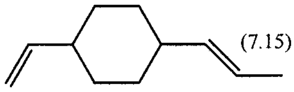
(7.15)

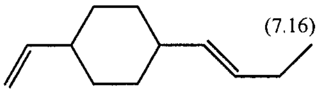
(7.16)

[Chem. 110]

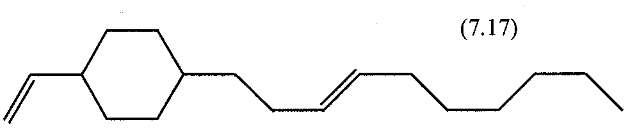
(7.17)

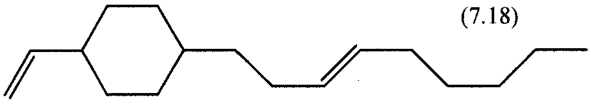
(7.18)

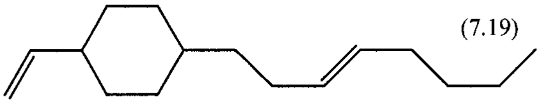
(7.19)

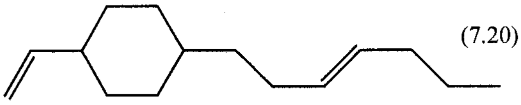
(7.20)

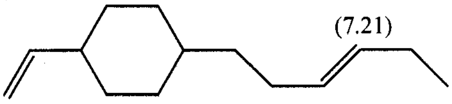
(7.21)

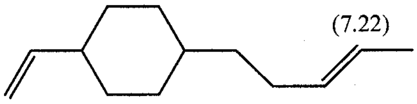
(7.22)

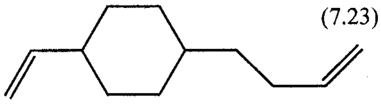
(7.23)

[Chem. 111]

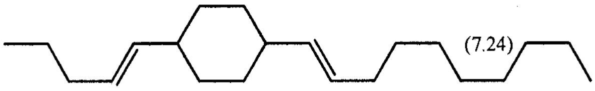
(7.24)

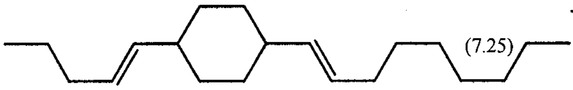
(7.25)

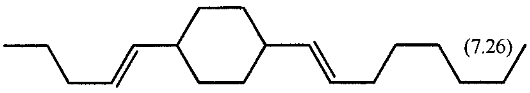
(7.26)

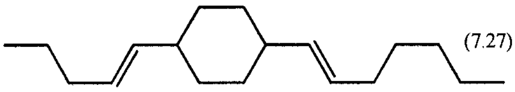
(7.27)

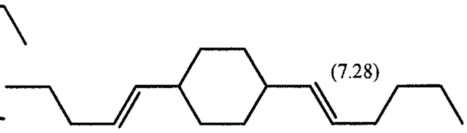
(7.28)

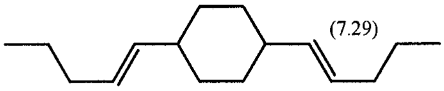
(7.29)

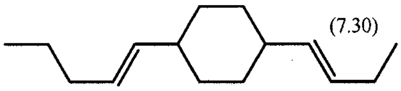
(7.30)

[Chem. 112]

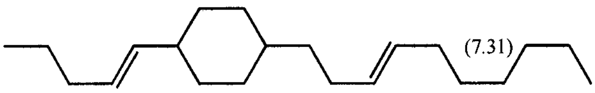
(7.31)

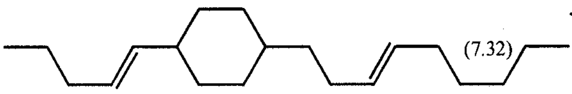
(7.32)

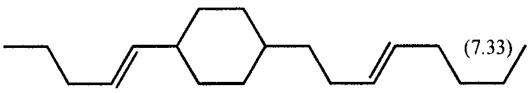
(7.33)

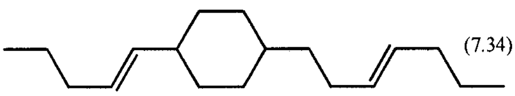
(7.34)

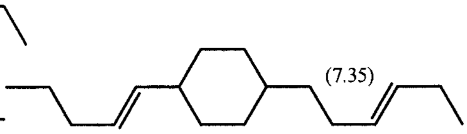
(7.35)

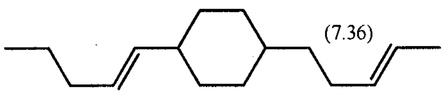
(7.36)

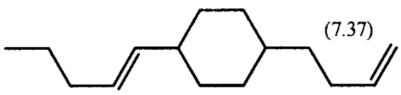
(7.37)

[Chem. 113]

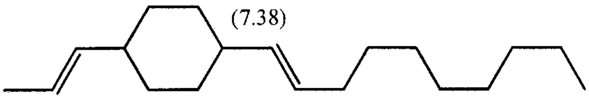
(7.38)

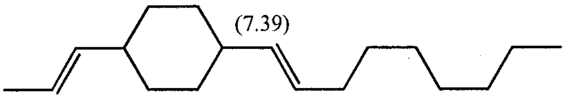
(7.39)

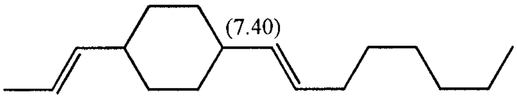
(7.40)

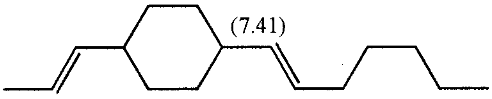
(7.41)

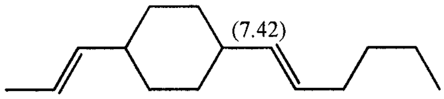
(7.42)

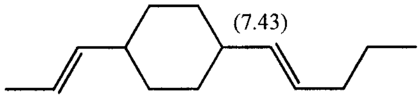
(7.43)

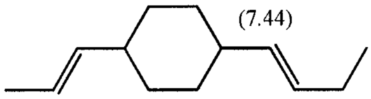
(7.44)

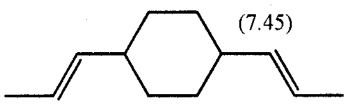
(7.45)

[Chem. 114]

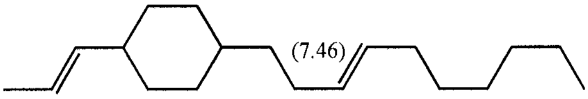
(7.46)

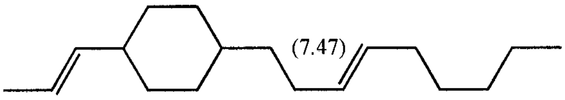
(7.47)

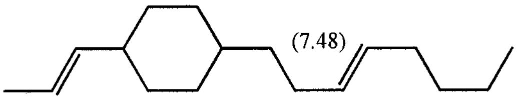
(7.48)

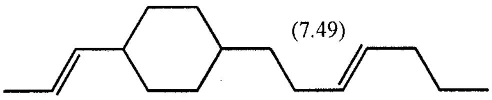
(7.49)

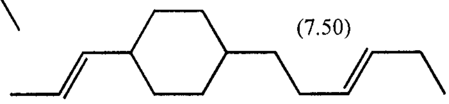
(7.50)

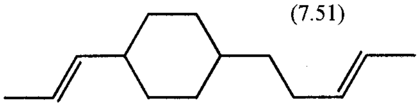
(7.51)

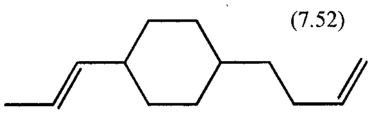
(7.52)

[Chem. 115]

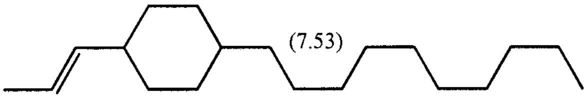
(7.53)

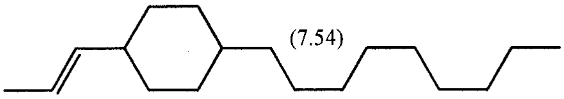
(7.54)

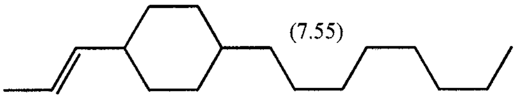
(7.55)

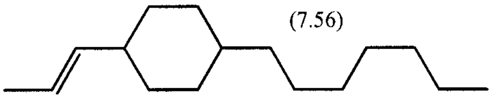
(7.56)

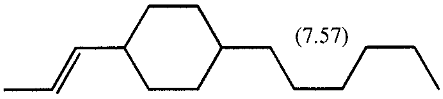
(7.57)

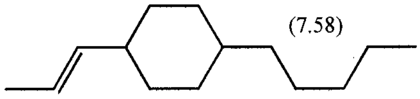
(7.58)

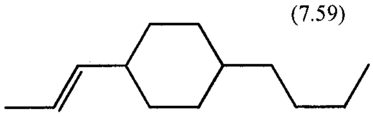
(7.59)

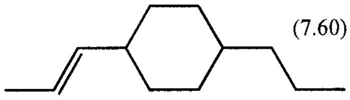
(7.60)

The compound represented by the general formula (VII-B) in the present invention is preferably at least one selected from the group of the formulae (7.71) to (7.85).

[Chem. 116]

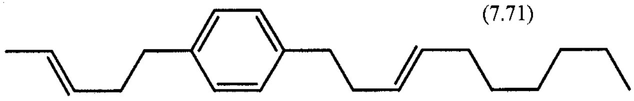
(7.71)

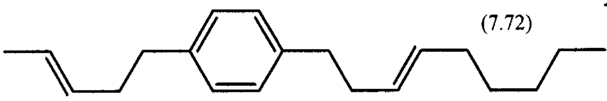
(7.72)

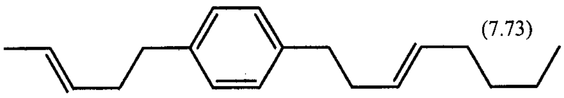
(7.73)

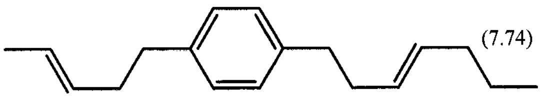
(7.74)

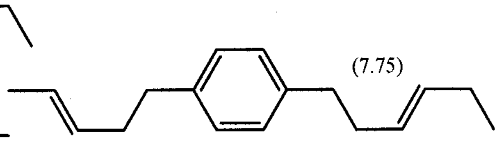
(7.75)

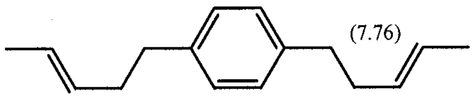
(7.76)

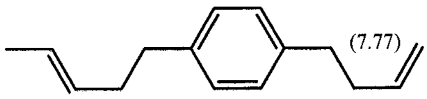
(7.77)

[Chem. 117]

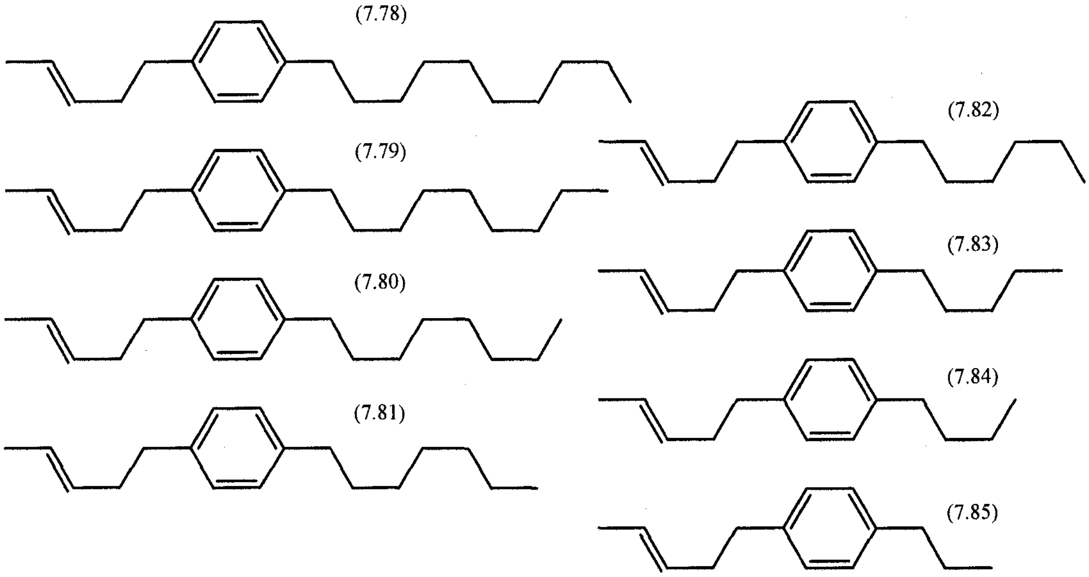

(7.78) (7.79) (7.80) (7.81) (7.82) (7.83) (7.84) (7.85)

Among the compounds represented by the general formulae (VII-A) and (VII-B) in the present invention, the compounds of the formulae (7.71) to (7.85) are more preferred.

The polymerizable monomer-containing liquid crystal composition of the present invention may contain, depending on the use thereof, any other component than the compounds of the above-mentioned general formulae, such as ordinary nematic liquid crystals, smectic liquid crystals, cholesteric liquid crystals, chiral agent, antioxidant, UV absorbent, polymerizable monomers, etc. Among these other components, antioxidant and UV absorbent are not specifically defined, and any ones are usable here.

Even in the absence of a polymerization initiator, the polymerizable monomer-containing liquid crystal composition of the present invention may polymerize, but for promoting polymerization, the composition may further contain a polymerization initiator. The polymerization initiator includes benzoin ethers, benzophenones, acetophenones, benzyl ketals, acylphosphine oxides, etc. For improving storage stability, a stabilizer may be added. The usable stabilizer includes, for example, hydroquinones, hydroqinone monoalkyl ethers, tertiary butyl catechols, pyrogallols, thiophenols, nitro compounds, β-naphthylamines, β-naphthols, nitroso compounds, etc.

Preferably, the polymerizable monomer-containing liquid crystal composition of the present invention does not contain a compound having a structure with oxygen atoms bonding to each other such as a peracid (-CO-OO-) structure or the like in the molecule.

In the case where the reliability and the long-term stability of the liquid crystal composition is considered to be important, it is desirable that the content of a compound having a carbonyl group in the composition is 5% by mass or less relative to the total mass of the composition, more preferably 3% by mass or less, even more preferably 1% by mass or less, and most preferably the composition does not substantially contain the compound.

In the case where stability in UV irradiation is considered to be important, the content of a compound with a chlorine atom substituted therein is preferably 15% by mass or less relative to the total mass of the composition, more preferably 5% by mass or less, and most preferably, the composition does not substantially contain the compound.

It is desirable that the content of a compound where the cyclic structures in the molecule are all 6-membered rings in the composition is large, and preferably, the content of the compound where the cyclic structures in the molecule are all 6-membered rings is 80% by mass or more relative to the total mass of the composition, more preferably 90% by mass or more, even more preferably 95% by mass or more, and it is most desirable that the liquid crystal composition is formed of compounds alone where the cyclic structures in the molecule are all 6-membered rings.

For suppressing degradation by oxidation of the polymerizable monomer-containing liquid crystal composition of the present invention, it is desirable to reduce the content of the compound having a cyclohexenylene group as the cyclic structure therein, and preferably, the content of the compound having a cyclohexenylene group is 10% by mass or less relative to the total mass of the composition, more preferably 5% by mass or less, and even more preferably, the composition does not substantially contain the compound.

In the case where viscosity improvement and Tni improvement are considered to be important, it is desirable to reduce the content of the compound having, in the molecule thereof, a 2-methylbenzene-1,4-diyl group where the hydrogen atom may be substituted with halogen, and preferably, the content of the compound having such a 2-mehtylbenzene-1, 4-diyl group is 10% by mass or less relative to the total mass of the composition, more preferably 5% by

mass or less, and even more preferably, the composition does not substantially contain the compound.

The liquid crystal composition containing a polymerizable monomer of the present invention (hereinafter this may be referred to as the polymerizable monomer-containing liquid crystal composition) is useful for liquid crystal display elements and especially useful for active matrix drive liquid crystal display elements, and can be used in PSA-mode, PSVA-mode, VA-mode, IPS-mode, FFS-mode or ECB-mode liquid crystal display elements.

The polymerizable monomer-containing liquid crystal composition of the present invention can be given alignment performance through polymerization of the polymerizable monomer contained therein via UV irradiation, and is used in a liquid crystal display element in which the amount of the transmitted light is controlled by birefringence of the liquid crystal composition. Regarding liquid crystal display elements, the composition is useful for AM-LCD (active matrix liquid crystal display element), TN (nematic liquid crystal display element), STN-LCD (supertwisted nematic liquid crystal element), OCB-LCD and IPS-LCD (in-plane switching liquid crystal display element), especially useful for AM-LCD, and can be used in transmission-type or reflection-type liquid crystal display elements.

With reference to the liquid crystal display elements and the contents of Figs. 1 to 4 to be described hereinunder, two substrates 2 and 8 for the liquid crystal cell to be used in a liquid crystal display element may be made of a flexible and transparent material such as glass or plastic, but may also be a non-transparent material such as silicon or the like. The transparent substrates 2 and 8 having transparent electrodes (layers) 6 and 14 may be prepared, for example, by sputtering indium-tin-oxide (ITO) on the transparent substrates 2 and 8 such as glass sheets, etc.

The substrates 2 and 8 on which the transparent electrode (layer) or TFT has been formed are combined in such a manner that the transparent electrodes (layers) 6 and 14 could face inside. In this case, the distance between the substrates may be controlled using a spacer (not shown). In this case, it is desirable to control the space in such a manner that the thickness of the light control layer to be formed could be 1 to 100 μm, more preferably 1.5 to 10 μm (see Figs. 1 to 4).

In the case where a polarizer is used, it is desirable to control the product of the refractive index anisotropy $\Delta n$ and the cell thickness d of the liquid crystal so as to realize a maximum contrast. In the case where the element has two polarizers 1 and 9, it is possible to control the polarization axis of each polarizer so as to better the viewing angle and the contrast (see Figs. 1 to 4) . Further, a retardation film may be used for broadening the viewing angle. As the spacer, for example, there are mentioned glass articles, plastic particles, alumina particles, photoresist materials, etc. Subsequently, a sealant of an epoxy-based thermoplastic composition or the like is screen-printed on the substrate in the form provided with a liquid crystal injection mouth, and then the substrates are stuck together and heated to thermally cure the sealant.

For the method for introducing a polymerizable monomer-containing liquid crystal composition into the space for liquid crystal composition to house the liquid crystal composition therein, as formed by sticking the two substrates to face to each other as mentioned above, an ordinary vacuum injection method or ODF method may be employed. However, the vacuum injection method of introducing a polymerizable monomer-containing liquid crystal composition has a problem of forming injection marks though drop marks are not formed, and in the present invention, producing liquid crystal displays using an ODF method is preferred.

As a method for polymerizing a polymerizable monomer in the present invention, a suitable polymerization rate is desired for realizing good alignment performance of liquid crystal, and therefore, a polymerization method according to single, combined or sequential irradiation with active energy rays such as UV rays, electron beams or the like is preferred. In the case where UV rays are used, a polarizing light source may be used, or a non-polarizing light source may be used. In the case where the polymerizable monomer-containing liquid crystal composition is polymerized while sandwiched between two substrates, at least the substrate on the irradiation side must give suitable transparency for active energy rays. In addition, a different method may also be employed, in which, a mask is used in photoirradiation so as to polymerize a specific part alone, and then the conditions of electric field, magnetic field, temperature and the like are changed to change the alignment state in the unpolymerized part, and the composition is further polymerized by additional active energy ray irradiation. In particular, in UV exposure, it is desirable to apply an alternating electric field to the polymerizable monomer-containing liquid crystal composition during UV exposure. The alternating electric field is preferably an alternate current of a frequency of 10 Hz to 10 kHz, more preferably a frequency of 60 Hz to 10 kHz, and the voltage may be selected depending on the desired pretilt angle of the liquid crystal display element. In other words, the pretilt angle of the liquid crystal display element can be controlled by the voltage to be applied. In an MVA-mode liquid crystal display element, the pretilt angle is preferably controlled to be 80 degrees to 89. 9 degrees from the viewpoint of alignment stability and contrast.

The temperature at the time when active energy rays such as UV rays, electron beams or the like are irradiated is preferably within a temperature range in which the liquid crystal composition of the present invention can have a liquid crystal state. Preferably, the polymerization is carried out at a temperature close to room temperature, typically at a temperature of 15 to 35°C. Ametal halide lamp, a high-pressure mercury lamp, an ultrahigh-pressure mercury lamp and the like can be used as a lamp to generate UV rays. Regarding the wavelength of the UV rays to be irradiated, UV rays having a wavelength region not the absorption wavelength region of the liquid crystal composition are preferably irradiated

and, if desired, it is desirable to cut UV rays in irradiation. The intensity of the UV rays to be irradiated is preferably 0.1 $mW/cm^2$ to 100 $mW/cm^2$, more preferably 2 $mW/cm^2$ to 50 $mW/cm^2$. The energy amount of the UV rays to be irradiated may be suitably controlled, but is preferably 10 $mJ/cm^2$ to 500 $mJ/cm^2$, more preferably 100 $mJ/cm^2$ to 200 $mJ/cm^2$. In irradiation with UV rays, the intensity may be changed. The time for UV irradiation may be suitably selected depending on the intensity of the UV rays to be irradiated, but is preferably 10 seconds to 3600 seconds, preferably 10 seconds to 600 seconds.

The liquid crystal composition of the present invention indispensably contains the compounds of the general formula (1) and the general formula (2), and in a more preferred embodiment thereof, the composition contains at least one selected from the group of compounds represented by the general formula (3), the general formula (4), the general formula (5), the general formula (6), the general formula (VII-A) the general formula (VII-B) and the general formula (8). In this case, the content is preferably as described below.

In the polymerizable monomer-containing liquid crystal composition of the present invention containing the compounds represented by the general formula (1) and the general formula (2), the total content of these compounds is preferably 3 to 50% by mass, more preferably 5 to 41% by mass, even more preferably 10 to 35% by mass, still more preferably 11 to 34% by mass, especially preferably 12 to 34% by mass, and most preferably 15 to 34% by mass.

In the polymerizable monomer-containing liquid crystal composition of the present invention containing a polymerizable monomer and the compounds represented by the general formula (1) and the general formula (2), the total content of these compounds is preferably 3.5 to 55% by mass, more preferably 5 to 50% by mass, even more preferably 10 to 48% by mass, still more preferably 15 to 42% by mass, further more preferably 15 to 40% by mass, especially preferably 20 to 40% by mass, and most preferably 22 to 40% by mass.

In the polymerizable monomer-containing liquid crystal composition of the present invention containing a polymerizable monomer and the compounds represented by the general formula (1), the general formula (2) and the general formula (5), the total content of these compounds is preferably 25 to 90% by mass, more preferably 30 to 85% by mass, even more preferably 35 to 80% by mass, still more preferably 40 to 78% by mass, and most preferably 45 to 75% by mass.

In the polymerizable monomer-containing liquid crystal composition of the present invention containing a polymerizable monomer and the compounds represented by the general formula (1), the general formula (2) and the general formula (6), the total content of these compounds is preferably 4 to 70% by mass, more preferably 8 to 65% by mass, even more preferably 10 to 60% by mass, still more preferably 15 to 55% by mass, and most preferably 25 to 45% by mass.

In the polymerizable monomer-containing liquid crystal composition of the present invention containing a polymerizable monomer and the compounds represented by the general formula (1), the general formula (2), the general formula (5) and the general formula (6), the total content of these compounds is preferably 70 to 100% by mass, more preferably 80 to 98% by mass, even more preferably 82 to 95% by mass, still more preferably 85 to 92% by mass, and most preferably 86 to 90% by mass.

In the compounds constituting the liquid crystal composition of the present invention, the proportion of the compound having 2 or more fluorine atoms in one molecule, concretely, the compound of the general formulae (1), (2) and (6) is preferably 40 to 90% by mass of the liquid crystal composition, more preferably 45 to 85% by mass, even more preferably 50 to 80% by mass, and more precisely, in the case where response speed is considered to be important, the proportion is preferably 50% by mass to 60% by mass, but in the case where driving voltage is considered to be important, the proportion is preferably 55 to 80% by mass.

The second aspect of the present invention is a liquid crystal display element using the liquid crystal display composition of the present invention. Fig. 1 is a view schematically showing a configuration of a liquid crystal display element. In Fig. 1, each constituent element is drawn to be spaced from each other conveniently for explanation. Fig. 2 is a plan view of enlarging the region surrounded by the II line of the electrode layer 3 containing a thin-film transistor (also referred to as a thin-film transistor layer 3) formed on the substrate in Fig. 1. Fig. 3 is a cross-sectional view of the liquid crystal display element shown in Fig. 1, as cut in the direction of III-III line in Fig. 2. Fig. 4 is an enlarged view of the thin-film transistor in the region IV in Fig. 3. The liquid crystal display element of the present invention is described below with reference to Figs. 1 to 4.

The configuration of the liquid crystal display element 10 of the present invention has, as shown in Fig. 1, a first substrate 8 provided with a transparent electrode (layer) 6 (also referred to as a common electrode 6) made of a transparent conductive material, a second substrate 2 including a thin-film transistor layer 3 to form a pixel electrode made of a transparent conductive material and a thin-film transistor for controlling the pixel electrode formed for each pixel, and a liquid crystal composition (or a liquid crystal layer 5) sandwiched between the first substrate 8 and the second substrate 2, wherein the alignment of the liquid crystal molecules in the liquid crystal composition in a voltage-free state is nearly perpendicular to the substrates 2 and 8, and a liquid crystal composition of the present invention is used as the liquid crystal composition. As shown in Fig. 1 and Fig. 3, the second substrate 2 and the first substrate 8 may be held between a pair of polarizers 1 and 9. Further, in Fig. 1, a color filer 7 is arranged between the first substrate 8 and

the common electrode 6. Further, a pair of alignment films 4 may be formed on the surfaces of the transparent electrodes (layers) 6 and 3 in such a manner that they could be adjacent to the liquid crystal layer 5 in the present invention and could be in direct contact with the liquid crystal composition constituting the liquid crystal layer 5.

Specifically, the liquid crystal display element 10 of the present invention is so designed that the second polarizer 1, the second substrate 2, the thin-film transistor-containing electrode layer (or also referred to as thin-film transistor layer) 3, the alignment film 4, the liquid crystal composition-containing layer 5, the alignment film 4, the common electrode 6, the color filter 7, the first substrate 8 and the first polarizer 9 are laminated in that order.

As shown in Fig. 2 and Fig. 3, in the thin-film transistor-containing electrode layer 3 formed on the surface of the second substrate 2, a gate wiring 25 for supplying a scanning signal and a data wiring 24 for supplying a display signal cross each other, and in the region surrounded by the plural gate wirings 25 and the plural data wirings 24, a pixel electrode 21 is formed in a matrix sate. As a switch element for supplying a display signal to the pixel electrode 21, a thin-film transistor including a source electrode 26, a drain electrode 23 and a gate electrode 27 is, as connected to the pixel electrode 21, arranged near the cross at which the gate wiring 25 and the data wiring cross each other. Further, in the region surrounded by the plural gate wirings 25 and the plural data wirings 24, a storage capacitor 22 is arranged, which is for storing the display signal supplied thereto via the data wiring 24.

The present invention is favorably used in a liquid crystal display element having a reverse staggered layout thin-film transistor as shown in Fig. 2, and the gate wiring 25 and the data wiring 24 are preferably formed of a metal film, and more preferably, aluminum wirings are used. Further, the gate wiring 25 and the data wiring 24 overlap with each other via a gate insulation film.

Preferably, a black matrix (not shown) is formed in the part corresponding to the thin-film transistor and the storage capacitor 22, from the viewpoint of preventing light leakage. Further, in the drawings, the color filter 7 is arranged on the side opposite to TFT, but may also be arranged on the side of the second substrate as a so-called color filter-on-array configuration.

One preferred embodiment of the thin-film transistor configuration in the liquid crystal display element of the present invention has, for example, as shown in Fig. 3 and Fig. 4, a gate electrode 11 formed on the surface of the substrate 2, a gate insulation layer 12 arranged to cover the gate electrode 11 and to cover nearly the entire surface of the substrate 2, a semiconductor layer 17 formed on the surface of the gate insulation layer 13 to face the gate electrode 11, a protective film 18 arranged to cover a part of the surface of the semiconductor layer 17, a drain electrode 15 arranged to cover one side end part of the protective layer 18 and the semiconductor layer 17 so as to be kept in contact with the gate insulation layer 13 formed on the surface of the substrate 2, source electrodes 19a and 19b arranged to cover the side end part of the protective layer 18 and the semiconductor layer 17 so as to be kept in contact with the gate insulation layer 13 formed on the surface of the substrate 2, a transparent electrode 14 arranged to cover the source electrodes 19a and 19b and to cover nearly the entire surface of the gate insulation layer 13 similar to the gate insulation layer 13, and a protective layer 101 (not shown in Fig. 3) arranged to cover a part of the transparent electrode 14 and the source electrodes 19a and 19b.

Also as shown in Fig. 3 and Fig 4, an anodized film 12 may be formed for the reason of removing the step difference from the gate electrode on the surface of the electrode 11. Further, for reducing the width and the height of Schottky barrier, an ohmic contact layer 16 may be arranged between the semiconductor layer 17 and the drain electrode 15.

As described above, in the process for producing a liquid crystal display element, generation of drop marks is much influenced by the liquid crystal material to be injected, but the influence is inevitable depending on the configuration of the liquid crystal display element. In particular, the color filter 7, the thin-film transistor and others formed inside the liquid crystal display element are, as shown in Fig. 3, separated from the liquid crystal composition by only the members of the thin alignment film 4, the transparent electrodes 6 and 14 and others therein, and consequently, for example, depending on the chemical structure of pigment to be used in the color filter 7 or on the combination of the chemical structure of the color filter resin and the liquid crystal compound having a specific chemical structure, some influence may be made on the generation of drop marks.

In particular, in the case where a reverse staggered layout as described above is used as the thin-film transistor in the liquid crystal display element of the present invention, the drain electrode 15 is formed to cover the gate electrode 11, and therefore the area of the drain electrode 15 tends to increase. In general, the drain electrode is, as an ordinary embodiment thereof, formed of a metal material such as copper, aluminum, chromium, titanium, molybdenum, tantalum or the like, and is processed for passivation treatment. However, for example, as shown in Fig. 3 and Fig. 4, the protective film 18 is generally thin, and the alignment film 4 is also thin, and therefore there is a high possibility that ionic substances could not be blocked out, and accordingly, it has been inevitable to evade generation of drop marks owing to the interaction between the metal material and the liquid crystal composition.

However, in the liquid crystal display element containing the liquid crystal composition of the present invention, for example, from the viewpoint of delicate balance between the members of the liquid crystal display element and the surface free energy or the adsorption energy of the liquid crystal composition of the present invention, it can be considered

that the problem of generation of drop marks could be reduced.

The liquid crystal display element using the liquid crystal composition of the present invention is a useful one that satisfies both high-speed responsibility and display failure suppression, and is especially useful for active matrix drive-type liquid crystal display devices, and is applicable to VA-mode, PSVA-mode, PSA-mode, IPS-mode and ECB-mode devices.

Examples

The present invention is described in detail with reference to Examples given hereinunder, but the scope of the present invention should not be limited to these Examples. "%" in the compositions of the following Examples and Comparative Examples means "% by mass". In Examples, the properties measured and the evaluations are as follows.

(Properties of liquid crystal composition)

Tni: Nematic phase-isotropic liquid phase transition temperature (°C)
Δn: Refractive index anisotropy at 25°C
Aε: Dielectric anisotropy at 25°C
η: Viscosity at 20°C (mPa·s)
γ1: Rotational viscosity at 25°C (mPa·s)
Initial voltage holding ratio (initial VHR): Voltage holding ratio (%) at 343 K under the condition of a frequency of 6 Hz and an applied voltage of 5V.
VHR after heat resistance test: A TEG (test element group) for evaluation of electro-optical properties filled with a liquid crystal composition sample was held in a constant-temperature tank at 130°C for 1 hours, and then VHR thereof was measured under the same condition as that of the above-mentioned VHR measurement method.

(Evaluation of burn-in)

For evaluation of burn-in of a liquid crystal display element, a predetermined fixed pattern was displayed in a display area of the element for an arbitrary test period of 1000 hours, and then a uniform display was shown in the entire area. The test period until the residual image of the fixed pattern reached an unacceptable residual image level was measured.

1) The test time indicates the fixed pattern display time, and when the time is longer, the residual image is suppressed more and the performance is higher.
2) The unacceptable residual image level is a level at which residual image to result in fail in the shipping acceptance/rejection judgment is detected. Based on the level, the tested samples are evaluated visually in the following four ranks.

Example) A longer test time means a better performance.

Sample A: 1,000 hours
Sample B: 500 hours
Sample C: 200 hours
Sample D: 100 hours

The performance level is in an order of A > B > C > D.

(Evaluation of drop marks)

For evaluation of drop marks of a liquid crystal display device, drop marks having emerged out as white in the case of black display in the entire panel area were evaluated visually in the following five ranks.

5: No drop marks (excellent) were seen.

4: A few but slight drop marks were seen but on an acceptable level (good).
3: Some drop marks were seen but on a border line level in acceptance/rejection judgment.
2: Drop marks were seen on an unacceptable level (not good).
1: Drop marks were seen considerably seriously (bad).

(Evaluation of process adaptability)

The process adaptability was evaluated as follows. In an ODF process using a constant volume metering pump, a liquid crystal was dropped down in an amount of 50 pL each, for a total of 100 times in the manner of "0 to 100 times, 101 to 200 times, 201 to 300 times, ... ", and the mass of the liquid crystal for the dropping of 100 times was measured. Based on the times of dropping having reached the level on which the mass fluctuation is not compatible with the ODF process, the process adaptability of the sample was evaluated.
Example) A larger number of dropping times means the possibility of stable dropping for a longer period of time, and means that the sample has better process adaptability.

Sample A: 95,000 times
Sample B: 40,000 times
Sample C: 100,000 times
Sample D: 10,000 times

The performance level is in an order of C > A > B > D.

(Evaluation of low-temperature solubility)

The low-temperature solubility was evaluated as follows. A liquid crystal composition was prepared, and then 1 g of the composition was sampled in a 2-mL sample bottle. In a temperature-controlled test tank, this was kept exposed to a temperature change cycle test where one cycle was "-20°C (held for 1 hour) → heating (0.1°C/min) → 0°C (held for 1 hour) → heating (0.1°C/min) → 20°C (held for 1 hour) → cooling (-0.1°C/min) → 0°C (held for 1 hour) → cooling (-0.1°C/min) → -20°C". During the test, the deposition of precipitates from the liquid crystal composition was visually monitored and the time at which the deposition of precipitates was detected was measured.
Example) A longer test time means that the sample can keep a stable liquid crystal phase for a longer period of time, and the low-temperature solubility of the sample is better.

Sample A: 72 hours
Sample B: 600 hours
Sample C: 384 hours
Sample D: 1,440 hours

The performance level is in an order of D > B > C > A.

(Evaluation of volatility/production apparatus contamination)

The volatility of the liquid crystal composition was evaluated as follows. With monitoring the running condition of a vacuum stirring defoaming mixture with a stroboscope, foaming of a liquid crystal composition was visually evaluated. Concretely, 0.8 kg of a liquid crystal composition was put into a special container for a vacuum stirring defoaming mixer having a volume of 2.0 L, and under degasification of 4 kPa, the vacuum stirring defoaming mixture was driven at an orbital speed of 15S-1, and at a rotating velocity of 7.5S-1, and the time until foaming began was measured.
A longer time before beginning of foaming means that the sample is more hardly volatile and may hardly contaminate the production apparatus, and therefore the sample performance is higher.

Example)

Sample A: 200 seconds
Sample B: 45 seconds
Sample C: 60 seconds
Sample D: 15 seconds

The performance level is in an order of A > C > B > D.

The following abbreviations are used in describing the compounds used in Examples.

(Side chain)

-n $-C_nH_{2n+1}$, a linear alkyl group having n's carbon atoms.
n- $C_nH_{2n+1}-$, a linear alkyl group having n's carbon atoms.
$-O_n$ $-OC_nH_{2n+1}$, a linear alkoxyl group having n's carbon atoms.
$_nO-$ $OC_nH_{2n+1}O-$, a linear alkoxyl group having n's carbon atoms.
$-_nO-$ $-C_nH_{2n}O-$
-V $-CH=CH_2$
V- $CH_2=CH-$
-V1 $-CH=CH-CH_3$
1V- $CH_3-CH=CH-$
-V2 $-CH=CH-CH_2-CH_3$
2V- $CH_3-CH_2-CH=CH-$

(Ring structure)

[Chem. 118]

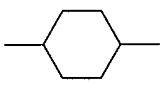
Cy

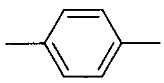
Ph

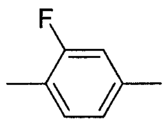
Ph1

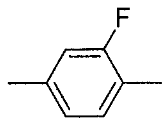
Ph3

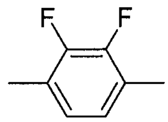
Ph5

(Examples and Comparative Examples)

Liquid crystal compositions having formulations 1 to 96 shown in the following Tables 1 to 8 were prepared, and the physical properties thereof were measured. The results are shown in the following Tables. As Reference Examples, liquid crystal compositions having formulations shown in Table 9 were prepared. The results are shown in the following Table.

[Table 1]

| Sample Name | Composition Example 1 | Composition Example 2 | Composition Example 3 | Composition Example 4 | Composition Example 5 | Composition Example 6 |
|---|---|---|---|---|---|---|
| $T_{NI}$/°C | 81.5 | 81.3 | 80.0 | 80.8 | 80.4 | 81.0 |
| $\Delta n$ | 0.095 | 0.104 | 0.104 | 0.116 | 0.097 | 0.103 |
| $\Delta \varepsilon$ | -3.34 | -4.16 | -5.36 | -3.65 | -3.26 | -3.27 |
| 5-Ph-Ph5-02 | | | | | | |
| 3-Cy-Cy-Ph5-1 | | | 4 | | | |
| 5-Cy-Cy-Ph5-02 | | 5 | | | | |
| 3-Cy-Cy-Ph5--02 | | | 5 | | | |
| 5-Cy-Cy-V | | | | | 10 | |
| 3-Cy-Cy-V | 24 | | | 20 | | 33 |
| 3-Cy-Cy-V1 | 10 | 15 | | 10 | | 8 |
| 4-Cy-Cy-V | 10 | 10 | 23 | | 20 | |
| 3-Ph-Ph5-02 | 10 | 13 | 13 | 18 | 10 | 25 |
| 3-Cy-Ph-Ph3-Cy-3 | 5 | 3 | 2 | 4 | 5 | 16 |
| 3-Cy-Ph5-04 | 8 | 13 | 10 | 4 | 10 | 2 |
| 5-Cy-Ph5-04 | 1 | 4 | 5 | 4 | 6 | |
| 3-Cy-Cy-Ph5--03 | 12 | 14 | 5 | 3 | 10 | 10 |
| 4-Cy-Cy-Ph5--02 | 8 | | 5 | 3 | 2 | |
| 2-Cy-Ph-Ph5-02 | 7 | 6 | 5 | 10 | 2 | 4 |
| 3-Cy-Ph-Ph5-02 | 5 | | 5 | 4 | 2 | |
| V-Cy-Cy-Ph-1 | | 15 | | 16 | 16 | 2 |
| V2-Cy-Cy-Ph-1 | | | 15 | | 6 | |
| 3-Ph-Ph5-Ph-2 | | | | 4 | | |
| 2-Cy-Cy-Ph5--1 | | 2 | 3 | | 1 | |

[Table 2]

| Sample Name | Composition Example 7 | Composition Example 8 | Composition Example 9 | Composition Example 10 | Composition Example 11 | Composition Example 12 |
|---|---|---|---|---|---|---|
| $T_{NI}$/°C | 82.0 | 88.2 | 81.6 | 82.8 | 83.3 | 83.9 |
| $\Delta n$ | 0.108 | 0.102 | 0.104 | 0.120 | 0.110 | 0.109 |
| $\Delta\varepsilon$ | -3.34 | -4.13 | -3.23 | -3.31 | -3.10 | -3.90 |
| 5-Ph-Ph5-02 | | | 21 | | | 8 |
| 3-Cy-Cy-Ph5-1 | | | | 2 | | 3 |
| 5-Cy-Cy-Ph5-02 | | | 5 | | | 5 |
| 3-Cy-Cy-Ph5--02 | | | 4 | | | |
| 5-Cy-Cy-V | | | 40 | 6 | | 15 |
| 3-Cy-Cy-V | 30 | | | | 35 | 20 |
| 3-Cy-Cy-V1 | 11 | | | 32 | | |
| 4-Cy-Cy-V | | 28 | | | | |
| 3-Ph-Ph5-02 | 30 | 10 | | 22 | 33 | 15 |
| 3-Cy-Ph-Ph3-Cy-3 | 20 | 2 | 3 | 6 | 25 | 12 |
| 3-Cy-Ph5-04 | | 6 | | 3 | | 5 |
| 5-Cy-Ph5-04 | | 3 | 3 | | | |
| 3-Cy-Cy-Ph5--03 | 6 | 13 | | 7 | | 9 |
| 4-Cy-Cy-Ph5--02 | | 12 | 6 | | | |
| 2-Cy-Ph-Ph5-02 | | 6 | | 5 | | |
| 3-Cy-Ph-Ph5-02 | 3 | 6 | | | | 8 |
| V-Cy-Cy-Ph-1 | | 8 | 10 | 10 | 7 | |
| V2-Cy-Cy-Ph-1 | | 2 | 8 | | | |
| 3-Ph-Ph5-Ph-2 | | | | 7 | | |
| 2-Cy-Cy-Ph5--1 | | 4 | | | | |

[Table 3]

| Sample Name | Composition Example 13 | Composition Example 14 | Composition Example 15 | Composition Example 16 | Composition Example 17 | Composition Example 18 |
|---|---|---|---|---|---|---|
| $T_{NI}$/°C | 81.9 | 95.5 | 80.5 | 81.2 | 89.8 | 82.9 |
| $\Delta n$ | 0.100 | 0.101 | 0.119 | 0.102 | 0.109 | 0.104 |
| $\Delta\varepsilon$ | -4.16 | -3.55 | -4.02 | -3.32 | -3.46 | -4.48 |
| 3-Cy-Cy-Ph5-1 | | | | 5 | | |
| 3-Cy-Cy-5 | 5 | 15 | 7 | 5 | 8 | 10 |
| 3-Cy-Cy-01 | | | | | | 17 |
| 5-Cy-Cy-01 | 21 | 11 | 11 | 21 | 15 | |
| 3-Cy-Cy-4 | 7 | 10 | 6 | 7 | | |
| 5-Cy-Cy-V | | | | | 7 | 3 |
| 3-Cy-Ph5-02 | | 14 | | | | 5 |
| 5-Ph-Ph5-02 | | | | | 16 | |
| 3-Ph-Ph5-02 | 3 | 5 | 10 | 7 | | 3 |
| 3-Cy-Ph-Ph3-Cy-3 | 3 | 8 | 5 | 12 | 10 | 3 |
| 3-Cy-Ph5-04 | 14 | | 15 | 15 | 10 | 14 |
| 5-Cy-Ph5-04 | 5 | | 3 | 4 | | |
| 3-Cy-Cy-Ph5-03 | 13 | 12 | | | 10 | 13 |
| 4-Cy-Cy-Ph5-02 | 4 | 4 | | 5 | | 4 |
| 2-Cy-Ph-Ph5-02 | 19 | 15 | 19 | 15 | | 20 |
| 3-Cy-Ph-Ph5-02 | 6 | 6 | 6 | | 14 | 5 |
| V-Cy-Cy-Ph-1 | | | 11 | | 10 | |
| V2-Cy-Cy-Ph-1 | | | | | | 3 |
| 3-Ph-Ph5-Ph-2 | | | 5 | 4 | | |
| 2-Cy-Cy-Ph5-1 | | | 2 | | | |

[Table 4]

| Sample Name | Composition Example 19 | Composition Example 20 | Composition Example 21 | Composition Example 22 | Composition Example 23 | Composition Example 24 |
|---|---|---|---|---|---|---|
| $T_{NI}$/°C | 87.1 | 82.8 | 88.9 | 84.2 | 82.9 | 80.6 |
| $\Delta n$ | 0.106 | 0.102 | 0.099 | 0.112 | 0.100 | 0.089 |
| $\Delta\varepsilon$ | -3.98 | -4.26 | -3.73 | -3.85 | -3.27 | -3.14 |
| 3-Cy-Cy-Ph5-1 | | | | | 4 | |
| 3-Cy-Cy-5 | | 5 | 7 | | | |
| 3-Cy-Cy-01 | 20 | | | 10 | 6 | |
| 5-Cy-Cy-01 | | 20 | 18 | | | |
| 3-Cy-Cy-4 | | 10 | 5 | | 21 | 40 |
| 5-Cy-Cy-V | 12 | | | 10 | 9 | 3 |
| 3-Cy-Ph5-02 | | 11 | 8 | 15 | | |
| 5-Ph-Ph5-02 | | | 10 | 12 | | 21 |
| 3-Ph-Ph5-02 | 5 | 7 | | 12 | 7 | |
| 3-Cy-Ph-Ph3-Cy-3 | 7 | 3 | 15 | 20 | 6 | 11 |
| 3-Cy-Ph5-04 | | | 10 | | 16 | |
| 5-Cy-Ph5-04 | 14 | 3 | | | | 10 |
| 3-Cy-Cy-Ph5-03 | 15 | 12 | 15 | | 11 | 15 |
| 4-Cy-Cy-Ph5-02 | 2 | 5 | | | 3 | |
| 2-Cy-Ph-Ph5-02 | 20 | 18 | 10 | | | |
| 3-Cy-Ph-Ph5-02 | 5 | 6 | | | 8 | |
| V-Cy-Cy-Ph-1 | | | | 15 | | |
| V2-Cy-Cy-Ph-1 | | | 2 | 6 | | |
| 3-Ph-Ph5-Ph-2 | | | | | 6 | |
| 2-Cy-Cy-Ph5-1 | | | | | 3 | |

[Table 5]

| Sample Name | Composition Example 25 | Composition Example 26 | Composition Example 27 | Composition Example 28 | Composition Example 29 | Composition Example 30 |
|---|---|---|---|---|---|---|
| $T_{NI}$/°C | 81.2 | 81.2 | 79.9 | 80.6 | 80.2 | 80.2 |
| $\Delta n$ | 0.099 | 0.106 | 0.106 | 0.120 | 0.101 | 0.116 |
| $\Delta\varepsilon$ | -3.34 | -4.16 | -5.36 | -3.65 | -3.26 | -3.27 |
| 5-Ph-Ph5-02 | | | | | | |
| 3-Cy-Cy-Ph5-1 | | | 4 | | | |
| 5-Cy-Cy-Ph5-02 | | 5 | | | | |
| 3-Cy-Cy-Ph5--02 | | | 5 | | | |
| 5-Cy-Cy-V | | | | | 10 | |
| 3-Cy-Cy-V | 24 | | | 20 | | 33 |
| 3-Cy-Cy-V1 | 10 | 15 | | 10 | | 8 |
| 4-Cy-Cy-V | 10 | 10 | 23 | | 20 | |
| 3-Ph-Ph5-02 | 10 | 13 | 13 | 18 | 10 | 25 |
| 3-Cy-Ph-Ph3-Ph-3 | 5 | 3 | 2 | 4 | 5 | 16 |
| 3-Cy-Ph5-04 | 8 | 13 | 10 | 4 | 10 | 2 |
| 5-Cy-Ph5-04 | 1 | 4 | 5 | 4 | 6 | |
| 3-Cy-Cy-Ph5--03 | 12 | 14 | 5 | 3 | 10 | 10 |
| 4-Cy-Cy-Ph5--02 | 8 | | 5 | 3 | 2 | |
| 2-Cy-Ph-Ph5-02 | 7 | 6 | 5 | 10 | 2 | 4 |
| 3-Cy-Ph-Ph5-02 | 5 | | 5 | 4 | 2 | |
| V-Cy-Cy-Ph-1 | | 15 | | 16 | 16 | 2 |
| V2-Cy-Cy-Ph-1 | | | 15 | | 6 | |
| 3-Ph-Ph5-Ph-2 | | | | 4 | | |
| 2-Cy-Cy-Ph5--1 | | 2 | 3 | | 1 | |

[Table 6]

| Sample Name | Composition Example 31 | Composition Example 32 | Composition Example 33 | Composition Example 34 | Composition Example 35 | Composition Example 36 |
|---|---|---|---|---|---|---|
| $T_{NI}$/°C | 81.0 | 88.1 | 81.4 | 82.5 | 82.1 | 83.3 |
| $\Delta n$ | 0.123 | 0.104 | 0.107 | 0.125 | 0.129 | 0.119 |
| $\Delta\varepsilon$ | -3.34 | -4.13 | -3.23 | -3.31 | -3.10 | -3.90 |
| 5-Ph-Ph5-02 | | | 21 | | | 8 |
| 3-Cy-Cy-Ph5-1 | | | | 2 | | 3 |
| 5-Cy-Cy-Ph5-02 | | | 5 | | | 5 |
| 3-Cy-Cy-Ph5--02 | | | 4 | | | |
| 5-Cy-Cy-V | | | 40 | 6 | | 15 |
| 3-Cy-Cy-V | 30 | | | | 35 | 20 |
| 3-Cy-Cy-V1 | 11 | | | 32 | | |
| 4-Cy-Cy-V | | 28 | | | | |
| 3-Ph-Ph5-02 | 30 | 10 | | 22 | 33 | 15 |
| 3-Cy-Ph-Ph3-Ph-3 | 20 | 2 | 3 | 6 | 25 | 12 |
| 3-Cy-Ph5-04 | | 6 | | 3 | | 5 |
| 5-Cy-Ph5-04 | | 3 | 3 | | | |
| 3-Cy-Cy-Ph5--03 | 6 | 13 | | 7 | | 9 |
| 4-Cy-Cy-Ph5--02 | | 12 | 6 | | | |
| 2-Cy-Ph-Ph5-02 | | 6 | | 5 | | |
| 3-Cy-Ph-Ph5-02 | 3 | 6 | | | | 8 |
| V-Cy-Cy-Ph-1 | | 8 | 10 | 10 | 7 | |
| V2-Cy-Cy-Ph-1 | | 2 | 8 | | | |
| 3-Ph-Ph5-Ph-2 | | | | 7 | | |
| 2-Cy-Cy-Ph5--1 | | 4 | | | | |

[Table 7]

| Sample Name | Composition Example 37 | Composition Example 38 | Composition Example 39 | Composition Example 40 | Composition Example 41 | Composition Example 42 |
|---|---|---|---|---|---|---|
| $T_{NI}$/°C | 81.7 | 95.1 | 80.2 | 80.6 | 89.3 | 82.7 |
| $\Delta n$ | 0.102 | 0.107 | 0.123 | 0.112 | 0.117 | 0.106 |
| $\Delta\varepsilon$ | -4.16 | -3.55 | -4.02 | -3.32 | -3.46 | -4.48 |
| 3-Cy-Cy-Ph5-1 | | | | 5 | | |
| 3-Cy-Cy-5 | 5 | 15 | 7 | 5 | 8 | 10 |
| 3-Cy-Cy-01 | | | | | | 17 |
| 5-Cy-Cy-01 | 21 | 11 | 11 | 21 | 15 | |
| 3-Cy-Cy-4 | 7 | 10 | 6 | 7 | | |
| 5-Cy-Cy-V | | | | | 7 | 3 |
| 3-Cy-Ph5-02 | | 14 | | | | 5 |
| 5-Ph-Ph5-02 | | | | | 16 | |
| 3-Ph-Ph5-02 | 3 | 5 | 10 | 7 | | 3 |
| 3-Cy-Ph-Ph3-Ph-3 | 3 | 8 | 5 | 12 | 10 | 3 |
| 3-Cy-Ph5-04 | 14 | | 15 | 15 | 10 | 14 |
| 5-Cy-Ph5-04 | 5 | | 3 | 4 | | |
| 3-Cy-Cy-Ph5-03 | 13 | 12 | | | 10 | 13 |
| 4-Cy-Cy-Ph5-02 | 4 | 4 | | 5 | | 4 |
| 2-Cy-Ph-Ph5-02 | 19 | 15 | 19 | 15 | | 20 |
| 3-Cy-Ph-Ph5-02 | 6 | 6 | 6 | | 14 | 5 |
| V-Cy-Cy-Ph-1 | | | 11 | | 10 | |
| V2-Cy-Cy-Ph-1 | | | | | | 3 |
| 3-Ph-Ph5-Ph-2 | | | 5 | 4 | | |
| 2-Cy-Cy-Ph5-1 | | | 2 | | | |

[Table 8]

| Sample Name | Composition Example 43 | Composition Example 44 | Composition Example 45 | Composition Example 46 | Composition Example 47 | Composition Example 48 |
|---|---|---|---|---|---|---|
| $T_{NI}$/°C | 86.8 | 82.6 | 88.1 | 83.2 | 82.6 | 80.1 |
| $\Delta n$ | 0.112 | 0.104 | 0.110 | 0.128 | 0.104 | 0.097 |
| $\Delta\varepsilon$ | -3.98 | -4.26 | -3.73 | -3.85 | -3.27 | -3.14 |
| 3-Cy-Cy-Ph5-1 | | | | | 4 | |
| 3-Cy-Cy-5 | | 5 | 7 | | | |
| 3-Cy-Cy-01 | 20 | | | 10 | 6 | |
| 5-Cy-Cy-01 | | 20 | 18 | | | |
| 3-Cy-Cy-4 | | 10 | 5 | | 21 | 40 |
| 5-Cy-Cy-V | 12 | | | 10 | 9 | 3 |
| 3-Cy-Ph5-02 | | 11 | 8 | 15 | | |
| 5-Ph-Ph5-02 | | | 10 | 12 | | 21 |
| 3-Ph-Ph5-02 | 5 | 7 | | 12 | 7 | |
| 3-Cy-Ph-Ph3-Ph-3 | 7 | 3 | 15 | 20 | 6 | 11 |
| 3-Cy-Ph5-04 | | | 10 | | 16 | |
| 5-Cy-Ph5-04 | 14 | 3 | | | | 10 |
| 3-Cy-Cy-Ph5-03 | 15 | 12 | 15 | | 11 | 15 |
| 4-Cy-Cy-Ph5-02 | 2 | 5 | | | 3 | |
| 2-Cy-Ph-Ph5-02 | 20 | 18 | 10 | | | |
| 3-Cy-Ph-Ph5-02 | 5 | 6 | | | 8 | |
| V-Cy-Cy-Ph-1 | | | | 15 | | |
| V2-Cy-Cy-Ph-1 | | | 2 | 6 | | |
| 3-Ph-Ph5-Ph-2 | | | | | 6 | |
| 2-Cy-Cy-Ph5-1 | | | | | 3 | |

[Table 9]

| Sample Name | Composition Example 49 | Composition Example 50 | Composition Example 51 | Composition Example 52 | Composition Example 53 | Composition Example 54 |
|---|---|---|---|---|---|---|
| $T_{NI}$/°C | 81.9 | 95.5 | 80.5 | 81.2 | 89.8 | 82.9 |
| Δn | 0.100 | 0.101 | 0.119 | 0.102 | 0.109 | 0.104 |
| Δε | -4.16 | -3.55 | -4.02 | -3.32 | -3.46 | -4.48 |
| 3-Cy-Cy-Ph5-1 | | | | 5 | | |
| 3-Cy-Cy-5 | 5 | 15 | 7 | 5 | 8 | 10 |
| 3-Cy-Cy-01 | | | | | | 17 |
| 5-Cy-Cy-01 | 21 | 11 | 11 | 21 | 15 | |
| 3-Cy-Cy-4 | 7 | 10 | 6 | 7 | | |
| 5-Cy-Cy-V | | | | | 7 | 3 |
| 3-Cy-Ph5-02 | | 14 | | | | 5 |
| 5-Ph-Ph5-02 | | | | | 16 | |
| 3-Ph-Ph5-02 | 3 | 5 | 10 | 7 | | 3 |
| 3-Cy-Ph-Ph1-Cy-3 | 3 | 8 | 5 | 12 | 10 | 3 |
| 3-Cy-Ph5-04 | 14 | | 15 | 15 | 10 | 14 |
| 5-Cy-Ph5-04 | 5 | | 3 | 4 | | |
| 3-Cy-Cy-Ph5-03 | 13 | 12 | | | 10 | 13 |
| 4-Cy-Cy-Ph5-02 | 4 | 4 | | 5 | | 4 |
| 2-Cy-Ph-Ph5-02 | 19 | 15 | 19 | 15 | | 20 |
| 3-Cy-Ph-Ph5-02 | 6 | 6 | 6 | | 14 | 5 |
| V-Cy-Cy-Ph-1 | | | 11 | | 10 | |
| V2-Cy-Cy-Ph-1 | | | | | | 3 |
| 3-Ph-Ph5-Ph-2 | | | 5 | 4 | | |
| 2-Cy-Cy-Ph5-1 | | | 2 | | | |

[Table 10]

| Sample Name | Composition Example 55 | Composition Example 56 | Composition Example 57 | Composition Example 58 | Composition Example 59 | Composition Example 60 |
|---|---|---|---|---|---|---|
| $T_{NI}$/°C | 87.1 | 82.8 | 88.9 | 84.2 | 82.9 | 80.6 |
| $\Delta n$ | 0.106 | 0.102 | 0.099 | 0.112 | 0.100 | 0.089 |
| $\Delta\varepsilon$ | -3.98 | -4.26 | -3.73 | -3.85 | -3.27 | -3.14 |
| 3-Cy-Cy-Ph5-1 | | | | | 4 | |
| 3-Cy-Cy-5 | | 5 | 7 | | | |
| 3-Cy-Cy-01 | 20 | | | 10 | 6 | |
| 5-Cy-Cy-01 | | 20 | 18 | | | |
| 3-Cy-Cy-4 | | 10 | 5 | | 21 | 40 |
| 5-Cy-Cy-V | 12 | | | 10 | 9 | 3 |
| 3-Cy-Ph5-02 | | 11 | 8 | 15 | | |
| 5-Ph-Ph5-02 | | | 10 | 12 | | 21 |
| 3-Ph-Ph5-02 | 5 | 7 | | 12 | 7 | |
| 3-Cy-Ph-Ph1-Cy-3 | 7 | 3 | 15 | 20 | 6 | 11 |
| 3-Cy-Ph5-04 | | | 10 | | 16 | |
| 5-Cy-Ph5-04 | 14 | 3 | | | | 10 |
| 3-Cy-Cy-Ph5-03 | 15 | 12 | 15 | | 11 | 15 |
| 4-Cy-Cy-Ph5-02 | 2 | 5 | | | 3 | |
| 2-Cy-Ph-Ph5-02 | 20 | 18 | 10 | | | |
| 3-Cy-Ph-Ph5-02 | 5 | 6 | | | 8 | |
| V-Cy-Cy-Ph-1 | | | | 15 | | |
| V2-Cy-Cy-Ph-1 | | | 2 | 6 | | |
| 3-Ph-Ph5-Ph-2 | | | | | 6 | |
| 2-Cy-Cy-Ph5-1 | | | | | 3 | |

[Table 11]

| | Composition Example 61 | Composition Example 62 | Composition Example 63 | Composition Example 64 | Composition Example 65 | Composition Example 66 |
|---|---|---|---|---|---|---|
| $T_{NI}$/°C | 81.5 | 81.3 | 80.0 | 80.8 | 80.4 | 81.0 |
| $\Delta n$ | 0.095 | 0.104 | 0.104 | 0.116 | 0.097 | 0.103 |
| $\Delta\varepsilon$ | -3.34 | -4.16 | -5.36 | -3.65 | -3.26 | -3.27 |
| 5-Ph-Ph5-02 | | | | | | |
| 3-Cy-Cy-Ph5-1 | | | 4 | | | |
| 5-Cy-Cy-Ph5-02 | | 5 | | | | |
| 3-Cy-Cy-Ph5--02 | | | 5 | | | |
| 5-Cy-Cy-V | | | | | 10 | |
| 3-Cy-Cy-V | 24 | | | 20 | | 33 |
| 3-Cy-Cy-V1 | 10 | 15 | | 10 | | 8 |
| 4-Cy-Cy-V | 10 | 10 | 23 | | 20 | |
| 3-Ph-Ph5-02 | 10 | 13 | 13 | 18 | 10 | 25 |
| 3-Cy-Ph-Ph1-Cy-3 | 5 | 3 | 2 | 4 | 5 | 16 |
| 3-Cy-Ph5-04 | 8 | 13 | 10 | 4 | 10 | 2 |
| 5-Cy-Ph5-04 | 1 | 4 | 5 | 4 | 6 | |
| 3-Cy-Cy-Ph5--03 | 12 | 14 | 5 | 3 | 10 | 10 |
| 4-Cy-Cy-Ph5--02 | 8 | | 5 | 3 | 2 | |
| 2-Cy-Ph-Ph5-02 | 7 | 6 | 5 | 10 | 2 | 4 |
| 3-Cy-Ph-Ph5-02 | 5 | | 5 | 4 | 2 | |
| V-Cy-Cy-Ph-1 | | 15 | | 16 | 16 | 2 |
| V2-Cy-Cy-Ph-1 | | | 15 | | 6 | |
| 3-Ph-Ph5-Ph-2 | | | | 4 | | |
| 2-Cy-Cy-Ph5--1 | | 2 | 3 | | 1 | |

[Chem. 119]

| | Composition Example 67 | Composition Example 68 | Composition Example 69 | Composition Example 70 | Composition Example 71 | Composition Example 72 |
|---|---|---|---|---|---|---|
| $T_{NI}$/°C | 82.0 | 88.2 | 81.6 | 82.8 | 83.3 | 83.9 |
| $\Delta n$ | 0.108 | 0.102 | 0.104 | 0.120 | 0.110 | 0.109 |
| $\Delta \varepsilon$ | -3.34 | -4.13 | -3.23 | -3.31 | -3.10 | -3.90 |
| 5-Ph-Ph5-02 | | | 21 | | | 8 |
| 3-Cy-Cy-Ph5-1 | | | | 2 | | 3 |
| 5-Cy-Cy-Ph5-02 | | | 5 | | | 5 |
| 3-Cy-Cy-Ph5--02 | | | 4 | | | |
| 5-Cy-Cy-V | | | 40 | 6 | | 15 |
| 3-Cy-Cy-V | 30 | | | | 35 | 20 |
| 3-Cy-Cy-V1 | 11 | | | 32 | | |
| 4-Cy-Cy-V | | 28 | | | | |
| 3-Ph-Ph5-02 | 30 | 10 | | 22 | 33 | 15 |
| 3-Cy-Ph-Ph1-Cy-3 | 20 | 2 | 3 | 6 | 25 | 12 |
| 3-Cy-Ph5-04 | | 6 | | 3 | | 5 |
| 5-Cy-Ph5-04 | | 3 | 3 | | | |
| 3-Cy-Cy-Ph5--03 | 6 | 13 | | 7 | | 9 |
| 4-Cy-Cy-Ph5--02 | | 12 | 6 | | | |
| 2-Cy-Ph-Ph5-02 | | 6 | | 5 | | |
| 3-Cy-Ph-Ph5-02 | 3 | 6 | | | | 8 |
| V-Cy-Cy-Ph-1 | | 8 | 10 | 10 | 7 | |
| V2-Cy-Cy-Ph-1 | | 2 | 8 | | | |
| 3-Ph-Ph5-Ph-2 | | | | 7 | | |
| 2-Cy-Cy-Ph5--1 | | 4 | | | | |

[Chem. 120]

| Sample Name | Composition Example 73 | Composition Example 74 | Composition Example 75 | Composition Example 76 | composition Example 77 | Composition Example 78 |
|---|---|---|---|---|---|---|
| $T_{NI}$/°C | 81.7 | 95.1 | 80.2 | 80.6 | 89.3 | 82.7 |
| $\Delta n$ | 0.102 | 0.107 | 0.123 | 0.112 | 0.117 | 0.106 |
| $\Delta\varepsilon$ | -4.16 | -3.55 | -4.02 | -3.32 | -3.46 | -4.48 |
| 3-Cy-Cy-Ph5-1 | | | | 5 | | |
| 3-Cy-Cy-5 | 5 | 15 | 7 | 5 | 8 | 10 |
| 3-Cy-Cy-01 | | | | | | 17 |
| 5-Cy-Cy-01 | 21 | 11 | 11 | 21 | 15 | |
| 3-Cy-Cy-4 | 7 | 10 | 6 | 7 | | |
| 5-Cy-Cy-V | | | | | 7 | 3 |
| 3-Cy-Ph5-02 | | 14 | | | | 5 |
| 5-Ph-Ph5-02 | | | | | 16 | |
| 3-Ph-Ph5-02 | 3 | 5 | 10 | 7 | | 3 |
| 3-Cy-Ph-Ph1-Ph-3 | 3 | 8 | 5 | 12 | 10 | 3 |
| 3-Cy-Ph5-04 | 14 | | 15 | 15 | 10 | 14 |
| 5-Cy-Ph5-04 | 5 | | 3 | 4 | | |
| 3-Cy-Cy-Ph5-03 | 13 | 12 | | | 10 | 13 |
| 4-Cy-Cy-Ph5-02 | 4 | 4 | | 5 | | 4 |
| 2-Cy-Ph-Ph5-02 | 19 | 15 | 19 | 15 | | 20 |
| 3-Cy-Ph-Ph5-02 | 6 | 6 | 6 | | 14 | 5 |
| V-Cy-Cy-Ph-1 | | | 11 | | 10 | |
| V2-Cy-Cy-Ph-1 | | | | | | 3 |
| 3-Ph-Ph5-Ph-2 | | | 5 | 4 | | |
| 2-Cy-Cy-Ph5-1 | | | 2 | | | |

[Chem. 121]

| Sample Name | Composition Example 79 | Composition Example 80 | Composition Example 81 | Composition Example 82 | Composition Example 83 | Composition Example 84 |
|---|---|---|---|---|---|---|
| $T_{NI}$/°C | 86.8 | 82.6 | 88.1 | 83.2 | 82.6 | 80.1 |
| $\Delta n$ | 0.112 | 0.104 | 0.110 | 0.128 | 0.104 | 0.097 |
| $\Delta\varepsilon$ | -3.98 | -4.26 | -3.73 | -3.85 | -3.27 | -3.14 |
| 3-Cy-Cy-Ph5-1 | | | | | 4 | |
| 3-Cy-Cy-5 | | 5 | 7 | | | |
| 3-Cy-Cy-01 | 20 | | | 10 | 6 | |
| 5-Cy-Cy-01 | | 20 | 18 | | | |
| 3-Cy-Cy-4 | | 10 | 5 | | 21 | 40 |
| 5-Cy-Cy-V | 12 | | | 10 | 9 | 3 |
| 3-Cy-Ph5-02 | | 11 | 8 | 15 | | |
| 5-Ph-Ph5-02 | | | 10 | 12 | | 21 |
| 3-Ph-Ph5-02 | 5 | 7 | | 12 | 7 | |
| 3-Cy-Ph-Ph1-Ph-3 | 7 | 3 | 15 | 20 | 6 | 11 |
| 3-Cy-Ph5-04 | | | 10 | | 16 | |
| 5-Cy-Ph5-04 | 14 | 3 | | | | 10 |
| 3-Cy-Cy-Ph5-03 | 15 | 12 | 15 | | 11 | 15 |
| 4-Cy-Cy-Ph5-02 | 2 | 5 | | | 3 | |
| 2-Cy-Ph-Ph5-02 | 20 | 18 | 10 | | | |
| 3-Cy-Ph-Ph5-02 | 5 | 6 | | | 8 | |
| V-Cy-Cy-Ph-1 | | | | 15 | | |
| V2-Cy-Cy-Ph-1 | | | 2 | 6 | | |
| 3-Ph-Ph5-Ph-2 | | | | | 6 | |
| 2-Cy-Cy-Ph5-1 | | | | | 3 | |

[Chem. 122]

| Sample Name | Composition Example 85 | Composition Example 86 | Composition Example 87 | composition Example 88 | Composition Example 89 | Composition Example 90 |
|---|---|---|---|---|---|---|
| $T_{NI}$/°C | 81.2 | 81.2 | 79.9 | 80.6 | 80.2 | 80.2 |
| $\Delta n$ | 0.099 | 0.106 | 0.106 | 0.120 | 0.101 | 0.116 |
| $\Delta \varepsilon$ | -3.34 | -4.16 | -5.36 | -3.65 | -3.26 | -3.27 |
| 5-Ph-Ph5-02 | | | | | | |
| 3-Cy-Cy-Ph5-1 | | | 4 | | | |
| 5-Cy-Cy-Ph5-02 | | 5 | | | | |
| 3-Cy-Cy-Ph5--02 | | | 5 | | | |
| 5-Cy-Cy-V | | | | | 10 | |
| 3-Cy-Cy-V | 24 | | | 20 | | 33 |
| 3-Cy-Cy-V1 | 10 | 15 | | 10 | | 8 |
| 4-Cy-Cy-V | 10 | 10 | 23 | | 20 | |
| 3-Ph-Ph5-02 | 10 | 13 | 13 | 18 | 10 | 25 |
| 3-Cy-Ph-Ph1-Ph-3 | 5 | 3 | 2 | 4 | 5 | 16 |
| 3-Cy-Ph5-04 | 8 | 13 | 10 | 4 | 10 | 2 |
| 5-Cy-Ph5-04 | 1 | 4 | 5 | 4 | 6 | |
| 3-Cy-Cy-Ph5--03 | 12 | 14 | 5 | 3 | 10 | 10 |
| 4-Cy-Cy-Ph5--02 | 8 | | 5 | 3 | 2 | |
| 2-Cy-Ph-Ph5-02 | 7 | 6 | 5 | 10 | 2 | 4 |
| 3-Cy-Ph-Ph5-02 | 5 | | 5 | 4 | 2 | |
| V-Cy-Cy-Ph-1 | | 15 | | 16 | 16 | 2 |
| V2-Cy-Cy-Ph-1 | | | 15 | | 6 | |
| 3-Ph-Ph5-Ph-2 | | | | 4 | | |
| 2-Cy-Cy-Ph5--1 | | 2 | 3 | | 1 | |

[Table 12]

| Sample Name | Composition Example 91 | Composition Example 92 | Composition Example 93 | Composition Example 94 | Composition Example 95 | Composition Example 96 |
|---|---|---|---|---|---|---|
| $T_{NI}$/°C | 81.0 | 88.1 | 81.4 | 82.5 | 82.1 | 83.3 |
| $\Delta n$ | 0.123 | 0.104 | 0.107 | 0.125 | 0.129 | 0.119 |
| $\Delta \varepsilon$ | -3.34 | -4.13 | -3.23 | -3.31 | -3.10 | -3.90 |
| 5-Ph-Ph5-02 | | | 21 | | | 8 |
| 3-Cy-Cy-Ph5-1 | | | | 2 | | 3 |
| 5-Cy-Cy-Ph5-02 | | | 5 | | | 5 |
| 3-Cy-Cy-Ph5--02 | | | 4 | | | |
| 5-Cy-Cy-V | | | 40 | 6 | | 15 |
| 3-Cy-Cy-V | 30 | | | | 35 | 20 |
| 3-Cy-Cy-V1 | 11 | | | 32 | | |
| 4-Cy-Cy-V | | 28 | | | | |
| 3-Ph-Ph5-02 | 30 | 10 | | 22 | 33 | 15 |
| 3-Cy-Ph-Ph1-Ph-3 | 20 | 2 | 3 | 6 | 25 | 12 |
| 3-Cy-Ph5-04 | | 6 | | 3 | | 5 |
| 5-Cy-Ph5-04 | | 3 | 3 | | | |
| 3-Cy-Cy-Ph5--03 | 6 | 13 | | 7 | | 9 |
| 4-Cy-Cy-Ph5--02 | | 12 | 6 | | | |
| 2-Cy-Ph-Ph5-02 | | 6 | | 5 | | |
| 3-Cy-Ph-Ph5-02 | 3 | 6 | | | | 8 |
| V-Cy-Cy-Ph-1 | | 8 | 10 | 10 | 7 | |
| V2-Cy-Cy-Ph-1 | | 2 | 8 | | | |
| 3-Ph-Ph5-Ph-2 | | | | 7 | | |
| 2-Cy-Cy-Ph5--1 | | 4 | | | | |

[Table 13]

| | Sample Example |
|---|---|
| TNI/°C | 76 |
| Δn | 0.102 |
| Δε | -2.9 |
| 3-Cy-Cy-2 | 16 |
| 3-Cy-Cy-4 | 7 |
| 3-Cy-Cy-5 | 4 |
| 3-Ph-Ph-01 | 3 |
| 5-Ph-Ph-01 | 3 |
| 5-Ph-Ph-1 | 24 |
| 3-Cy-1O-Ph5-01 | 6 |
| 3-Cy-1O-Ph5-02 | 8 |
| 3-Cy-Ph-Ph5-03 | 7 |
| 3-Cy-Ph-Ph5-04 | 6 |
| 4-Cy-Ph-Ph5-03 | 6 |
| 2-Cy-Cy-1O-Ph5-02 | 6 |
| 3-Cy-Cy-1O-Ph5-02 | 8 |

(Method for measurement of remaining monomer amount after UV curing)

0.4 parts by mass of the following monomer (A) was added to 100 parts by mass of the liquid crystal composition of Sample Reference Example, and the remaining monomer amount after UV curing was measured.

The liquid crystal composition was injected into a vertical alignment liquid crystal cell, and the polymerizable compound was polymerized by UV irradiation at each irradiation dose for at most 600 seconds. Subsequently, the liquid crystal cell was disassembled to collect an acetonitrile solution of dissolved components containing the liquid crystal material, the polymerized product and the unpolymerized polymerizable compound. This was analyzed through high-performance liquid chromatography (column: reversed-phase apolar column, developing solvent: acetonitrile or acetonitrile/water, detector: UV detector) to measure the peak area of each component. From the ratio of the peak area of the unpolymerized polymerizable compound to the peak area of the liquid crystal material as an index, the amount of the remaining polymerizable compound was determined. From this value and the initial amount of the polymerizable compound, the amount of the remaining monomer was determined. The detection limit for the amount of the remaining polymerizable compound was 10 ppm.

[Table 14]

| UV Irradiation Energy/J.cm$^2$ | Remaining Monomer Amount in Sample Reference Example/ppm |
|---|---|
| 0 | 4000 |
| 10 | 2200 |
| 20 | 1160 |
| 40 | 565 |
| 60 | 367 |

[Chem. 123]

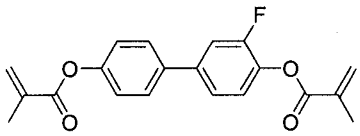

(A)

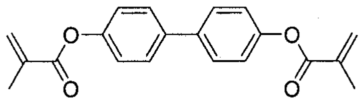

(B)

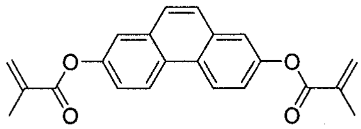

(C)

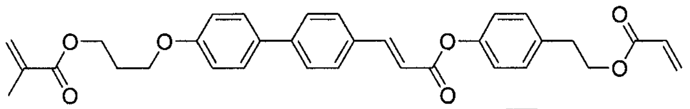

(D)

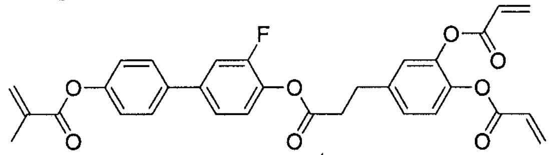

(E)

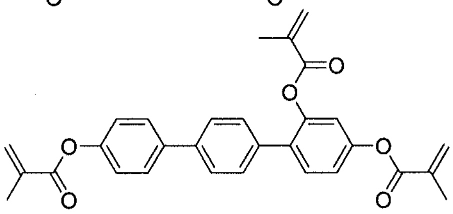

(F)

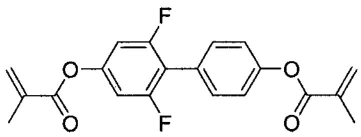

(G)

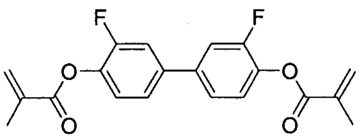

(H)

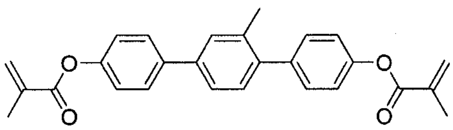

(I)

In the above Composition Examples 1 to 96, the monomer formula (A) was added in an amount of 0.3 parts by mass to 100 parts by mass of the liquid crystal composition of Composition Examples 1 to 6, Composition Examples 55 to 60 and Composition Example 79 to 84, thereby preparing polymerizable compound-containing liquid crystal compositions. Similarly, the monomer formula (B) was added in an amount of 0.4 parts by mass to 100 parts by mass of the liquid crystal composition of Composition Examples 7 to 12, Composition Examples 61 to 66 and Composition Examples 91 to 96; the monomer formula (C) was added in an amount of 0.4 parts by mass to 100 parts by mass of the liquid crystal composition of Composition Examples 13 to 18; the monomer formula (D) was added in an amount of 0.1 parts by mass to 100 parts by mass of the liquid crystal composition of Composition Examples 19 to 14, Composition Examples 67 to 72 and Composition Examples 75 to 80; the monomer formula (E) was added in an amount of 0.2 parts by mass to 100 parts by mass of the liquid crystal composition of Composition Examples 25 to 30, Composition Examples 73 to 78 and Composition Examples 85 to 90; the monomer formula (F) was added to Composition Examples 31 to 36: the

monomer formula (G) was added in an amount of 0.5 parts by mass to 100 parts by mass of the liquid crystal composition of Composition Examples 37 to 42; the monomer formula (H) was added in an amount of 0.2 parts by mass to 100 parts by mass of the liquid crystal composition of Composition Examples 43 to 48; the monomer formula (I) was added in an amount of 0.3 parts by mass to 100 parts by mass of the liquid crystal composition of Composition Examples 49 to 54, thereby preparing polymerizable compound-containing liquid crystal compositions, and in the same manner as that in the above-mentioned Sample Composition Examples, the amount of the remaining monomer was measured. As a result, it was confirmed that, under condition of UV irradiation energy of 0, 10, 20, 40 and 60, the remaining monomer amount was reduced as compared with that in Sample Composition Examples.

Industrial Applicability

The liquid crystal composition of the present invention is widely applicable to the field of liquid crystal display elements and liquid crystal displays.

(Reference Signs List)

1 Second Polarizer
2 Second Substrate
3 Thin-Film Transistor Layer or Thin-Film Transistor-Containing Electrode
4 Alignment Film
5 Liquid Crystal Layer
6 Electrode
7 Color Filter
8 First Substrate
9 First Polarizer
10 Liquid Crystal Display Element
11 Gate Electrode
12 Anodized Film
13 Gate Insulation Layer
14 Transparent Electrode (Layer)
15 Drain Electrode
16 Ohmic Contact Layer
17 Semiconductor Layer
18 Protective Film
19a, 19b Source Electrode
21 Pixel Electrode
22 Storage Capacitor
23 Drain Electrode
24 Data Wiring
25 Gate Wiring
26 Source Electrode
27 Gate Electrode
101 Protective Layer

**Claims**

**1.** A polymerizable monomer-containing liquid crystal composition having a negative dielectric anisotropy, comprising:

at least one compound selected from the group of compounds represented by the following general formula (1):

[Chem. 1]

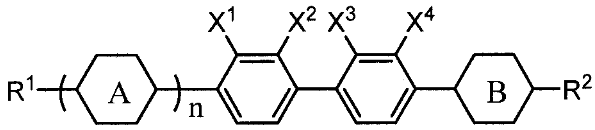 (1)

(in the above general formula (1), $X_1$ to $X_4$ each independently represent a hydrogen atom, a halogen atom or a cyano group,
$R^1$ and $R^2$ each independently represent an alkyl group having 1 to 15 carbon atoms, an alkenyl group having 2 to 15 carbon atoms, or an alkoxy group having 1 to 15 carbon atoms,
the ring A and the ring B each independently represent any of the following formulae (A) to (E):

[Chem. 2]

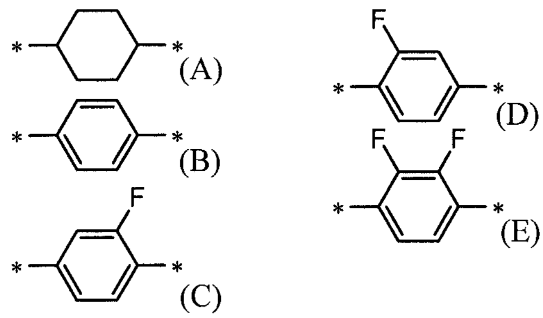

and n indicates 0, 1 or 2);

at least one compound selected from the group of compounds represented by the following general formula (2):

[Chem. 3]

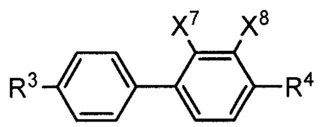 (2)

(in the above general formula (2), $X^7$ and $X^8$ each independently represent a hydrogen atom, a halogen atom or a cyano group, and
$R^3$ and $R^4$ each independently represent an alkyl group having 1 to 15 carbon atoms, an alkenyl group having 2 to 15 carbon atoms, or an alkoxy group having 1 to 15 carbon atoms) ; and
a polymerizable monomer.

**2.** The polymerizable monomer-containing liquid crystal composition according to claim 1, wherein the compound represented by the general formula (1) is a compound represented by the following general formula (1-1):

[Chem. 4]

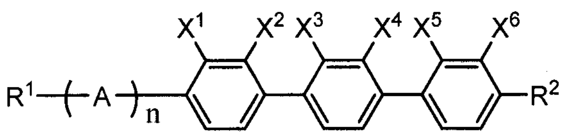 (1-1)

in the above general formula (1-1), $X_1$ to $X_6$ each independently represent a hydrogen atom, a halogen atom

or a cyano group,
$R^1$ and $R^2$ each independently represent an alkyl group having 1 to 15 carbon atoms, an alkenyl group having 2 to 15 carbon atoms, or an alkoxy group having 1 to 15 carbon atoms,
the ring A is any of the following formulae (A) to (E) :

[Chem. 5]

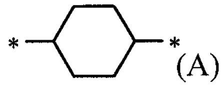
(A)

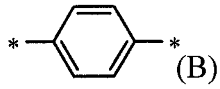
(B)

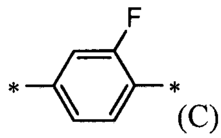
(C)

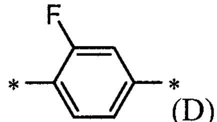
(D)

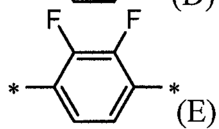
(E)

and n indicates 0, 1 or 2.

3. The polymerizable monomer-containing liquid crystal composition according to claim 1, wherein the polymerizable monomer is a compound represented by the following general formula (P):

[Chem. 6]

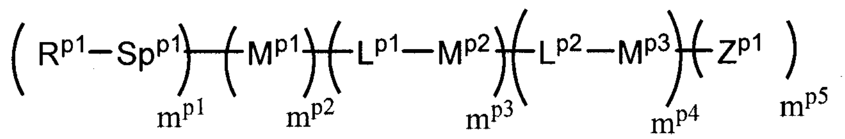
(P)

in the above general formula (P), $Z^{p1}$ represents a fluorine atom, a cyano group, a hydrogen atom, an alkyl group having 1 to 15 carbon atoms in which the hydrogen atom may be substituted with a halogen atom, an alkoxy group having 1 to 15 carbon atoms in which the hydrogen atom may be substituted with a halogen atom, an alkenyl group having 1 to 15 carbon atoms in which the hydrogen atom may be substituted with a halogen atom, an alkenyloxy group having 1 to 15 carbon atoms in which the hydrogen atom may be substituted with a halogen atom, or $-Sp^{p2}-R^{p2}$;
$R^{p1}$ and $R^{p2}$ each independently represent any of the following formulae (R-I) to (RIX) :

[Chem. 7]

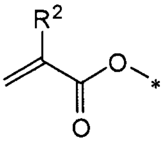

(R-I)

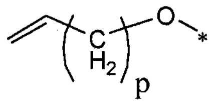

(R-II)

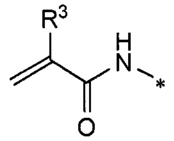

(R-III)

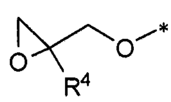

(R-IV)

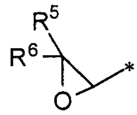

(R-V)

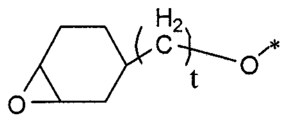

(R-VI)

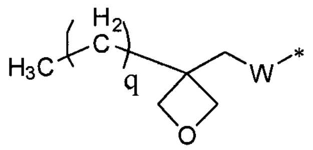

(R-VII)

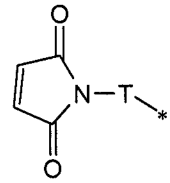

(R-VIII)

HS-*

(R-IX) ,

in the above formulae (R-I) to (R-IX), $R^2$ to $R^6$ each independently represent a hydrogen atom, an alkyl group having 1 to 5 carbon atoms, or a halogenoalkyl group having 1 to 5 carbon atoms, W represents a single bond, -O- or a methylene group, T represents a single bond or -COO-, and p, t and q each independently indicate 0, 1 or 2;

$Sp^{p1}$ and $Sp^{p2}$ each represent a spacer group;

$L^{p1}$ and $L^{p2}$ each independently represent a single bond, -O-, -S-, $-CH_2-$, $-OCH_2-$, $-CH_2O-$, -CO-, $-C_2H_4-$, -COO-, -OCO-, $-OCOOCH_2-$, $-CH_2OCOO-$, $-OCH_2CH_2O-$, $-CO-NR^a-$, $-NR^a-CO-$, $-SCH_2-$, $-CH_2S-$, $-CH=CR^a-COO-$, $-CH=CR^a-OCO-$, $-COO-CR^a=CH-$, $-OCO-CR^a=CH-$, $-COO-CR^a=CH-COO-$, $-COO-CR^a=CH-OCO-$, $-OCO-CR^a=CH-COO-$, $-OCO-CR^a=CH-OCO-$, $-(CH_2)_z-C(=O)-O-$, $-(CH_2)_z-O-(C=O)-$, $-O-(C=O)-(CH_2)_z-$, $-(C=O)-O-(CH_2)_z-$, -CH=CH-, -CF=CF-, -CF=CH-, -CH=CF-, $-CF_2-$, $-CF_2O-$, $-OCF_2-$, $-CF_2CH_2-$, $-CH_2CF_2-$, $-CF_2CF_2-$ or -C≡C- (wherein $R^a$ each independently represents a hydrogen atom, or an alkyl group having 1 to 4 carbon atoms, and in the above formulae, z indicates an integer of 1 to 4);

$M^{p2}$ represents a 1,4-phenylene group, a 1,4-cyclohexylene group, an anthracene-2,6-diyl group, a phenanthrene-2,7-diyl group, a pyridine-2,5-diyl group, a pyrimidine-2,5-diyl group, a naphthalene-2,6-diyl group, an indane-2,5-diyl group, a 1,2,3,4-tetrahydronaphthalene-2,6-diyl group or a 1,3-dioxane-2,5-diyl group, and $M^{p2}$ may be unsubstituted or substituted with an alkyl group having 1 to 12 carbon atoms, a halogenoalkyl group having 1 to 12 carbon atoms, an alkoxy group having 1 to 12 carbon atoms, a halogenoalkoxy group having 1 to 12 group, a halogen atom, a cyano group, a nitro group or $-R^{p1}$;

$M^{p1}$ represents any of the following formulae (i-11) to ix-11):

[Chem. 8]

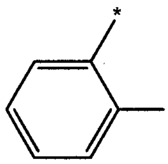
(i-11)

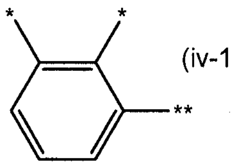
(iv-11)

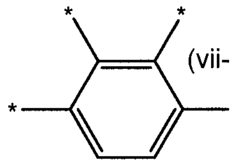
(vii-11)

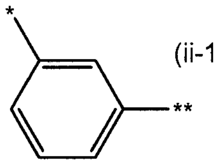
(ii-11)

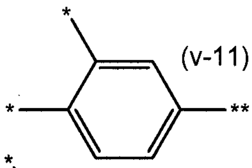
(v-11)

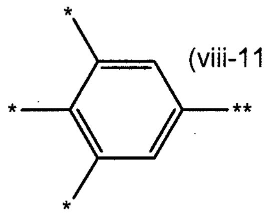
(viii-11)

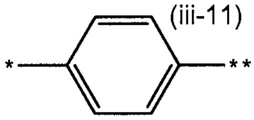
(iii-11)

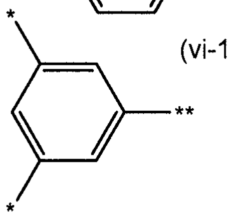
(vi-11)

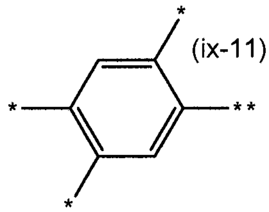
(ix-11)

(in the formulae, the group bonds to $Sp^{p1}$ via *, and bonds to $L^{p1}$ or $L^{p2}$ via **) ;
$M^{p3}$ represents any of the following formulae (i-12) to (ix-13) :

[Chem. 9]

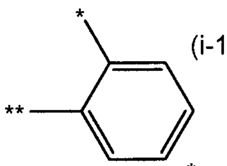
(i-13)

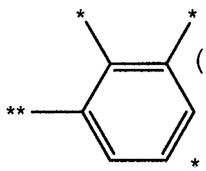
(iv-13)

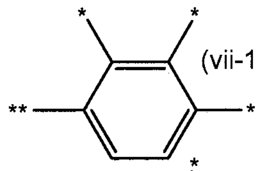
(vii-13)

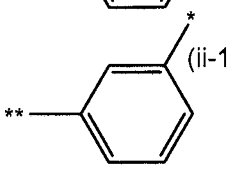
(ii-13)

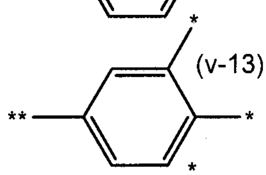
(v-13)

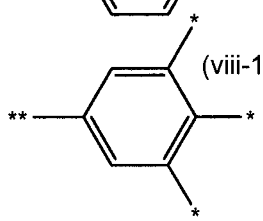
(viii-13)

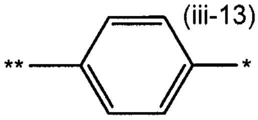
(iii-13)

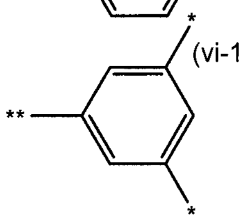
(vi-13)

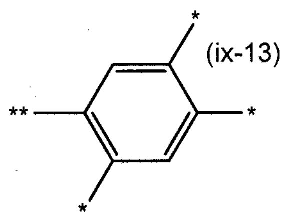
(ix-13)

(in the formulae, the group bonds to $Z^{p1}$ via *, and bonds to $L^{p2}$ via **) ;
$m^{p2}$ to $m^{p4}$ each independently indicate 0, 1,2 or 3, $m^{P1}$ and $m^{p5}$ each independently indicate 1, 2 or 3; and plural $Z^{P1}$'s, if any, may be the same or different, plural $R^{p1}$'s, if any, may be the same or different, plural $R^{p2}$'s, if any, may be the same or different, plural $Sp^{p1}$'s, if any, may be the same or different, plural $Sp^{p2}$'s, if any, may be the same or different, plural $L^{p1}$'s, if any, may be the same or different, and plural $M^{p2}$'s, if any, may be the same or different.

**4.** The polymerizable monomer-containing liquid crystal composition according to any one of claims 1 to 3, further

comprising at least one compound selected from the group of compounds represented by the following general formula (5):

[Chem. 10]

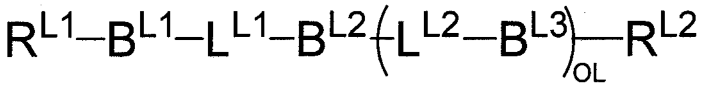

(5)

in the above general formula (3), $R^{L1}$ and $R^{L2}$ each independently represent an alkyl group having 1 to 8 carbon atoms, and one or non-adjacent two or more ($-CH_2-$)'s in the alkyl group may be each independently substituted with -CH=CH-, -C≡C-, -O-, -CO-, -COO- or -OCO-,

OL indicates 0, 1, 2 or 3,

$B^{L1}$, $B^{L2}$ and $B^{L3}$ each independently represent the group selected from the following (a) and (b):

(a) a 1,4-cyclohexylene group (one $-CH_2-$ or non-adjacent 2 or more ($-CH_2-$)'s existing in this group may be substituted with -O-),

(b) a 1,4-phenylene group (one -CH= or non-adjacent two or more (-CH=)'s existing in this group may be substituted with -N=),

the hydrogen atom contained in the group represented by the above (a) and the above (b) may be each independently substituted with a cyano group, a chlorine atom or a fluorine atom,

$L^{L1}$ and $L^{L2}$ each independently represent a single bond, $-CH_2CH_2-$, $-(CH_2)_4-$, $-OCH_2-$, $-CH_2O-$, -COO-, -OCO-, $-OCF_2-$, $-CF_2O-$, -CH=N-N=CH-, -CH=CH-, -CF=CF- or -C≡C-,

when OL is 2 or 3 and when the formula has plural $L^{L2}$'s, they may be the same or different, and when OL is 2 or 3 and when the formula has plural $B^{L3}$'s, they may be the same or different, with the proviso that compounds represented by the general formula (1) and compounds represented by the general formula (2) are excluded.

**5.** The polymerizable monomer-containing liquid crystal composition according to any one of claims 1 to 4, further comprising at least one compound selected from the group of compounds represented by the following general formula (4):

[Chem. 11]

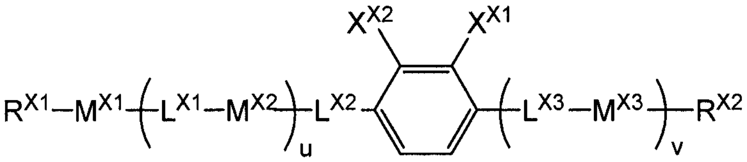

(6)

in the above general formula (4), $R^{X1}$ and $R^{X2}$ each independently represent an alkyl group having 1 to 10 carbon atoms, an alkoxy group having 1 to 10 carbon atoms, or an alkenyl group having 2 to 10 carbon atoms, and one methylene group or two or more non-adjacent methylene groups existing in these groups may be substituted with -O- or -S-, and one or more hydrogen atoms exiting in these groups may be substituted with a chlorine atom and/or a fluorine atom;

u and v each independently indicate 0, 1 or 2, and u+v is 2 or less;

$M^{X1}$, $M^{X2}$ and $M^{X3}$ each independently represent the group selected from the following (a) and (b):

(a) a trans-1,4-cyclohexylene group (one methylene group or two or more non-adjacent methylene groups existing in this group may be substituted with -O- or -S-),

(b) a 1,4-phenylene group (one -CH= or two or more non-adjacent (-CH=)'s existing in this group may be substituted with -N=),

wherein the hydrogen atom contained in the group of the above (a) or the above (b) may be substituted with the group selected from a cyano group, a fluorine atom, a trifluoromethyl group and a trifluoromethoxy group, and

plural $M^{X2}$'s and/or $M^{X3}$'s, if any, may be the same or different;

$L^{X1}$, $L^{X2}$ and $L^{X3}$ each independently represent a single bond, -COO-, -OCO-, $-CH_2CH_2-$, $-(CH_2)_4-$, $-OCH_2-$, $-CH_2O-$, $-OCF_2-$, $-CF_2O-$, -CH=CH- or -C≡C-, and plural $L^{X1}$'s and/or $L^{X3}$'s, if any, may be the same or different; and

$X^{X1}$ and $X^{X2}$ each independently represent a trifluoromethyl group, a trifluoromethoxy group or a fluorine atom, provided that any once of $X^{X1}$ and $X^{X2}$ represents a fluorine atom,

with the proviso that the compounds represented by the above general formula (1), the general formula (2) and the general formula (3) are excluded.

**6.** A liquid crystal display element using the polymerizable monomer-containing liquid crystal composition of any one of claims 1 to 5.

**7.** A liquid crystal display using the liquid crystal display element of claim 6.

[Fig. 1]

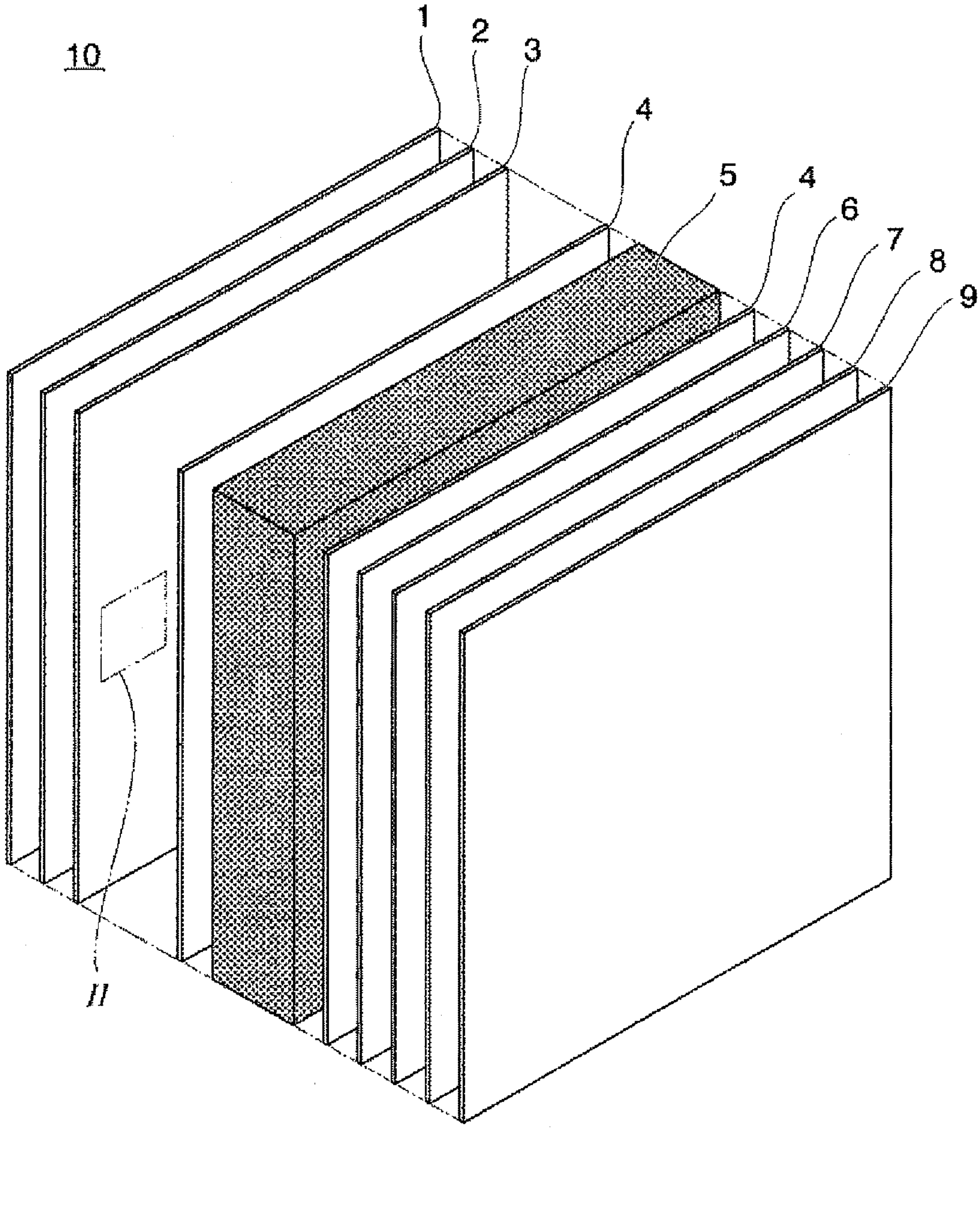

[Fig. 2]

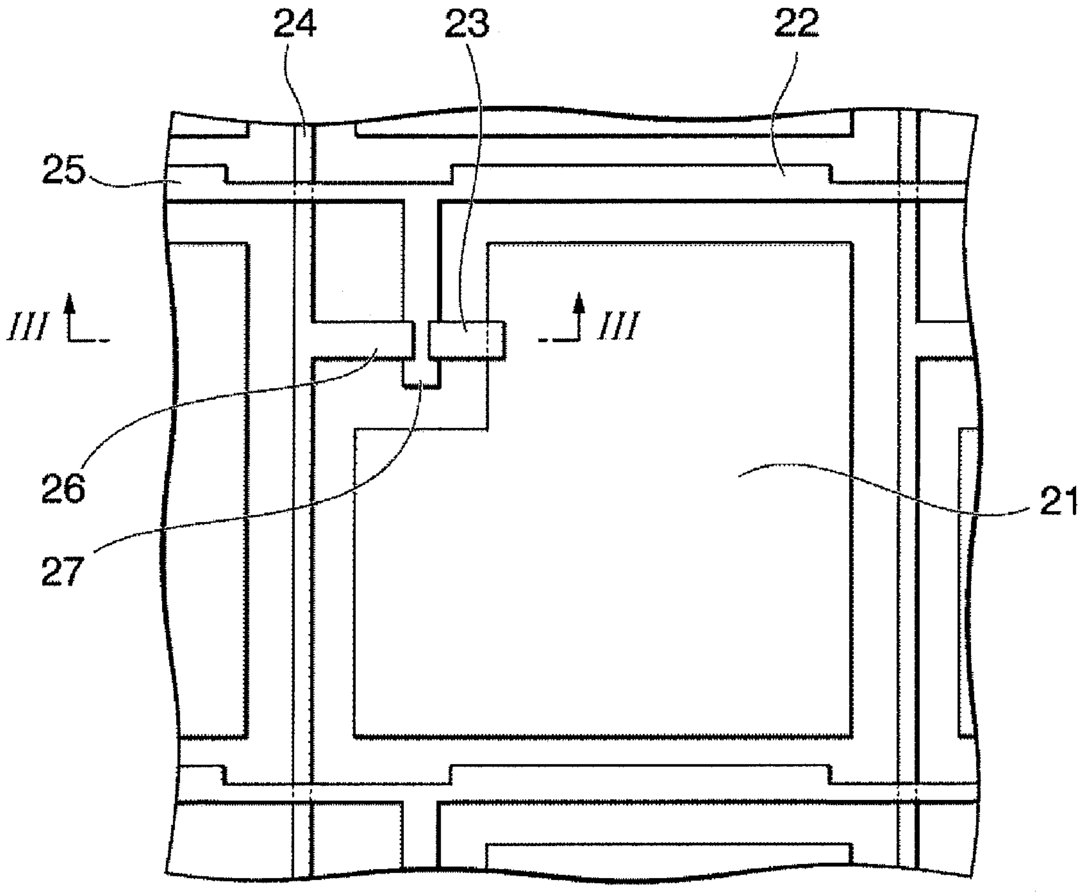

[Fig. 3]

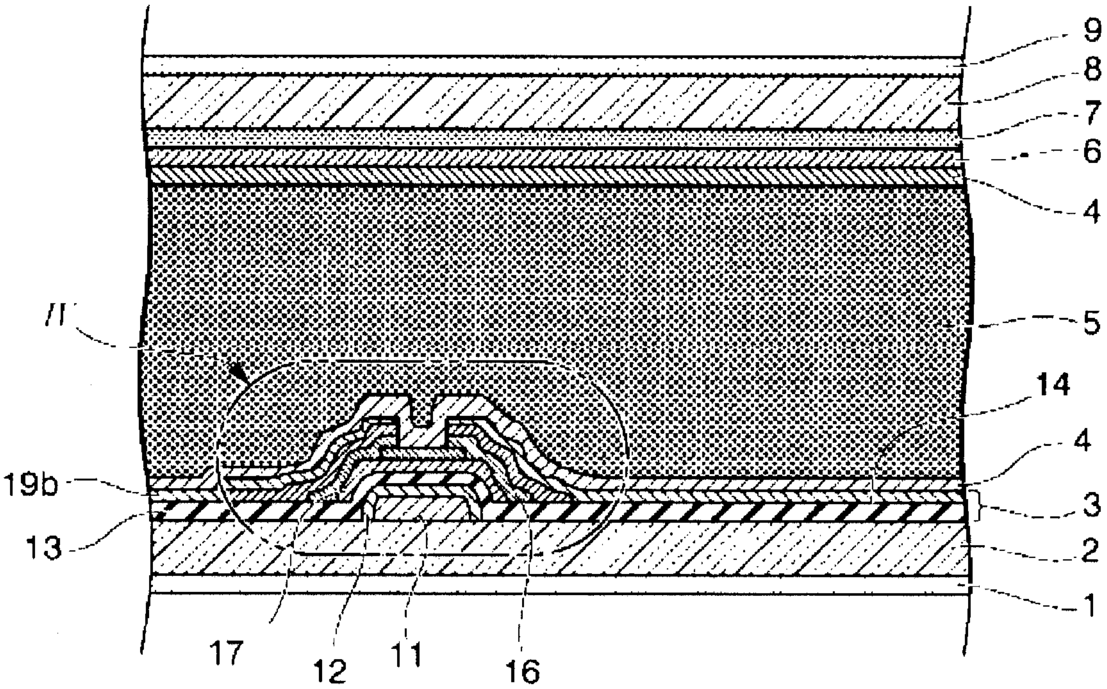
9
8
7
6
4
5
14
4
3
2
1
II
19b
13
17
12
11
16

[Fig. 4]

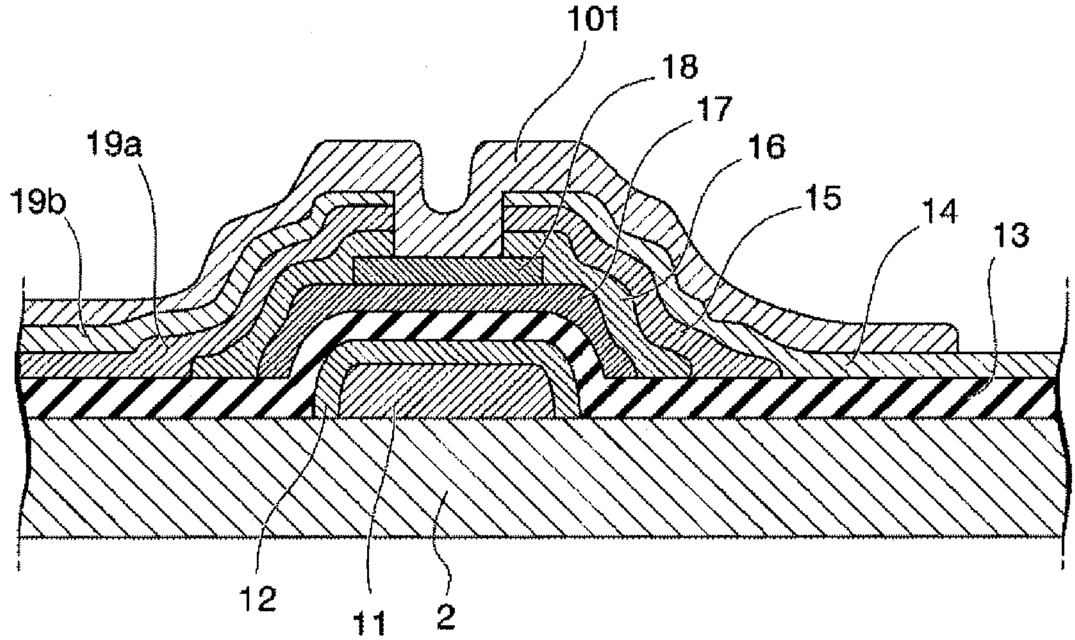
101
18
17
16
15
14
13
19a
19b
12
11
2

## INTERNATIONAL SEARCH REPORT

International application No.
PCT/JP2015/067603

A. CLASSIFICATION OF SUBJECT MATTER
*C09K19/12*(2006.01)i, *C09K19/30*(2006.01)i, *C09K19/42*(2006.01)i, *C09K19/54*(2006.01)i, *G02F1/13*(2006.01)i

According to International Patent Classification (IPC) or to both national classification and IPC

B. FIELDS SEARCHED

Minimum documentation searched (classification system followed by classification symbols)
C09K19/12, C09K19/30, C09K19/42, C09K19/54, G02F1/13

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2010/131600 A1 (Chisso Corp., Chisso Petrochemical Corp.), 18 November 2010 (18.11.2010), examples; claims & US 2012/0092608 A1 & TW 201040135 A | 1-7 |
| X | JP 2013-47327 A (JNC Corp., JNC Petrochemical Corp.), 07 March 2013 (07.03.2013), claims; examples & US 2013/0027654 A1 | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 September 2015 (02.09.15) | 15 September 2015 (15.09.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/067603

C (Continuation). DOCUMENTS CONSIDERED TO BE RELEVANT

| Category* | Citation of document, with indication, where appropriate, of the relevant passages | Relevant to claim No. |
|---|---|---|
| X | WO 2010/119779 A1 (DIC Corp.), 21 October 2010 (21.10.2010), examples; claims & JP 2011-202168 A & US 2012/0097895 A1 & EP 2420548 A1 & CN 102395651 A & KR 10-2012-0013303 A & TW 201100525 A | 1-7 |
| X | JP 2008-58374 A (Dainippon Ink and Chemicals, Inc.), 13 March 2008 (13.03.2008), claims; examples (Family: none) | 1-7 |
| X | WO 2014/065231 A1 (DIC Corp.), 01 May 2014 (01.05.2014), 0064 to 0073; examples; claims & JP 2015-91983 A & TW 201430109 A | 1-7 |
| X | JP 2014-43561 A (JNC Corp., JNC Petrochemical Corp.), 13 March 2014 (13.03.2014), claims; 0095 to 0097; examples & US 2014/0027671 A1 | 1-7 |
| P,X | WO 2015/052948 A1 (DIC Corp.), 16 April 2015 (16.04.2015), examples; claims (Family: none) | 1-7 |
| P,X | WO 2015/041006 A1 (JNC Corp., JNC Petrochemical Corp.), 26 March 2015 (26.03.2015), 0117 to 0119; examples; claims (Family: none) | 1-7 |
| P,X | JP 2014-181293 A (JNC Corp., JNC Petrochemical Corp.), 29 September 2014 (29.09.2014), claims; examples & US 2014/0284523 A1 | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003307720 A
- JP 2011515543 T
- JP 2010536894 T
- JP 6235925 A
- JP 2002357830 A
- JP 2006058755 A